**Europäisches Patentamt**

**European Patent Office**

**Office européen des brevets**

(19)

(11) **EP 1 526 677 A1**

(12) **EUROPEAN PATENT APPLICATION**
published in accordance with Art. 158(3) EPC

(43) Date of publication:
**27.04.2005 Bulletin 2005/17**

(51) Int Cl.[7]: **H04L 9/32**

(21) Application number: **03792619.3**

(22) Date of filing: **19.06.2003**

(86) International application number:
**PCT/JP2003/007794**

(87) International publication number:
**WO 2004/019553 (04.03.2004 Gazette 2004/10)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **19.06.2002 JP 2002178947**
**14.03.2003 JP 2003069375**

(71) Applicants:
• **Secured Communications, Inc.**
**Kawasaki-shi, Kanagawa 211-0005 (JP)**
• **Kyushu TLO Company, Limited**
**Fukuoka-shi, Fukuoka 812-8581 (JP)**

(72) Inventors:
• **IMAMOTO, Kenji B-313, Matsubararyo**
**Fukuoka-shi, Fukuoka 812-0061 (JP)**
• **OKAWA, Katsuyoshi 212, Midoriyama-hiruzu**
**Machida-shi, Tokyo 195-0055 (JP)**
• **HASHIMOTO, Tsutomu**
**Koganei-shi, Tokyo 184-0002 (JP)**

(74) Representative: **Grünecker, Kinkeldey,**
**Stockmair & Schwanhäusser Anwaltssozietät**
**Maximilianstrasse 58**
**80538 München (DE)**

(54) **INTER-AUTHENTICATION METHOD AND DEVICE**

(57)    An objective of the present invention is to obtain a mutual authentication method in which mutual authentication is carried out securely and conveniently. In order to achieve the above objective, in the mutual authentication process, a private key $K_0$, being an initial value, is stored in a client and a server (Pc0, Ps0). The client generates a random number $R$, calculates secret data $C$ and authentication data $A$, and transmits the data items to the server (Pc1). The server receives the authentication data $A$ and the secret data $C$ from the client, and generates a random number $Q$, calculates secret data $S$, and authentication data B and returns the data items, as well as updating the private key $K_0$ with a private key $K_1$ (Ps1). The client receives from the server the authentication data $B$ and the secret data $S$, generates the random number $R$, calculates secret data $C_2$, authentication data $A_2$, and returns the data items to the server, and updates the private key $K_0$ with the private key $K_1$(Pc2). The client and the server check whether or not validity is established ($Ps_{m+1}$, $Pc_{m+1}$) . Further in the authentication method above, there is a method for generating a onetime ID, assuming that the onetime ID is identification information usable just one time in the authentication between a plurality of devices or applications. In each of the devices or applications which carries out the authentication, a variable shared key which changes per predefined communication unit requiring the authentication is generated, a function value of one-way function is obtained in which the variable shared key is used as an argument, a onetime ID hard to tap and superior in security is generated based on the function value, and the onetime ID is utilized.

FIG.4

EP 1 526 677 A1

**Description**

BACKGROUND OF THE INVENTION

Field of the Invention

The present invention relates to an inter-authentication method and device, more specifically, the present invention relates to a mutual authentication method and apparatus in a computer system and the like, being connected to a network, a method for generating onetime ID used therein, an authentication method, an authentication system, server, client and program.

Description of the Related Art

More particularly, the present invention relates to a mutual authentication method and an apparatus for checking validity as to a relationship at least between a first authentication device and a second authentication device, a method for generating onetime ID which is suitable for being used in authentication between a plurality of devices or applications, an authentication method, authentication system, server, client and program, utilizing the onetime ID.

Authentication is required for a user to prove one's identity in a network. Here, "authentication" means that a person to be verified provides a verifier with evidence as to one's identity using some kind of protocols, and it is an essential technique in the field of electronic commerce and the like. For example, in a case where a user needs to prove one's identity to a server, the user corresponds to the person to be verified, and the server corresponds to the verifier. On the other hand, in a case where a server needs to prove one's identity to a user, the server corresponds to the person to be verified, and the user corresponds to the verifier. Since there is a possibility that the position is reversed between one-to-one devices, mutual authentication is necessary.

Mutual authentication is not limited between a user and a server, but is widely utilized as a method for verifying an identity between arbitrary computers. Recently, authentication with use of a public key cryptography is well known. Here, a person to be verified holds a public key and a private key, and one's identify can be verified by presenting a verifier some kind of protocols indicating that the person to be verified has the private key corresponding to the public key.

However, since only a single key is used for the authentication in the conventional mutual authentication method, there is a case that a third party can spoof as the user and get verified, once the key is known. In addition, the user has to pay attention to safekeeping of the key, and the key cannot be used conveniently.

For example, in an asynchronous type network such as the Internet, multiple computers establish communications concurrently and there is a case that a person to be verified executes a protocol concurrently with a plurality of verifiers. In WWW (World Wide Web), plenty of authentication are required between a server of HTTP (Hyper text Transfer Protocol) and a client as a connecting target. Here, "HTTP" represents a protocol used for giving and receiving information such as files, between a WWW server and a WWW browser (or Web browser and the like).

In the mutual authentication technique as described above, when a communication is established via a network between computers (e.g., between client/server), authentication has conventionally been performed before providing a service and the like, so as to eliminate invalid accessing. In this authentication, it is general that both sides share in advance predefined secret information that is unknowable to a third party, such as an ID, a password, a random number, or a function value using those information items as arguments. Then, each of validity is mutually checked based on the secret information.

On the other hand, in the RFC (Request For Comments) formally issued by the IETF (Internet Engineering Task Force), IPsec (Security Architecture for Internet Protocol) is defined as a security protocol for carrying out encryption and authentication for an IP packet in the Internet. In the IPsec, a protocol of automatic key exchange, IKE (Internet Key Exchange), is employed as a standard, for dynamically generating and exchanging parameters for cryptography/authentication (see the gazette of Japanese Published Unexamined Patent Application No. 2002-374238, paragraph numbers 0002 to 0009, for example).

Then, in recent years, one-time ID is introduced into this IKE method, and a key exchange and authentication method referred to as P-SIGMA is proposed, achieving an ID information protection, DoS (Denial of Service) attack prevention, remote accessing and the like, which have been problems in the IKE method using a pre-shared key.

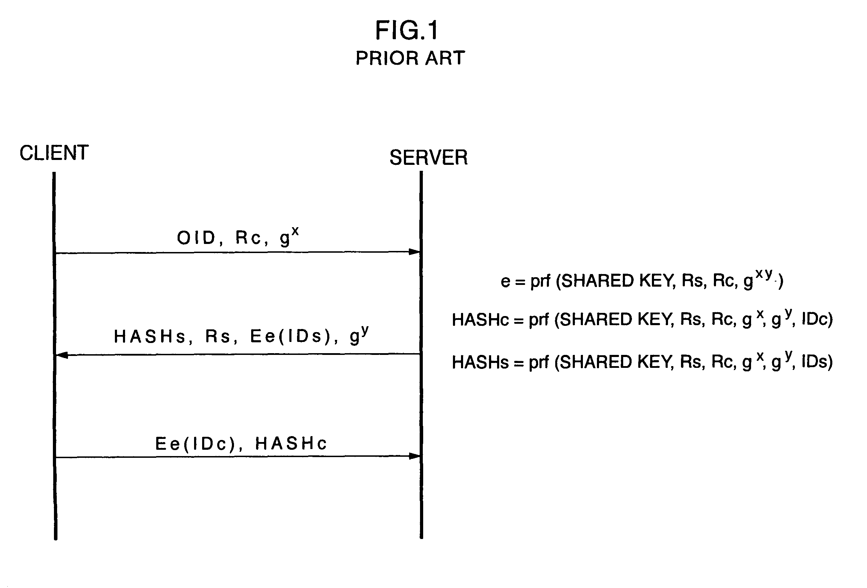

In this P-SIGMA, the key exchange and authentication are carried out according to a procedure as shown in Fig. 1.

At first, a client transmits to a server, an SA (Security Association) proposal, random number Rc, DH (Diffie-Hellman) public value $g^x$, and OID (Onetime ID). It is to be noted that in the SA proposal, there are included proposals regarding cryptographic algorithm, parameters used for authentication method and key exchange, and the like.

Subsequently, the server identifies a client based on the received OID. When the client cannot be identified, communication is rejected. When the client can be identified, the accepted SA, random number Rs, DH public value $g^y$, HASHs, and IDs (server ID) encrypted with the session key $e$ are transmitted to the client. The session key $e$ is a function value of a keyed hash function in which a pre-shared key, random number Rs, random number Rc and DH common key $g^{xy}$ are used as arguments, and the HASHs is a function value of a pseudo-random number function in which a pre-shared key, random number Rs, random number Rc, DH public value $g^x$, $g^y$ and IDs are used as arguments.

Subsequently, the client verifies the received HASHs and checks the validity of the server based on this HASHs. If HASHs is correct, HASHc and IDc (client ID) encrypted with the session key $e$ are transmitted to the server.

Here, the HASHc is a function value of the pseudo-random number function in which a pre-shared key, random number Rs, random number Rc, DH public value $g^x$, $g^y$ and IDc are used as arguments.

Subsequently, the server verifies the received HASHc and checks the validity the client based on this HASHc. If the HASHc is correct, this protocol is completed.

In this P-SIGMA, OID (onetime ID) is defined as follows.

$$OID1 = prf(K, 1)$$

$$OID2 = prf(K, 2)$$

$$...$$

$$OIDn \; prf \, (K, n) \qquad\qquad\qquad \text{(Equation 1)}$$

In these definitional equations, "OIDn" represents a onetime ID which is used in establishing n-th SA, "prf" represents a pseudo-random number function, "$K$" represents a pre-shared key or a value generated from the pre-shared key.

According to the P-SIGMA as described above, with the OID thus introduced, following effects are produced: A transmitter and a receiver are made unidentifiable to a third party, as well as it is possible to recognize the OID as identification information, if the transmitter and the receiver are valid. Further, it is impossible for the third party to predict a next OID, since the OID is changed every time communication is made between the client and the server, i. e., every time when SA is generated and updated.

However, in the aforementioned P-SIGMA, once the pre-shared key is known to anyone, all OIDs will be predicted. Consequently, there has been a problem that a security for future OIDs (in other words, PFS: Perfect Forward Security) cannot be assured.

As an actual example, a key exchange/authentication method referred to as P-SIGMA has been described. In general, in an authentication method for carrying out authentication between plural devices or between applications by use of onetime ID, all onetime IDs are generated based on specific private information. Therefore, there is also a similar problem as described above.

SUMMARY OF THE INVENTION

The present invention has been made in consideration of various kinds of malfunctioning facts in the conventional art, and the first objective is to obtain a mutual authentication method and apparatus in which it is possible to carry out a mutual authentication securely and conveniently.

A second objective of the present invention is to provide a method for generating onetime ID that is hard to tap and superior in security, an authentication method, an authentication system, server, client and program, utilizing the onetime ID.

The present invention relates to a mutual authentication method which authenticates a mutual relationship between a first authentication device and a second authentication device being connected via a communication line, comprising a step for storing, as history data commonly in each of the first authentication device and the second authentication device, an update result obtained by updating stored data for specifying the first authentication device and stored data for specifying the second authentication device, by use of the stored data obtained from previous authentication per authentication carried out mutually in advance between the first authentication device and the second authentication device. The first authentication device includes a first transmitting step which newly generates stored data by use of the history data being stored, encrypts the thus generated new stored data by use of the history data, and transmits the encryption data to the second authentication device, and a first updating step which updates the history data by the stored data from the second authentication device and the new stored data thus transmitted, the second authentication device includes a second transmitting step which newly generates stored data by use of the stored data from the first authentication device and the history data being stored, encrypts the thus generated new stored data by use of the history data, and transmits the encryption data to the first authentication device, and a second updating step which updates the history data by use of the stored data from the first authentication device and new stored data thus transmitted. In at least one of the first authentication device and the second authentication device, when validity of the stored data is established based on the history data, it is verified that the mutual relationship between the first authentication device and the second authentication device is valid.

The present invention further implements a mutual authentication device so as to carry out the above mutual authentication method. This mutual authentication device comprises a first authentication device and a second authentication device being connected via a communication line, which authenticates a mutual relationship between the first authentication device and the second authentication device, including, a first memory which is provided in the first authentication device and stores stored data for specifying the first authentication device, a second memory which is provided in the second authentication device and stores stored data for specifying the second authentication device, authentication data storing means which store the stored data obtained from previous authentication per authentication carried out mutually in advance between the first authentication device and the second authentication device, history data storing means which store, as history data, an update result updated by use of the authentication data, commonly in each of the first authentication device and the second authentication device, stored data generating means which are provided in an authentication device on a data-for-authentication transmitting side out of the first authentication device and the second authentication device, and generate new stored data by use of the history data, first transmitting means which encrypt the thus generated new stored data by use of the history data and transmit the encryption data to the authentication device on a data-for-authentication receiving side, stored data generating means which are provided in the authentication device on the data-for-authentication receiving side, and generate new stored data by use of the stored data from the authentication device on the data-for-authentication transmitting side and the history data being stored, second transmitting means which encrypt the new stored data thus generated by use of the history data, and return the encryption data to the authentication device on the data-for-authentication transmitting side, first updating means which are provided in the authentication device on the data-for-authentication transmitting side and update the history data by the stored data returned from the authentication device on the data-for-authentication receiving side and the new stored data thus transmitted, and second updating means which are provided in the authentication device on the data-for-authentication receiving side and update the history data by the stored data from the authentication device on the data-for-authentication transmitting side and the new stored data thus returned, and further comprising verifying means which verify that a mutual relationship between the first authentication device and the second authentication device is valid when validity of the stored data is established based on the history data in at least one of the first authentication device and the second authentication device.

The mutual authentication device further comprises computing means which compute data-for-authentication for encrypting the generated new stored data by use of the history data. It is further possible that the mutual authentication device comprises random number generating means which generate data for encryption when the data for authentication is generated by the computing means.

In addition, in the present invention, stored data for specifying the first authentication device and stored data for specifying the second authentication device are stored as history data, commonly in each of the authentication device and the second authentication device. This history data corresponds to the update result, which has been obtained by updating by use of the stored data by the previous authentication, per authentication carried out in advance mutually between the first authentication device and the second authentication device. The first authentication device generates new stored data by use of the stored history data, encrypts the new stored data by use of the stored history data and transmits the encryption data to the second authentication device. The second authentication device receives the transmitted data, and then, the second authentication device generates new stored data by use of the stored data from the first authentication device and the stored history data, encrypts the new stored data by use of the stored history data and transmits the encryption data to the first authentication device. At this timing, the first authentication device updates the history data by the stored data from the second authentication device and new stored data thus transmitted. Further, the second authentication device updates the history data by use of the stored data from the first authentication device and new stored data thus transmitted. After this transmitting step, when validity of the stored data is established based on the history data in at least one of the first authentication device and the second authentication device, it is verified that a mutual relationship between the first authentication device and the second authentication device is valid. In other words, one of the first authentication device and the second authentication device is capable of receiving data including the history from the other authentication device, and comparing the received data with the stored history data. Since data based on the history data, which is new and different from the stored history data is transmitted, there is no giving and receiving of identical data. Therefore, it is also possible to improve the concealment.

More specifically, when the history data is assumed as history data $K$, the stored data for specifying the first authentication device, which stores the history data as history data $K$, corresponds to secret data $C$ and authentication data $R$, and the stored data for specifying the second authentication device, which also stores the history data as history data *K*, corresponds to secret data *S* and authentication data *Q*.

The first transmitting step newly generates the secret data *C* by use of the secret data *S* and the authentication data *R* of the history data *K* being stored, and newly generates the authentication data *R* of the history data *K* being stored, encrypts the generated new authentication data *R* by use of the history data *K* to obtain authentication data *A*, and transmits the authentication data *A* and the new secret data *C* to the second authentication device; the first updating step receives data from the second authentication device, and updates the history data *K* by the new secret data *C* thus transmitted, the secret data *S* newly generated thus received, the authentication data *Q* newly generated thus received and the new authentication data *R* thus transmitted; the second transmitting step receives data from the first authentication device, newly generates secret data *S* by use of the new secret data *C* thus received and the authentication data *Q* of the history data *K* being stored, and newly generates the authentication data *Q* of the history data *K* being stored, encrypts the generated new authentication data *Q* by use of the history data *K* being stored, and obtains the authentication data B, transmits to the first authentication device the authentication data B and the new secret data *S*; and the second updating step updates the history data *K*, by the new secret data *C* thus received, newly generated secret data *S*, newly generated authentication data *Q*, and the new authentication data *R* thus received, wherein, in at least one of the first authentication device and the second authentication device, when validity of the stored data is established based on the history data *K*, it is verified that a mutual relationship between the first authentication device and the second authentication device is valid.

The storing step stores as the history data, an update result obtained by authentication in the first transmitting step, the first updating step, the second transmitting step and the second updating step.

At least one of the authentication data *R* and the authentication data *Q* is at least one of the followings: a random number generated by random number generating means, data volume, and time-related data.

In the first transmitting step of the first authentication device, a value of a computation result from a function predefined by the secret data *S* and the authentication data *R* is generated as the secret data *C*, and in the second transmitting step of the second authentication device, a value of a computation result from a function predefined by the secret data *C* and the authentication data *Q* is generated as the secret data *S*.

In the first transmitting step of the first authentication device, a value of a computation result from a function predefined by the new authentication data *R* thus generated and the history data *K* is obtained as the authentication data *A*, and in the second transmitting step of the second authentication device, a value of a computation result from a function predefined by the new authentication data *Q* thus generated and the history data *K* is obtained as the authentication data B.

A verifying step of the first authentication device verifies that the mutual relationship is valid when a value of the computation result of the predefined function by the stored authentication data *Q* out of the history data *K*, and the secret data *C* generated before previous transmission matches the secret data *S* thus received.

A verifying step of the second authentication device verifies that the mutual relationship is valid when a computation result of a predefined function by the stored secret data *S* out of the history data *K*, and the authentication data *R* matches the secret data *C* thus received.

The storing step stores, as the history data *K*, the data obtained as a result of plural executions of the first transmitting step, the second transmitting step, the first updating step and the second updating step.

As apparent from the above description, according to the present invention, when mutual authentication is carried out between the first authentication device and the second authentication device, history data is stored commonly in each of the first authentication device and the second authentication device, and simultaneously the history data is updated, the mutual authentication can be carried out securely and conveniently. For example, the authentication can be securely executed without leaking a key of the client computer from the information given and received between the client computer and the server computer.

The present invention further provides onetime ID generating method which is used in the above mutual authentication method and device. The onetime ID generating method is a method which generates a onetime ID, assuming, as the onetime ID, identification information usable for just one time in authentication between a plurality of devices or applications, wherein in each of the devices or the applications which carry out the authentication, a variable shared key is generated, which changes per predefined communication unit requiring the authentication, and simultaneously a function value of one-way function is obtained in which the variable shared key is used as an argument, and the onetime ID is generated based on the function value.

Here, "one-way function" indicates a function which is easy to obtain a result (a function value) from an argument, but difficult to obtain the argument from the result. This one-way function includes, for example, a hash function, a pseudo-random number function.

As a "predefined communication unit", it is possible for example to set a series of communications carried out between the client and the server from the time when SA is established to the time when the SA becomes invalid in IPsec. It is further possible to set as a predefined communication unit one time data sending and receiving carried out between the devices or applications.

"Variable shared key" may be any key, as far as it changes per predefined communication unit, it is shared between the devices or applications which perform authentication, and it is private information that a third party cannot know.

"Authentication" indicates that one device checks validity of the other device, when one device (or one application) accesses the other device (or the other application), and "identification information" indicates information (ID) which is transmitted from at least one device to the other device, and is used for the other device to identify the one device.

It is to be noted that the above authentication includes one-way authentication in which one device authenticates the other device, and mutual authentication in which both devices mutually carry out the authentication. For example, as a method for using onetime ID in the above authentication, there is a method in which the onetime ID is generated in the both devices, and one device transmits the onetime ID to the other device, and the other device identifies or authenticates the one device by comparing and collating the onetime ID which the other device receives from the one device with the onetime ID generated by the other device itself.

The present invention relates to a onetime ID generating method in which a onetime ID is generated, assuming, as the onetime ID, identification information usable just one time in authentication between a plurality of devices or applications, and in each of the devices or the applications which carry out the authentication, a variable shared key is generated which changes per predefined communication unit requiring the authentication, and simultaneously a function value of one-way function is obtained in which the variable shared key and information regarding a communication sequence or communication number of times are used as arguments, and the onetime ID is generated based on the function value.

The present invention relates to a onetime ID generating method in which a onetime ID is generated, assuming, as the onetime ID, identification information usable just one time in authentication between a plurality of devices or applications, wherein in each of the devices or the applications, a random number is generated within a predefined communication unit requiring the authentication, and simultaneously a function value of one-way function is obtained in which the random number and a predefined shared key are used as arguments, and the onetime ID is generated based on the function value.

The present invention relates to a onetime ID generating method in which a onetime ID is generated in both one device and another device, assuming, as the onetime ID, identification information usable just one time in authentication between one device and the other device, and simultaneously the one device transmits the onetime ID to the other device for the other device to compare and collate the onetime ID which the other device received from the one device with the onetime ID generated by the other device, so that the one device identifies or authenticates the other device, wherein the one device and the other device generate a variable shared key which changes per predefined communication unit requiring the authentication, and simultaneously, a function value of one-way function is obtained in which the variable shared key is used as an argument and the onetime ID is generated based on the function value.

The present invention further relates to a onetime ID generating method in which a onetime ID is generated in both one device and another device, assuming, as the onetime ID, identification information usable just one time in authentication between one device and the other device, and simultaneously the one device transmits the onetime ID to the other device for the other device to compare and collate the onetime ID which the other device received from the one device with the onetime ID generated by the other device, so that the one device identifies or authenticates the other device, wherein the one device and the other device generate a variable shared key which changes per predefined communication unit requiring the authentication, and simultaneously, a function value of one-way function is obtained in which the variable shared key and a communication sequence or a communication number of times are used as arguments, and the onetime ID is generated based on the function value.

The present invention further relates to a onetime ID generating method in which a onetime ID is generated in both one device and another device, assuming, as the onetime ID, identification information usable just one time in authentication between one device and the other device, and simultaneously the one device transmits the onetime ID to the other device for the other device to compare and collate the onetime ID which the other device received from the one device with the onetime ID generated by the other device, so that the one device identifies or authenticates the other device, wherein, the one device and the other device generate a random number within a predefined communication unit requiring the authentication, and simultaneously a function value of one-way function is obtained in which the random number and a predefined shared key are used as arguments, and the onetime ID is generated based on the function value.

The present invention relates to a method which generates a variable shared key changing per communication unit, obtains a function value of a one-way function in which the variable shared key is used as an argument, generates a onetime ID from the function value, and carries out a mutual authentication by use of the onetime ID ($SIGNAL_n$) between the first device and the second device being communicating with each other, comprising: a step in which the first device generates the onetime ID by use of the variable shared key, which is previously shared between the first and the second devices, and transmits to the second device the onetime ID thus generated, a function value of the one-way function Fc in which at least the ID predefined in the first device is used as an argument, and one of Diffie-Hellman public values previously stored in the first device; a step in which the second device obtains by computation the onetime ID and a function value of the one-way function Fc, and determines validity of the first device by collating a computation result with the onetime ID received from the first device and the function value of the one-way function Fc; a step in which the second device transmits to the first device, when the second device determines that the first device is valid, a function value of the one-way function Fs in which at least the ID predefined in the second device is used as an argument, and another of the Diffie-Hellman public values previously stored in the second device; and a step in which the first device obtains by computation a function value of the one-way function Fs, and determines the validity of the second device by collating a result of the computation and the function value of the one-way function Fs received from the second device.

The present invention further features that in the above authentication method, as the one-way function Fc, a pseudo-random number function is utilized in which a predefined shared key, one of the above Diffie-Hellman public values, ID predefined in the first device, and the above onetime ID are used as arguments, and simultaneously, as the one-way function Fs, a pseudo-random number function is utilized in which the predefined shared key, one of the Diffie-Hellman public values, the other of the Diffie-Hellman public values, the ID predefined in the second device, and the onetime ID are used as arguments.

The present invention relates to an authentication method which generates a variable shared key, obtains a function value of one-way function in which the variable shared key and information regarding a communication sequence are used as arguments, generates onetime ID from the function value, and carries out authentication between a first device and a second device by use of the onetime ID, comprising: a step in which the first device generates, as a first onetime ID ($SIGNAL_{n,j}$), a function value of one-way function in which a first variable shared key previously shared between the first device and the second device, and information regarding the communication sequence of the first device are used as arguments, and simultaneously encrypts, by use of the first variable shared key, ID predefined in the first device, ID predefined in the second device, one of Diffie-Hellman public values previously stored in the first device and the first onetime ID, and transmits the thus encrypted data and the first onetime ID to the second device; a step in which the second device obtains by computation the first onetime ID and identifies the first device by collating a result of the computation and the first onetime ID received from the first device; a step in which the second device decodes the encryption data by use of the first variable shared key when the first device is identified, and determines validity of the first device based on the ID predefined in the first device, the ID predefined in the second device, and the first onetime ID, which are included in thus decoded data; a step in which the second device generates, as a second onetime ID ($SIGNAL'_{n,1}$), a function value of one-way function in which the first variable shared key and information regarding a communication sequence of the second device are used as arguments when it is determined that the first device is valid, and simultaneously, generates, as a second variable shared key, Diffie-Hellman common key from one of the Diffie-Hellman public values received from the first device and the other of the Diffie-Hellman public values previously stored in the second device, and transmits to the first device, a function value of one-way function $h$ in which the second variable shared key, the ID predefined in the first device, the ID predefined in the second device and the second onetime ID are used as arguments, the other of Diffie-Hellman public values, and the second onetime ID; a step in which the first device obtains by computation the second onetime ID, and the first device identifies the second device by collating a result of the computation and the second onetime ID received from the second device; and a step in which the first device generates as the second variable shared key when the first device has identified the second device, a Diffie-Hellman common key from the other of the Diffie-Hellman public values received from the second device and the one of the Diffie-Hellman public values previously stored in the first device and simultaneously, obtains by computation a function value of the one-way function $h$ by use of the second variable shared key, and determines validity of the second device by collating a result of the computation and the function value of the one-way function $h$ received from the second device.

The present invention features that in the authentication method, as one-way function for generating the second onetime ID, a one-way function being different from the one-way function for generating the first onetime ID is used.

The present invention relates to an authentication method which generates a predefined variable shared key between devices or applications, generates a random number within a predefined communication unit, and obtains a function value of one-way function in which the random number and the shared key are used as arguments, generates a onetime ID from the function value, and carries out authentication (mutual authentication) between first and second devices, comprising: a step in which the first device generates a first random number and simultaneously obtains, as a first onetime ID ($SIGNAL_{C1}$), a function value of one-way function in which the first shared key previously shared between the first device and the second device is used as an argument, and transmits the first onetime ID and the first random number to the second device; a step in which the second device generates a second random number and simultaneously obtains, as a second onetime ID ($SIGNAL_{S1}$), a function value of one-way function in which the first random number and the first shared key are used as arguments, and transmits to the first device the second onetime ID and the second random number; a step in which the first device obtains by computation the second onetime ID based on the first random number and the first shared key, and determines validity of the second device by comparing a result of the computation with the second onetime ID received from the second device; a step in which the first device generates a second shared key based on the first random number and the second random number, and simultaneously obtains, as the third onetime ID ($SIGNAL_{C2}$), a function value of one-way function in which the second shared key, the first random number and the second random number are used as arguments, and transmits the third onetime ID to the second device; and a step in which the second device generates the second shared key based on the first random number and the second random number, and simultaneously, obtains by computation the third onetime ID based on the second shared key, the first random number and the second random number, and determines validity of the first device by comparing a result of the computation with the third onetime ID received from the first device.

The present invention relates to an authentication method which generates a predefined variable shared key between devices and applications, generates a random number within a predefined communication unit, obtains a function value of one-way function in which the random number and the shared key are used as arguments, generates a onetime ID from the function value, and carries out authentication (mutual authentication) between the first device and the second device, comprising: a step in which the first device generates a first random number and simultaneously obtains, as a first onetime ID ($SIGNAL_{C1}$), a function value of one-way function in which a shared key previously shared between the first device and the second device is used as an argument, and transmits to the second device the first onetime ID and the first random number; a step in which the second device generates a second random number and simultaneously obtains, as a second onetime ID ($SIGNAL_{S1}$), a function value of one-way function in which the first random number and the shared key are used as arguments, and transmits to the first device the second onetime ID and the second random number; a step in which the first device obtains by computation the second onetime ID based on the first random number and the shared key, and determines validity of the second device by comparing a result of the computation and the second onetime ID received from the second device; a step in which the first device generates, as a third onetime ID ($SIGNAL_{C2}$), a function value of one-way function in which the first random number, the second random number, and the shared key are used as arguments, and transmits the third onetime ID to the second device; and a step in which the second device generates by computation the third onetime ID based on the first random number, the second random number and the shared key, and determines validity of the first device by comparing a result of the computation with the third onetime ID received from the first device.

The present invention further features that in the above authentication method, the first random number and the second random number are transmitted in a state as being encrypted by a shared key previously shared between the first device and the second device.

The present invention further features that in the above authentication, and in the step where the second device transmits to the first device the second onetime ID and the second random number, the second device has, as an initial random number, a random number previously shared between the second device and the first device, and carries out a predefined computation in which the initial random number and the first random number are used as arguments, and transmits a result of the computation to the first device, and the first device uses the result of the computation received from the second device as a material for determining validity of the second device, together with the second onetime ID.

The present invention further features that in the above authentication, and in the step where the first device transmits the third onetime ID to the second device, the first device carries out a predefined computation in which the first random number and the second random number are used as arguments, and transmits a result of the computation to the second device, and the second device uses the result of the computation received from the first device as a material for determining validity of the first device, together with the third onetime ID.

The present invention relates to an authentication method which generates a predefined variable shared key between devices and applications, generates a random number within a predefined communication unit, and a function value of one-way function in which the random number and the shared key are used as arguments, generates a onetime ID from the function value, and carries out authentication between the first device and the second device by use of the onetime ID, comprising: a step in which the first device generates a first random number, simultaneously obtains, as a first onetime ID ($SIGNAL_{Ci}$), a function value of one-way function in which a shared key previously shared between the first device and the second device, the first stored random number and the second stored random number are used as arguments, and transmits to the second device, first encryption data which is obtained by encrypting with the shared key, the ID predefined in the first device, the ID predefined in the second device, the first random number, together with the first onetime ID; a step in which the second device obtains by computation the first onetime ID, and the first device is identified by collating a result of the computation and the first onetime ID received from the first device; a step in which the second device decodes the first encryption data by use of the shared key when the second device has identified the first device, and validity of the first device is determined, based on the ID predefined in the first device and the ID predefined in the second device, which are included in the thus decoded data; a step in which the second device generates a second random number when the first device is determined to be valid, and simultaneously obtains,

as a second onetime ID ($SIGNAL_{Si}$), a function value of one-way function in which the first random number, the second stored random number and the shared key are used as arguments, and transmits to the first device the second encryption data, which is obtained by encrypting with the shared key, the ID predefined in the first device, the ID predefined in the second device, and the second random number, together with the second onetime ID; a step in which the second device replaces the first stored random number and the second stored random number, respectively, with the first random number and the second random number; a step in which the first device obtains by computation the second onetime ID, and the second device is identified by collating a result of the computation and the second onetime ID received from the second device; a step in which the first device decodes the second encryption data by use of the shared key when the first device has identified the second device, validity of the second device is determined based on the ID predefined in the second device and the ID predefined in the first device, which are included in the thus decoded data; and, a step in which the first device replaces the first stored random number and the second stored random number, respectively, with the first random number and the second random number.

The present invention features that in the authentication, after the first stored random number and the second stored random number are respectively replaced with the first random number and the second random number, the shared key is changed by generating the shared key based on the first stored random number and the second stored random number.

The present invention relates to a server which generates a variable shared key changing per communication unit and obtains a function value of one-way function in which the variable shared key is used as an argument, generates a onetime ID from the function value, and carries out authentication between the server and the client by use of the onetime ID ($SIGNAL_n$), comprising: receiving means which receive from the client, a function value of the one-way function Fc in which at least a client ID predefined in the client is used as an argument, one of Diffie-Hellman public values previously stored in the client, and the onetime ID; determining means which obtain by computation a function value Fc of the one-way function and the onetime ID, and determine validity of the client by comparing a result of the computation with the onetime ID received from the client and the function value of the one-way function Fc; and transmitting means which transmit to the client, when the determining means determine that the client is valid, a function value of one-way function Fs in which the server ID predefined in the server is used as an argument, and another of the Diffie-Hellman public values predefined in the server.

The present invention relates to a client which generates a variable shared key which changes per communication unit, obtains a function value of one-way function in which the variable shared key is used as an argument, generates a onetime ID from the function value, and carried out authentication between the client and the server by use of the onetime ID ($SIGNAL_n$), comprising: transmitting means which generate the onetime ID by use of the variable shared key previously shared between the client and the server, and simultaneously obtain a function value of one-way function Fc in which at least a client ID predefined in the client is used as an argument, and transmit to the server the onetime ID, the function value of the one-way function Fc, and one of Diffie-Hellman public values previously stored in the client; receiving means which receive from the server a function value of one-way function Fs in which at least the server ID predefined in the server is used as an argument and another of Diffie-Hellman public values previously stored in the server; and determining means which obtain by computation a function value of the one-way function Fs, and determine validity of the server by comparing a result of the computation with the function value of the one-way function Fs received from the server.

The present invention features that the authentication system comprises the server and the client as described above.

The present invention relates to a program to be executed by a server which generates a variable shared key changing per communication unit, obtains a function value of one-way function in which the variable shared key is used as an argument, generates onetime ID from the function value, and carries out authentication between the server and the client based on the onetime ID ($SIGNAL_n$), comprising: a process which receives from a client a function value of one-way function Fc in which at least a client ID predefined in the client is used as an argument, one of Diffie-Hellman public values previously stored in the client, and the onetime ID; a process which obtains by computation a function value of the one-way function Fc and the onetime ID, and determines validity of the client by comparing a result of the computation with the onetime ID received from the client and the function value of the one-way function Fc; and a process which transmits to the client, when the client is determined to be valid, a function value of the one-time function Fs in which at least the server ID predefined in the server is used as an argument and another of the Diffie-Hellman public values previously stored in the server.

The present invention relates to a program to be executed by client which generates a variable shared key changing per communication unit, obtains a function value of one-way function in which the variable shared key is used as an argument, generates a onetime ID from the function value, and allows the client to carry out authentication between the client the server based on the onetime ID ($SIGNAL_n$), comprising: a process which generates the onetime ID by use of the variable shared key previously shared between the client and the server, obtains by computation a function value of one-way function Fc in which at least a client ID predefined in the client is used as an argument, and transmits to the server the onetime ID, the function value of the one-way function Fc, and one of Diffie-Hellman public values previously stored in the client; a process which receives a function value of one-way function Fs in which at least the server ID predefined in the server is used as an argument and the other of the Diffie-Hellman public values previously stored in the server; and a process which obtains by computation a function value of the one-way function Fs, and determines validity of the server, by comparing a result of the computation with the function value of the one-way function Fs received from the server.

The present invention relates to a server which generates a variable shared key, obtains a function value of one-way function in which the variable shared key and information regarding a communication sequence are used as arguments, generates a onetime ID from the function value, and carries out authentication by use of the onetime ID between the server and the client, comprising: receiving means which assume, as a first onetime ID ($SIGNAL_{nj}$), a function value of one-way function in which the first variable shared key previously shared between the client and the server and the information regarding the communication sequence of the client are used as arguments, and receive from the client encryption data which is obtained by encrypting with the first variable shared key, the first onetime ID, the client ID predefined in the client, the server ID predefined in the server, and one of Diffie-Hellman public values previously stored in the client, together with the first onetime ID; determining means which obtain by computation the first onetime ID, identify the client by collating a result of the computation with the onetime ID received from the client, decodes the encryption data by use of the first variable shared key when the client has been identified, and determine validity of the client based on the client ID, the server ID and the first onetime ID, which are included in the thus decoded data; and transmitting means which generate, as a second onetime ID ($SIGNAL'_{n,1}$), a function value of one-way function in which the first variable shared key and information regarding a communication sequence of the server are used as arguments, and simultaneously, generate, as a second variable shared key, a Diffie-Hellman common key from the one of the Diffie-Hellman public values received from the client and the other of Diffie-Hellman public values previously stored in the server, and transmit to the client a function value of one-way function $h$ in which the second variable shared key, the client ID, the server ID and the second onetime ID are used as arguments, the other of Diffie-Hellman public values, and the second onetime ID.

The present invention relates to a client which generates a variable shared key which changes per communication unit, obtains a function value of one-way function in which the variable shared key is used as an argument, generates a onetime ID from the function value, and carries out authentication by use of the onetime ID between the client and the server, comprising: transmitting means which generate, as a first onetime ID ($SIGNAL_{n,j}$), a function value of one-way function in which the first variable shared key previously shared between the client and the server and information regarding a communication sequence of the client are used as arguments, and simultaneously by use of the first variable shared key, encrypt the client ID predefined in the client, the server ID predefined in the server, and one of Diffie-Hellman public values previously stored in the client, and the first onetime ID, and transmits to the server thus encrypted data and the first onetime ID; receiving means which assume, as the second onetime ID ($SIGNAL'_{n,1}$), a function value of the one-way function in which the first variable shared key and the information regarding the communication sequence of the server are used as arguments, assumes a Diffie-Hellman common key as the second variable shared key, and receive a function value of the one-way function $h$ in which the second onetime ID, the second variable shared key, the client ID and the server ID are used as arguments, another of the Diffie-Hellman public values previously stored in the server, and the second onetime ID; and determining means which obtain by computation the second onetime ID, identify the server by collating a result of the computation with the second onetime ID received from the server, when the server has been identified, generate the Diffie-Hellman common key, as the second variable shared key, from the other of the Diffie-Hellman public values received from the server and the one of the Diffie-Hellman public values previously stored in the client, and simultaneously, obtain by computation a function value of the one-way function $h$ by use of the second variable shared key, and determine validity of the server by collating a result of the computation and a function value of the one-way function h received from the server.

The present invention further features that the authentication system comprises the server and the client as described above.

The present invention relates to a server which generates a predefined variable shared key between devices or applications, generates a random number within a predefined communication unit, obtains a function value of one-way function value in which the random number and the shared key are used as arguments, generates a onetime ID from the function value, and carries out a mutual authentication between the server and the client by use of the onetime ID, comprising: first receiving means which assume, as the first onetime ID ($SIGNAL_{C1}$), a function value of the one-way function in which the first shared key previously shared between the server and the client is used as an argument, and receive from the client the first onetime ID and the first random number generated in the client; transmitting means which generate a second random number and simultaneously obtain as a second onetime ID ($SIGNAL_{S1}$), a function value of one-way function in which the first random number the first shared key are used as arguments, and transmit to the client the second onetime ID and the second random number; second receiving means which assume, as a third onetime ID ($SIGNAL_{C2}$), a function value of one-way function in which the first random number, the second random number and the second shared key are used as arguments, and receive the third onetime ID from the client; and determining means which generate the second shared key based on the first random number and the second random number, and simultaneously, obtain by computation the third onetime ID based on the second shared key, the first random number and the second random number, and determine validity of the client by comparing a result of the computation with the third onetime ID received from the client.

The present invention relates to a client which generates a predefined variable shared key between devices and applications, generates a random number within a predefined communication unit, obtains a function value of one-way function in which the random number and the shared key are used as arguments, generates the onetime ID from the function value and carries out a mutual authentication between the client and the server by use of the onetime ID, comprising: first transmitting means which generate a first random number, and simultaneously obtains as a first onetime ID ($SIGNAL_{C1}$), a function value of one-way function in which a first shared key previously shared between the client and the server is used as an argument, transmit to the server the first onetime ID and the first random number; receiving means which assume, as the second onetime ID ($SIGNAL_{S1}$), a function value of one-way function in which the first random number and the first shared key are used as augments, and receive from the server the second onetime ID and the second random number generated in the server; determining means which obtain by computation the second onetime ID based on the first random number and the first shared key, and determine validity of the server by comparing a result of the computation with the second onetime ID received from the server; and second transmitting means which generate the second shared key based on the first random number and the second random number, when it is determined that the server is valid by the determining means, and simultaneously obtain as a third onetime ID ($SIGNAL_{C2}$) a function value of one-way function in which the second shared key, the first random number and the second random number are used as arguments, and transmit to the server the third onetime ID.

The present invention further features that the authentication system comprises the server and the client as described above.

The present invention relates to a server which generates a predefined variable shared key between devices and applications, generates a random number within a predefined communication unit, obtains a function value of one-way function in which the random number and the shared key are used as arguments, generates a onetime ID from the function value, and carries out a mutual authentication between the server and the client by use of the onetime ID, comprising: first receiving means which assume, as the first onetime ID ($SIGNAL_{C1}$), a function value of one-way function in which a shared key previously shared between the server and the client is used as an argument, and receives from the client the first onetime ID and the first random number generated in the client; transmitting means which generate a second random number, and simultaneously obtain, as a second onetime ID ($SIGNAL_{S1}$), a function value of one-way function in which the first random number and the shared key are used as arguments, and transmit to the client the second onetime ID and the second random number; second receiving means which assume, as a third onetime ID ($SIGNAL_{C2}$), a function value of one-way function in which the shared key, the first random number and the second random number are used as arguments, and receive from the client the third onetime ID; and determining means which obtain by computation the third onetime ID based on the first random number, the second random number and the shared key, and determine validity of the client by comparing a result of the computation and the third onetime ID received from the client.

The present invention relates to a client which generates a predefined variable shared key between devices and applications, generates a random number within a predefined communication unit, obtains a function value of one-way function in which the random number and the shared key are used as arguments, generates a onetime ID from the function value, and carries out mutual authentication between the client and the server by use of the onetime ID, comprising: first transmitting means which generate a first random number, obtain as a first onetime ID ($SIGNAL_{C1}$), a function value of one-way function in which a shared key previously shared between the client and the server is used as an argument, and transmit to the server the first onetime ID and the first random number; receiving means which assume, as a second onetime ID ($SIGNAL_{S1}$) a function value of one-way function in which the first random number and the shared key are used as arguments, and receive from the server the second onetime ID and the second random number generated in the server; determining means which obtain by computation the second onetime ID based on the first random number and the shared key, and determine validity of the server by comparing a result of the computation with the second onetime ID received from the server; and second transmitting means which obtain, as a third onetime ID ($SIGNAL_{C2}$), a function value of the one-way function in which the first random number, the second random number and the shared key are used as arguments, when the server is determined to be valid by the determination means, and transmit to the server the third onetime ID.

The present invention further features that the authentication system comprises the server and the client as described above.

The present invention relates to a server which generates a predefined variable shared key between devices and applications, generates a random number within a predefined communication unit, obtains a function value of one-way function in which the random number and the shared key are used as arguments, generates a onetime ID from the function value, and carries out a mutual authentication between the server and the client by use of the onetime ID, comprising: receiving means which assume, as a first onetime ID (SIGNAL$_{Ci}$), a function value of one-way function in which the shared key previously shared between the server and the client, the first stored random number and the second stored random number are used as arguments, receive the first onetime ID from the client and simultaneously receive from the client, first encryption data which is obtained by encrypting with the shared key, the first random number generated in the client, a client ID predefined in the client and a server ID predefined in the server; determining means which obtain by computation the first onetime ID, identify the client by collating a result of the computation with the first onetime ID received from the client, decode the first encryption data by use of the shared key when the client has been identified, and determine validity of the client based on the client ID and the server ID included in thus decoded data; transmitting means which generate a second random number when the determining means determine that the client is valid, and simultaneously obtain as a second onetime ID (SIGNAL$_{Si}$) a function value of one-way function in which the first random number, the second stored random number and the shared key are used as arguments, and transmit to the client second encryption data which is obtained by encrypting with the shared key the client ID, the server ID and the second random number, together with the second onetime ID; and replacing means which replace the first stored random number and the second stored random number respectively with the first random number and the second random number.

The present invention relates to a client which generates a predefined variable shared key between devices and applications, generates a random number within a predefined communication unit, obtains a function value of one-way function in which the random number and the shared key are used as arguments, generates a onetime ID from the function value and carries out a mutual authentication between the client and the server by use of the onetime ID, comprising: transmitting means which generate a first random number, obtain, as a first onetime ID (SIGNAL$_{Ci}$), a function value of one-way function in which a shared key previously shared between the client and the server, the first stored random number, and the second stored random number are used as arguments, and transmit to the server first encryption data which is obtained by encrypting with the shared key, a client ID predefined in the client, a server ID predefined in the server and the first random number, together with the first onetime ID; receiving means which assume as a second onetime ID (SIGNAL$_{Si}$), a function value of one-way function in which the first random number, the second stored random number and the shared key are used as arguments, receive the second onetime ID from the server, and simultaneously receive from the server second encryption data which is obtained by encrypting with the shared key the second random number generated in the server, the client ID and the server ID; determining means which obtain by computation the second onetime ID, identify the server by collocating a result of the computation with the second onetime ID received from the server, decode the second encryption data by use of the shared key when the server has been identified, and determine validity of the server based on the server ID and the client ID included in thus decoded data; and replacing means which replace the first stored random number and the second stored random number respectively with the first random number and the second random number.

The present invention further features that the authentication system comprises the server and the client as described above.

The present invention features that in the authentication system, after the server and the client replace the first stored random number and the second stored random number respectively with the first random number and the second random number, variation of the shared key is made by generating the shared key based on the first stored random number and the second stored random number.

According to the present invention, it is possible to achieve an authentication method which generates a variable shared key which changes per communication unit, obtains a function value of one-way function in which the variable shared key is used as an argument, generates a onetime ID (SIGNAL$_n$) from the function value, and carries out authentication between the first device and the second device where a mutual communication is established. Since a function value of one-way function in which the variable shared key is used as an argument is obtained and a onetime ID is generated from the function value, for example, even when the variable shared key is leaked to a third party, with the variable shared key changing per communication unit, it is impossible to predict a onetime ID other than the onetime ID which is generated by use of the leaked variable shared key. In other words, it becomes possible to generate a onetime ID hard to tap and superior in security, and to achieve a future security (PFS: perfect forward secrecy) of the onetime ID.

In the present invention, a variable shared key is generated and a function value of one-way function is obtained in which the variable shared key and information regarding communication sequence or communication number of times are used as arguments, a onetime ID is generated from the function value, and authentication between the first device and the second device is carried out by use of the onetime ID. Therefore, for example, even when the variable shared key is leaked to a third party, since the variable shared key changes per a predefined communication unit as well as the information regarding communication sequence or communication number of times changes per communication, it becomes impossible in practice to predict a onetime ID beside the onetime ID generated by the leaked variable shared key. Moreover, it is also quite difficult to predict the onetime ID which is generated by use of the leaked variable shared key. In other words, it becomes possible to generate a onetime ID hard to tap and superior in security, and to achieve a future security (PFS: perfect forward secrecy) of the onetime ID.

In the present invention, a predefined variable shared key is generated between devices and applications, a random number is generated within a predefined communication unit, a function value of one-way function is obtained in which the random number and the shared key are used as arguments, a onetime ID is generated from the function value, and authentication (mutual authentication) is carried out by use of the onetime ID between the first device and the second device. Therefore, for example, even if the shared key is leaked to a third party, since the function value of the one-way function changes per predefined communication unit by the random number, it is impossible to predict onetime ID as far as the random number generated in the predefined communication unit is unknown. In other words, it becomes possible to generate a onetime ID hard to tap and superior in security, and to achieve a future security (PFS: perfect forward secrecy) of the onetime ID.

In the present invention, the authentication between devices (between a client and a server) is carried out by use of a onetime ID generated by the aforementioned various onetime ID generating methods (an attacker) to specify a sender and a receiver, whereas as far as the sender and the receiver are valid, it is possible for them to recognize the onetime ID as identification information.

Therefore, it is possible to develop resistance to DoS attack, spoofing and the like, and even under an open network environment, ID information can be protected and security in communication can be enhanced. Further, remote accessing becomes available, and convenience can be improved.

In the present invention, as one-way function Fc used for determining validity of the first device, a pseudo-random number function is utilized in which a predefined shared key, one of Diffie-Hellman public values, ID predefined in the first device and the onetime ID are used as arguments, and as one-way function Fs used for determining validity of the second device, a pseudo-random number function is utilized in which a predefined shared key, the other of Diffie-Hellman public values, ID predefined in the second device and the onetime ID are used as arguments. Therefore, it is possible to reduce number of communication times to twice, which has been required to be three times in a conventional key exchange and authentication method, and a rapid and safe authentication, and key exchange can be achieved.

In the present invention, authentication between devices (between a client and a server) is carried out by use of a onetime ID, which is generated by various onetime ID generating methods as the following: a variable shared key which changes per communication unit is generated, a function value of one-way function is obtained in which the variable shared key is used as an argument, a onetime ID is generated from the function value; a variable shared key is generated, a function value of one-way function is obtained in which the variable shared key and information regarding a communication sequence are used as arguments, a onetime ID is generated from the function value, and a predefined variable shared key is generated between devices or applications; and a random number is generated within a predefined communication unit, a function value of one-way function is obtained in which the random number and the shared key are used as arguments, and a onetime ID is generated from the function value. Therefore, there is an effect that generating a onetime ID hard to tap and superior in security is possible, and a future security (PFS: perfect forward secrecy) of the onetime ID can be achieved.

In the present invention, authentication is carried out between devices (between a client and a server) by use of the onetime ID generated by various onetime ID generating methods as the following: a variable shared key which changes per communication unit is generated, a function value of one-way function is obtained in which the variable shared key is used as an argument, and a onetime ID is generated from the function value; a variable shared key is generated, a function value of one-way function is obtained in which the variable shared key and information regarding communication sequence are used as arguments, a onetime ID is generated from the function value and a predefined variable shared key is generated between devices or applications; and a random number is generated within predefined communication unit, a function value of one-way function is obtained in which the random number and the shared key are used as arguments, and a onetime ID is generated from the function value. Therefore, it is impossible for a third party to specify a sender and a receiver, whereas as far as the sender and the receiver are valid, if it possible for them to recognize the onetime ID as identification information.

Accordingly, it is possible to develop resistance to DoS attack, spoofing and the like, and even under an open network environment, ID information can be protected and security in communication can be enhanced. Further, remote accessing becomes available, and convenience can be improved.

Objectives and advantages of the present invention will be further clarified with the following embodiments, which will be explained with reference to the attached drawings.

BRIEF DESCRIPTION OF DRAWINGS

Fig. 1 is a diagram for explaining a conventional authentication method referred to as P-SIGMA;

Fig. 2 is a block diagram showing a schematic configuration of a client computer and a server computer concerning preferred embodiments of the present invention;

Fig. 3 is a flowchart showing a conceptual process in a mutual authentication concerning the preferred embodiments of the present invention;

Fig. 4 is a conceptual illustration showing a detailed process in the mutual authentication concerning the preferred embodiments of the present invention;

Fig. 5 is a schematic configuration diagram showing one embodiment of the authentication system concerning the present invention;

Fig. 6 is a block diagram showing a schematic configuration of the server as shown in Fig. 1;

Fig. 7 is a block diagram showing a schematic configuration of the client as shown in Fig. 1;

Fig. 8 is a diagram for explaining the first embodiment of the authentication method concerning the present invention;

Fig. 9 is a diagram for explaining the second embodiment of the authentication method concerning the present invention;

Fig. 10 is a diagram for explaining the third embodiment of the authentication method concerning the present invention;

Fig. 11 is a diagram for explaining the fourth embodiment of the authentication method concerning the present invention;

Fig. 12 is a diagram for explaining the fifth embodiment of the authentication method concerning the present invention;

Fig. 13 is a diagram for explaining the sixth embodiment of the authentication method concerning the present invention;

Fig. 14 is a diagram for explaining a conventional authentication method referred to as OSPA;

Fig. 15 is a diagram for explaining the seventh embodiment of the authentication method concerning the present invention; and

Fig. 16 is a diagram for explaining a variation of the embodiment as shown in Fig. 15.

DETAILED DESCRIPTION OF THE PREFERRED EMBODIMENTS

(Example 1)

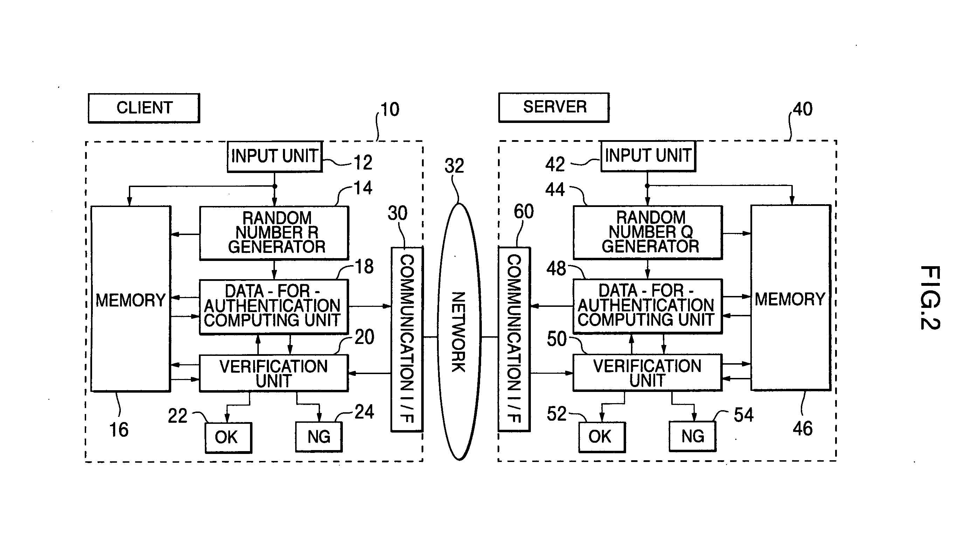

Hereinafter, one example of the preferred embodiments of the present invention will be explained in detail referring to the attached drawings. Fig. 2 is a block diagram showing a schematic configuration of a client computer and a server computer concerning the first embodiment of the present invention, and a schematic configuration of a network system to which the present invention can be applied. The first embodiment represents an application of the present invention to a case of mutual authentication between the server computer and the client in a network.

In Fig. 2, the network system is configured by one or a plurality of client computers 10 including at least CPU and one or a plurality of server computers 40 including at least CPU, which are connected to the network (for example, the Internet) 32, respectively via modems, routers, TAs (Terminal Adapters) and the like. These computers can give and receive information with each other by the mutual communication via a network 32.

It is to be noted that as shown in Fig. 2, the following explanation will be made based on one client computer 10 and one server computer 40. However, each of the client computer 10 and the server computer 40 may be more than one.

Here, it is also to be noted that when the client computer 10 corresponds to a first authentication device of the present invention, the server computer 40 corresponds to a second authentication device. On the other hand, when the server computer 40 corresponds to the first authentication device of the present invention, the client computer 10 corresponds to the second authentication device. Further, the network 32 corresponds to a communication line of the present invention.

In this the present embodiment, a case will be explained where the Internet is applied as the network. In this case, at least one computer may function as a WWW server and other computer may function as a WWW client.

More specifically, a WWW browser is installed in each client computer 10. When the WWW browser is started up, it becomes possible for each client computer to arbitrarily access the server computer 40 via the network 32. At this timing, a location for accessing (data configured by a location of the server computer 40 as an accessing destination and a location of information within the server computer 40) is designated by an URL (Uniform Resource Locator).

When the server computer 40 receives an access request from the client computer 10, the server computer transmits data at a location designated by the URL to the client computer 10 as accessing source, via the network 32. This data is generally transferred according to an HTTP.

Further, an IP (Internet Protocol) address is used for identifying the client computer 10. It is further possible to use a user ID such as inputted by the user oneself, or a predefined code, in order to identify the user who operates the client computer 10.

In each computer above, there is provided an input unit such as keyboard and a mouse for inputting an instruction at the computer, and a display unit for displaying a processing result and the like according to the computer. Since a hardware configuration of the computer is well-understood and commonly used, detailed explanation thereof will be omitted.

The client computer 10 is provided with an input unit 12 for inputting a system parameter and the like, and the input unit 12 is connected to a random number generator 14 for generating a random number $R$ in response to an input, and a memory 16. The random number generator 14 is connected to the memory 16 and a data-for-authentication computing unit 18 for obtaining data-for-authentication $A$ based on the random number $R$. The data-for-authentication computing unit 18 is connected to a communication interface (referred to as communication I/F) 30, which is connected to the network 32, so as to establish a communication with the server computer 40 via the network 32.

The communication I/F 30 is connected with a verification unit 20. This verification unit 20 is also connected to the memory 16 and the data-for-authentication computing unit 18. The verification unit 20 is further connected to an OK unit 22 and an NG unit 24. When authentication is carried out with the server computer 40, the OK unit 22 displays a determination by authentication that a mutual relationship is valid and the NG unit 24 displays a determination by authentication that the mutual relationship is invalid.

The server computer 40 is provided with an input unit 42 for inputting a system parameter and the like, and the input unit 42 is connected to a random number generator 44 for generating a random number $Q$ in response to an input, and a memory 46. The random number generator 44 is connected to the memory 46 and a data-for-authentication computing unit 48 for obtaining data-for-authentication $B$ based on the random number $R$. The data-for-authentication computing unit 48 is connected to the communication I/F 60 so as to establish a communication with the client computer 10 via the network 32.

The communication I/F 60 is connected to a verification unit 50. This verification unit 50 is also connected to the memory 46 and the data-for-authentication computing unit 48. The verification unit 50 is further connected to an OK unit 52 and an NG unit 54. When authentication is carried out with the client computer 10, the OK unit 52 displays a determination by authentication that a mutual relationship is valid and the NG unit 54 displays a determination by authentication that the mutual relationship is invalid.

[Conceptual process]

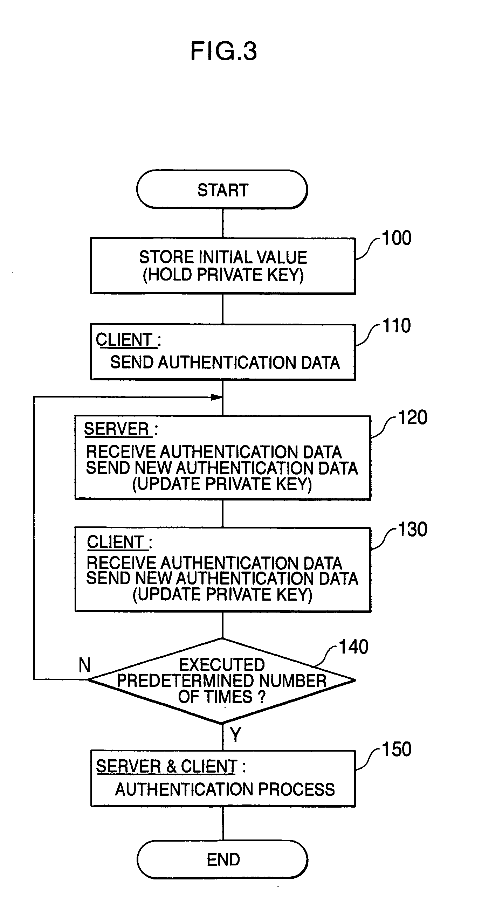

Next, a conceptual process of mutual authentication in a network system of the present embodiment will be explained. In the present embodiment, the mutual authentication between computers is carried out by giving/receiving digital data. Fig. 3 is a flowchart showing a handling process of the mutual authentication.

In step 100, the client computer 10 and the server computer 40 store an initial value (private key $K_0$) common to both of the computers according to a predefined procedure.

In the predefined procedure, an initial value for executing the mutual authentication between the client computer 10 and the server computer 40 is set. For example, in order to hold common data as an initial value, which is common to the client computer 10 and the server computer 40, an initial value determined by either one of the computers or a third-party computer is provided to both the client computer 10 and the server computer 40. The initial value is provided by electronic data transmission, such as via E-mail, or by mailing a printed matter on which the initial value is printed to both the client computer 10 and the server computer 40, and manually inputting the initial value in each of the client computer 10 and the server computer 40.

In the present embodiment, in order to keep the initial value in a state of common to both the client computer 10 and the server computer 40, a history of data giving/receiving carried out between the client computer 10 and the server computer 40 is defined as an initial value. Then, the initial value is updated every subsequent data giving/receiving carried out between the client computer 10 and the server computer 40.

In other words, it is sufficient that the above initial value is common to both the client computer 10 and the server computer 40. Therefore, though it is possible to hold a common value by providing an arbitrary value as described above, it may be more preferable to use as the initial value, a result of data giving/receiving according to an arbitrary algorithm between the client computer 10 and the server computer 40, so as to maintain a common status concerning the initial value between the both computers. In the present embodiment, for the arbitrary algorithm, data resulting from a mutual authentication described below in detail is used, which can be implemented by a procedure for holding data of both of the sending side and the receiving side, in common at both the sending side and the receiving side.

It is to be noted that a type of data (e.g., data format) stored in both the client computer 10 and the server computer 40 is not limited to an identical one. In other words, data stored in both the client computer 10 and the server computer 40 is sufficient to be identical as a final data value, and there is not a restriction that the data itself should be identical. For example, it may be possible to store the data in a different format. With the structure above, even when one data item is leaked out, the other data item can be maintained.

In step 110, the client computer 10 transmits authentication data. This authentication data is a first data which requests a mutual authentication from the client computer 10 to the server computer 40. The client computer uses a stored initial value as a private key, stores data generated in the client computer 10 as well as encrypting with the private key, and transmits the encryption data.

Next, in step 120, the server computer 40 receives the authentication data transmitted from the client computer 10. Then, the server computer 40 uses the stored initial value as a private key, and stores data generated in the server computer 40 at this timing, as well as transmitting the authentication data encrypted with the private key. In this authentication data, a part of data included in the authentication data received from the client computer 10 is to be contained.

With this configuration, it is possible to transmit the authentication data from the server computer 40 as data indicating that it is a response to a request from the client computer 10. After transmitting the authentication data, the server computer analyzes the received authentication data, and generates a new private key by use of each data item generated within the server computer 40. Further, with the new private key, a stored private key is updated.

Next, in step 130, the client computer 10 receives the authentication data transmitted from the server computer 40, and uses the stored initial data as a private key to store the data generated within the client computer 10 at this timing, and further, transmits the authentication data encrypted with the private key. In this authentication data, a part of data included in the authentication data received from the server computer 40 is to be contained.

With this configuration, it is possible to transmit the authentication data from the client computer 10 as data indicating that it is a response to data transmitted from the server computer 40. After transmitting the authentication data, the client computer analyzes the received authentication data, and generates a new private key by use of each data item generated within the client computer 10. Further, with the new private key, a stored private key is updated.

Accordingly, when the processes of step 130 are completed, the initial values (private keys) are updated in both the client computer 10 and the server computer 40, and then, a common value (private key) can be maintained.

In step 140, it is decided whether or not the processes in both the client computer 10 and the server computer 40 have been executed for a predefined number of times. As for this decision criteria number of times, at least one time is preset, and in the present embodiment, both the client computer 10 and the server computer 40 hold a common value for the number of times. It is to be noted that as for this decision criteria number of times, it is possible to hold different values in the client computer 10 and the server computer 40 respectively. In this case, a criterion for authentication is different in each of the client computer 10 and the server computer 40. However, as far as the authentication is valid, it is possible to achieve an object by only requesting a computer, which has a smaller decision criteria number of times, to carry out data giving/receiving more than once. With reference to this number of times, the update process in step 130 in the client computer 10 and the update process in step 120 in the server computer 40 are repeated until the processes are executed for the number of times thus maintained. If the decision criteria number of times is set to once, the process proceeds to step 150 without being denied in step 140.

Therefore, at timing when an affirmative judgment is made in step 140, the values (private keys) in both the client computer 10 and the server computer 40 are updated, and values (private keys) common to both computers are maintained. In other words, the private keys held in both the client computer 10 and the server computer 40 are updated to new keys every time information is given and received. Then, it is possible to maintain the latest private keys all the time.

In step 150, an authentication process is carried out in both the client computer 10 and the server computer 40, and this process is completed.

The authentication process is performed by determining whether or not transmitted authentication data is valid by use of the latest private key that is stored. This authentication process can be carried out commonly in both the client computer 10 and the server computer 40. When this authentication process is completed, it is confirmed that the mutual authentication is completed in both the client computer 10 and the server computer 40.

[Detailed process]

Next, the mutual authentication as described in the conceptual process above will be explained in detail.

(Data configuration containing a private key)

In the present embodiment, since a private key is updated to the latest data every time information is given and received, the private key functions as history data $K$. In the following description, the private key $K$ identically represents an element functioning as this history data $K$.

The private key $K$ including an initial value used as authentication data in the above conceptual process comprises secret data $C$ and authentication $R$ for identifying the client computer 10, and secret data $S$ and authentication data $Q$ for identifying the server computer 40. In the following explanation, a numerical subscript incremented from the initial value "0" is added to the private key $K$, the secret data $C$, the authentication data $R$, the private key $S$, and the authentication data $Q$. This numerical subscript represents an update status, but when these data items are generally explained, only the alphabetic symbols are used without the numerical subscript.

In the present embodiment, it is assumed that as an initial value, there is stored a result of data giving/receiving carried out in both the client computer 10 and the server computer 40, which will be described below in detail, and the history data already exists internally.

The private key $K$ uses a computing result of a function $g(C, S, Q, R)$ utilizing the secret data $C$, authentication data $R$, secret data $S$ and authentication data $Q$, respectively. The function $g$ may be a simple addition, polynomial equation with a coefficient added, multiplication, sum of products and hash function, as a way of example.

In addition, first values to generate the initial values $C_0$, $R_0$ on the client computer 10 side, values set by a user as to the secret data $C$ and the authentication data $R$ may be used, as well as they may be automatically generated. Since it is preferable that contents of the authentication data $R$ vary with no rules, every time information is given and received, a random number generated in the random number generator 14 is used as authentication data $R$ in the present embodiment. However, the present invention is not limited to a use of random number for the authentication data $R$. For example, it is possible to use time data such as present year-month-day, day-time, and time, arbitrary file volume and time stamp stored within the computer, a volume at the time of information giving/receiving, and the like.

Similarly, first values to generate the initial values $S_0$, $Q_0$ at the server computer 40 side may be values set by an operator who manages the server computer 40 as to the secret data $S$ and the authentication data $Q$, as well as it may be automatically generated. Similar to the above description, since it is preferable that contents of the authentication data $Q$ vary with no rules, every time information is given and received, a random number generated in the random number generator 44 is used as authentication data $Q$ in the present embodiment. However, the present invention is not limited to a use of random number for the authentication data $Q$. For example, it is possible to use time data such as present year-month-day, day-time, and time, arbitrary file volume and time stamp stored within the computer, a volume at the time of information giving/receiving, and the like.

Further, the authentication data $R$ at the client computer 10 side and the authentication data $Q$ at the server computer 40 side are transmitted to the other, and it is necessary to conceal the transmission data so as to make difficult for a third party to identify the transmission data. Here, in the preferred embodiment, the authentication data $R$ transmitted from the client computer 10 to the server computer 40, and the authentication data $Q$ transmitted from the server computer 40 to the client computer 10 are concealed by the private key $K$.

In other words, when data is transmitted from the client computer 10 to the server computer 40, authentication data $A$ is generated by a predefined function $v(R, K)$ and transmitted. The function $v$ may be a simple addition, polynomial equation with a coefficient added, multiplication, sum of products and hash function, as a way of example. Similarly, when data is transmitted from the server computer 40 to the client computer 10, authentication data $B$ is generated by a predefined function $w(Q, K)$ and transmitted. The function $w$ may be a simple addition, polynomial equation with a coefficient added, multiplication, sum of products and hash function, as a way of example. An example of the function $v$ and the function $w$ will be shown in the following.

$$A_m = v(R, K) = R_m + K_{m-1}$$

$$B_m = w(Q, K) = Q_m + K_{m-1}$$

Here, m is a natural number and $m \geq 1$.

The secret data $C$ on the client computer 10 side and the secret data $S$ of on the server computer 40 side are transmitted to the other, and as explained in the following, the secret data changes every time of information giving/receiving. In other words, as to the secret data $C$ transmitted from the client computer 10 to the server computer 40, at the transmission timing above, new secret data $C$ is generated by a predefined function $y(S, R)$, and then it is transmitted. The function $y$ may be a simple addition, polynomial equation with a coefficient added, multiplication, sum of products and hash function, as a way of example. Similarly, when a transmission is made from the server computer 40 to the client computer 10, the secret data $S$ is generated by a predefined function $z(C, Q)$ and it is transmitted. The function $z$ may be a simple addition, polynomial equation with a coefficient added, multiplication, sum of products and hash function, as a way of example. An example of the function $y$ and the function $z$ will be shown in the following.

$$C_m = y(S, R) = S_{m-1} + R_{m-1}$$

$$B_m = w(C,\ Q) = C_{m-1} + Q_{m-1}$$

Here, m is a natural number and m $\geq$ 1.

In addition, it may be possible to conceal the secret data transmission, in order to make difficult for a third party to specify the secret data. For example, the secret data $C$ transmitted from the client computer 10 to the server computer 40 and the secret data $S$ transmitted from the server computer 40 to the client computer 10 may be concealed by the private key $K$. In other words, it is possible to use a function to which the private key $K$ is added as a parameter.

(Detailed process)

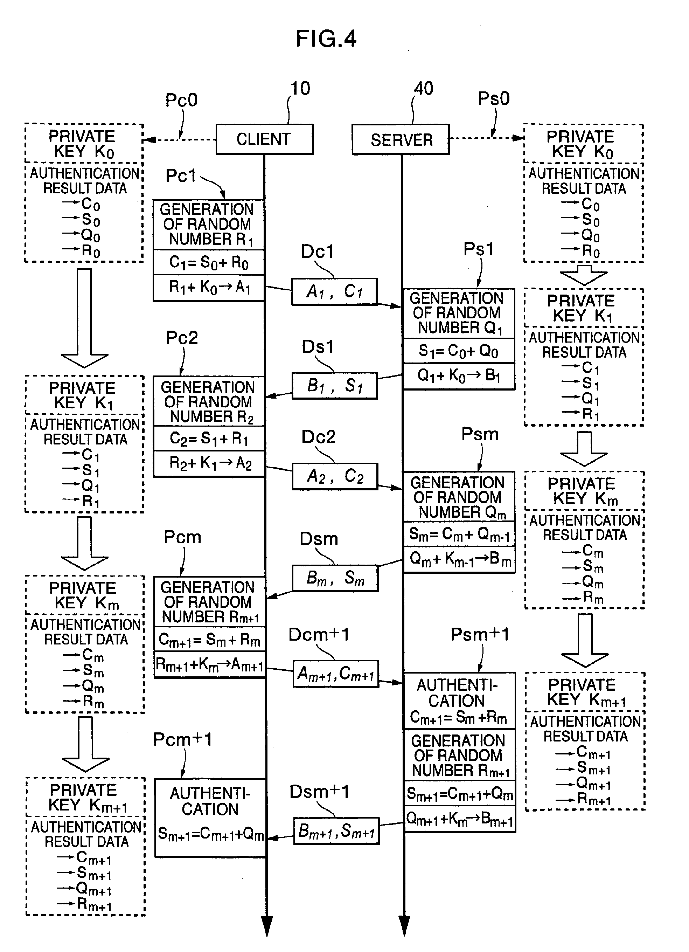

Fig. 4 is a conceptual illustration showing a detailed process in the mutual authentication according to the first embodiment of the present invention. The detailed process of the present embodiment will be explained with reference to Fig. 4.

Step P0:

In each of the client computer 10 and the server computer 40, a private key $K_0$ as initial value is stored. This process corresponds to step 100 of Fig. 3, and processes Pc0 and Ps0 of Fig. 4.

Step P1:

In the client computer 10, a random number $R$ is generated, secret data $C$ and authentication data $A$ are computed and transmitted to the server computer 40. This process corresponds to step 110 of Fig. 3 and process Pc1 of Fig. 4.

In other words, in the client computer 10, a random number $R_1$ is generated by the random number generator 14. The random number $R_1$ thus generated, private key $K_0$ stored in the memory 16, and $C_0$, $S_0$, $Q_0$ and $R_0$ constituting the private key $K_0$ are inputted into the data-for-authentication computing unit 18. Then, the data-for-authentication computing unit 18 uses the random number $R_1$, the private key $K_0$ stored in the memory 16, the secret data $S_0$ and authentication data $R_0$ constituting the private key $K_0$, to obtain new secret data $C_1$ and new authentication data $A_1$ by the above functions $y$, $v$. The new secret data $C_1$ thus obtained and the authentication data $A_1$ are stored in the memory 16, outputted to the communication I/F 30, and then transmitted to the server computer 40 via the network 32. The transmission data corresponds to the data Dc1 of Fig. 4.

Step P2:

The server computer 40 receives the authentication data $A$ and the secret data $C$ from the client computer 10, as well as generating the random number $Q$, computes the secret data $S$ and the authentication data $Q$, and then transmits the computed data to the client computer 10. Simultaneously, the stored private key $K_0$ is updated to a new private key $K_1$. This process corresponds to step 120 of Fig. 3 and process Ps1 of Fig. 4.

In other words, in the server computer 40, secret data $C_1$ and authentication data $A_1$ from the client computer 10 are inputted to the verification unit 50 via the communication I/F 60. At this timing, in the server computer 40, the random number $Q_1$ is generated by the random number generator 44. The random number $Q_1$ thus generated, the private key $K_0$ stored in the memory 46, and $C_0$, $S_0$, $Q_0$ and $R_0$ constituting the private key $K_0$ are inputted into the data-for-authentication computing unit 48. The verification unit 50 outputs the secret data $C_1$ and the authentication data $A_1$ from the client computer 10 to the data-for-authentication computing unit 48.

The data-for-authentication computing unit 48 uses the random number $Q_1$, the secret data $C_1$ thus received, the stored private key $K_0$, and the authentication data $Q_0$ constituting the private key $K_0$, to obtain new secret data $S_1$ and new authentication data $B_1$ by the above functions $z$, $w$. The new secret data $S_1$ thus obtained and the authentication data $B_1$ are outputted to the communication I/F 60, and then transmitted to the client computer 10 via the network 32. The transmission data corresponds to data Ds1 of Fig. 4.

At this timing, in the server computer 40, new data items are available respectively for the data item constituting the private key $K_0$ as an initial value. In other words, those new data items are; secret data $C_1$ received from the client computer 10 for the secret data $C$, secret data $S_1$ computed in the data-for-authentication computing unit 48 for the secret data $S$, random number $Q_1$ generated in the random number generator 44 for the authentication data $Q$, random number $R_1$ obtained by carrying out inverse operation based on the authentication data $A$ received from the client computer 10, that is, subtracting the private key $K_0$ from the authentication data $A$.

Then, updating is carried out using the secret data $C_1$, secret data $S_1$, authentication, data $Q_1$ and authentication data $R_1$ as new data items, as well as updating the private key as a new private key $K_1$. Accordingly, in the server computer 40, updating is made automatically with the latest data, as a history of the private key $K$.

Step P3:

The client computer 10 receives authentication data $B$ and secret data $S$ from the server computer 40, generates random number $R$, and calculates secret data $C_2$ and authentication data $A_2$, and then transmits those data items to the server computer 40. Simultaneously, the stored private key $K_0$ is updated with a new private key $K_1$. This process corresponds to step 130 of Fig. 3 and process Pc2 of Fig. 4.

In other words, in the client computer 10, secret data $S_1$ and authentication data $B_1$ from the server computer 40 are inputted into the verification unit 20 via the communication I/F 30. At this timing, in the client computer 10, random number $R_2$ is generated in the random number generator 14. The random number $Q_2$ thus generated, the private key $K_0$, and $C_0$, $S_0$, $Q_0$ and $R_0$ constituting the private key $K_0$, which are stored in the memory 46 are inputted into the data-for-authentication computing unit 18. The verification unit 20 outputs the secret data $S_1$ and the authentication data $B_1$ from the server computer 40 to the data-for-authentication computing unit 18.

At this timing, in the client computer 10, new data items (data items constituting a new private key $K_1$) are available respectively for the data items constituting the private key $K_0$ stored in the memory 16 as an initial value. In other words, those new data items are: secret data $C_1$ for the secret data $C$, which is obtained by carrying out inverse operation based on the secret data $S_1$ received from the server computer 40, i.e., by subtracting the authentication data $Q_0$ constituting the private key $K_0$, being stored in the memory 16, or the secret data $C_1$ stored in the memory 16 which has previously been transmitted; secret data $S_1$ for the secret data $S$, which is received from the server computer 40, authentication data $Q_1$ for the authentication data $Q$, which is obtained by carrying out inverse operation based on the authentication data $B_1$ received from the server computer 40, that is, subtracting the private key $K_0$ from the authentication data $B_1$, and random number $R_1$ for the authentication $R$, which is previously generated.

Then, updating is carried out using the secret data $C_1$, secret data $S_1$, authentication data $Q1$ and authentication data $R_1$ as new data items, as well as updating the private key with a new private key $K_1$. Accordingly, in the client computer 10, updating is made automatically with the latest data, for the private key $K$ which is equivalent to that of the server computer 40. Further, the data-for-authentication computing unit 18 obtains new secret data $C_2$ and new authentication data $A_2$ according to the above functions $y$, $v$, by use of the random number $R_2$ thus generated, authentication data $R_1$ of the updated history data $K_1$, the secret data $S_1$ thus received and a new private key $K_1$. The obtained new secret data $C_2$ and the authentication data $A_2$ are stored in the memory 16, outputted to the communication I/F 30, and transmitted to the server computer 40 via the network 32. These transmission data items correspond to data Dc2 of Fig. 4.

Step P4:

The above processes in steps P2 and P3 are executed only for a predetermined number of times m. In the present embodiment, a predetermined number of times $m$ includes at least one-time data giving/receiving. Therefore, it includes a number of times without any repetition (m = 1). At the time of data giving/receiving carried out between the client computer 10 and the server computer 40, history data as to the data giving/receiving already carried out is utilized. Therefore, even if the data giving and receiving is carried out just once, it can be done including the history between the client computer 10 and the server computer 40 at that timing. Thus, it is effective since the data giving/receiving in this case is not just a simple process, but it is a giving/receiving process of history data. Repeating the processes in the above steps P2 and P3 multiple numbers of times is effective to enhance a precision in deciding the validity of data.

In other words, by predefining the repetition number of times, i.e., execution number of times as plural, in the process for repeating the above procedure, variation is made every time a value of the private key $K$ is updated. Therefore, a third party will be prevented from recognizing the variation. With the setting of plural number of times, the private key $K$ held in common between the client computer 10 and the server computer 40 is updated to the latest status according to the past history, for the plural number of times, and thus it becomes more difficult to derive the private key $K$.

As a result of executing the processes of step P2 and P3 for a predetermined number of times $m$, each of the client computer 10 and the server computer 40 holds values of a private key $K_m$, and $C_m$, $S_m$, $Q_m$ and $R_m$ which constitute the private key $K_m$. When $m = 1$, value of one-time data giving/receiving is held.

The execution procedure for repeating the processes corresponds to the process execution by a decision in step 140 in Fig. 3, and repetition of the processes from Pc1 to Ps1 and Pc2 for the processes from Pc2 to Psm and Pcm in Fig. 4.

Step P5:

After the above processes are completed, it is checked whether or not validity of the received data is effective in each of the client computer 10 and the server computer 40. If the data validity is effective, it is determined that the mutual authentication is successful, and a relationship therebetween is approved. On the other hand, if it is determined the data validity is not effective, it is determined that the mutual authentication is not successful, and the relationship therebetween is rejected. This process corresponds to step 150 in Fig. 3 and the process $Ps_{m+1}$ and $Pc_{m+1}$ in Fig. 4.

If the authentication is made after one-time of execution, the first data transmission is carried out from the client computer 10. At this timing, the client computer 10 transmits to the server computer 40 the authentication data $A_1$ and secret data $C_1$, which are generated by the secret key $K_0$ stored as an initial value including the history between the client computer 10 and the server computer 40. This process corresponds to transmitting data $Dc_1$ subsequent to the process $Pc_1$ of Fig. 4.

In the server computer 40, the secret data $C_1$ and the authentication data $A_1$ are inputted into the verification unit 50 via the communication I/F 60, and the validity as to the secret data $C_1$ is checked in the verification unit 50. Since the received secret data $C_1$ is generated based on the previous history data, in the server computer 40, the secret data $S_0$ and authentication data $R_0$ constituting the private key $K_0$ (here, it is an initial value) updated and stored to be in the latest state, are used to determine whether or not the calculation result of the above function y matches the received data. If they match, the validity of the received data is approved, whereas if they do not match, the validity is denied. When the validity is approved, OK unit 52 announces that there is validity and the process continues. When the validity is denied, NG unit 54 announces the invalidity, and then the process is completed.

If the process continues after approval of validity, similar to the above step P2, a random number $Q_1$ is generated by the random number generator 44, the secret data $S_1$ and the authentication data $B_1$ are generated in the data-for-authentication computing unit 48, and those data items are transmitted to the client computer 10, as well as the private key is updated with the latest private key $K_1$.

This authentication process corresponds to the process $Ps_{m+1}$ in Fig. 4. In this case, since the process is not carried out repeatedly, it indicates that the process has been executed with m = 0. In other words, every time when data is transmitted from the client computer 10 to the server computer 40, authentication can be carried out on the server computer 40 side, by use of the data including the history received from the client computer 10.

On the other hand, in the client computer 10, secret data $S_1$ and authentication data $B_1$ from the server computer 40 are inputted into the verification unit 20 via the communication I/F 30. In the client computer 10, validity is checked as to the secret data $S_1$ in the verification unit 20. Since the received secret data $S_1$ is generated, similar to the secret data C, based on the previous history data in the server computer 40, in the client computer 10, the secret data $C_0$ and authentication data $Q_0$ constituting the private key $K_0$ (here, it is an initial value), updated and stored to be in the latest state, are used to determine whether or not the calculation result of the above function z matches the received data. If they match, the validity of the received data is approved, whereas if they do not match, the validity is denied. When the validity is approved, OK unit 22 announces that there is validity and the process continues. When the validity is denied, NG unit 24 announces the invalidity, and then the process is completed.

When the process continues after the validity is approved, the process is transferred to the procedure to be executed between the client computer 10 and the server computer 40. In the client computer 10, in order to hold identity of the history data K with the server computer 40, similar to the above step P3, the private key is updated with the latest private key $K_1$.

This authentication process corresponds to the process $Pc_{m+1}$ in Fig. 4. In this case, since the process is not carried out repeatedly, it indicates that the process has been executed with m = 0. In other words, every time when data is transmitted from the server computer 40 to the client computer 10, authentication can be carried out on the client computer 10 side, by use of the data including the history received from the server computer 40.

It is further possible to define the processes as a session, including that the authentication is carried out at the receiving side every time when data is transmitted from the client computer 10 to the server computer 40, or every time when data is transmitted from the server computer 40 to the client computer 10, and to execute this session including the authentication for plural number of times.

Next, there will be explained a case where authentication is carried out after repeating execution for plural number of times. In this case, $m$th time data transmission is made from the client computer 10, and then the client computer 10 transmits authentication data $A_{m+1}$ and secret data $C_{m+1}$ to the server computer 40, by use of the private key $K_m$ which has been updated by $m$ times repetition. This process corresponds to transmitting data $Dc_{m+1}$ after the process $Pc_m$ in Fig. 4.

At first, in the server computer 40, secret data $C_{m+1}$ and authentication data $A_{m+1}$ from the client computer 10 are inputted to the verification unit 50 via the communication I/F 60. In the server computer 40, validity as to the secret data $C_{m+1}$ is checked in the verification unit 50. Since the received secret data $C_{m+1}$ is generated based on the previous history data, in the server computer 40, the secret data $S_m$ and authentication data $R_m$ constituting the private

key $Km$ being updated and stored to be in the latest state, are used to determine whether or not the calculation result of the above function $y$ matches the received data. If they match, the validity of the received data is approved, whereas if they do not match, the validity is denied. When the validity is approved, OK unit 52 announces that there is validity and then the process continues. When the validity is denied, NG unit 54 announces invalidity, and then the process is completed.

When the process continues after the validity is approved, similar to the above step P2, random number $Q_{m+1}$ is generated by the random number generator 44, secret data $S_{m+1}$ and authentication data $B_{m+1}$ are generated in the data-for-authentication computing unit 48, and transmits those data items to the client computer 10, as well as updating the private key with the latest private key $K_{m+1}$. This authentication process corresponds to the process $Ps_{m+1}$ in Fig. 4.

On the other hand, in the client computer 10, secret data $S_{m+1}$ and authentication data $B_{m+1}$ from the server computer 40 are inputted to the verification unit 20 via the communication I/F 30. In the client computer 10, validity is checked as to the secret data $S_{m+1}$ in the verification unit 20. Since the received secret data $S_{m+1}$ is generated based on the previous history data in the server computer 40, similar to the secret data $C$, in the client computer 10, the secret data $C_m$ and authentication data $Q_m$ constituting the private key $K_m$ updated and stored to be in the latest status are used to determine whether or not the calculation result of the above function $z$ matches the received data. If they match, the validity of the received data is approved, whereas if they do not match, the validity is denied. When the validity is approved, OK unit 22 announces that there is validity and then the process continues. When the validity is denied, NG unit 24 announces the invalidity, and then the process is completed.

When the process continues after the validity is approved, the process is transferred to the procedure to be execute between the client computer 10 and the server computer 40. In the client computer 10, in order to hold identity of the history data K with the server computer 40, similar to the above step P3, the private key is updated with the latest private key $K_{m+1}$. This authentication process corresponds to the process $Pc_{m+1}$ in Fig. 4.

As thus described, in the present embodiment, when mutual authentication is carried out between the client computer 10 and the server computer 40, a common private key $K$ is held by the both computers, and every time of information giving/receiving, the private key $K$ is updated. Therefore, even if the data is analyzed at the time of information giving/receiving, it is difficult to specify the data for authentication, and concealment can be enhanced. Further, it is possible to achieve a secured mutual authentication.

In the above description, a relationship between the client computer 10 and the server computer 40 has been explained as a way of example. In an asynchronous network such as the Internet, authentication is required in the server computer 40 against the client computer 10. In this case, it may be possible to separate the process by user ID allocated to each client computer 10.

The above processes can be stored in executable format on a flexible disk as a recording medium, in a form of processing program of the client computer 10 and the server computer 40. In this case, a flexible disk unit (FDU) which can be inserted or pulled out in/from each device is connected, and the processing program recorded on the flexible disk is executed via the FDU.

Further, the processing program may be stored (installed) in a RAM and other storage area (e.g., hard disk unit) within a computer in accessible manner, and then the program can be executed. In addition, the program may be stored in ROM in advance. As a recording medium, there are a disk such as CD-ROM, MD, MO, and DVD, and magnetic tapes such as DAT. When those items are used, CD-ROM device, MD device, MO device, DVD device and DAT device and the like are used as a corresponding device.

As discussed above when, according to the first embodiment of the present invention, when a mutual authentication is carried out between the first authentication device and the second authentication device, history data is stored in common in each of the first authentication device and the second authentication device, as well as updating the history data. Therefore, it is possible to securely and conveniently carry out the mutual authentication. For example, there is an effect that the authentication can be securely carried out without leaking a key of the client computer from the information given and received between the client computer and the server computer.

(Example 2)

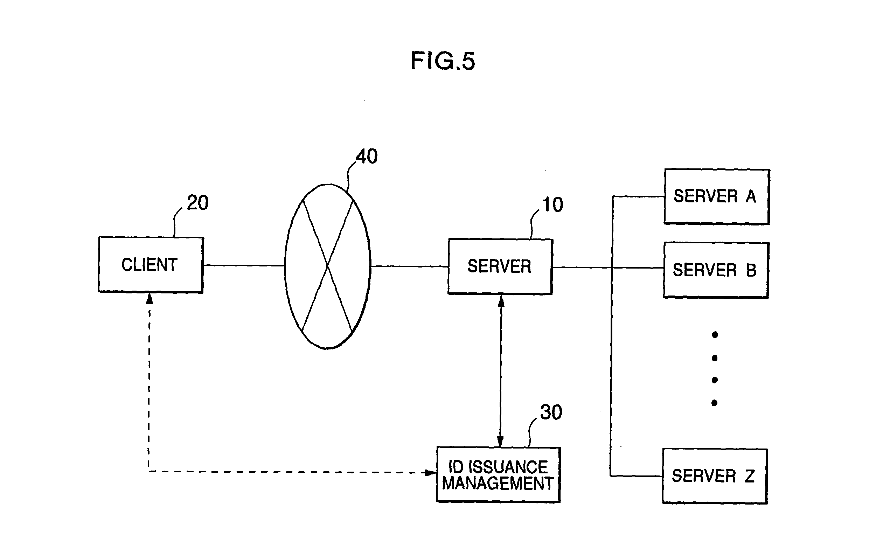

Fig. 5 is a schematic configuration which shows the second embodiment of the authentication system concerning the present invention. The authentication system is schematically configured by a server (the second device) 10 and a client (the first device) 20, which are mutually connected via a network 40 such as a public circuit network and the Internet. In the present embodiment, a plurality of servers A, B, C ... for providing various services are connected to the server 10, and the server 10 functions as an authentication server to determine whether or not accessing to the servers A, B, C ... is possible.

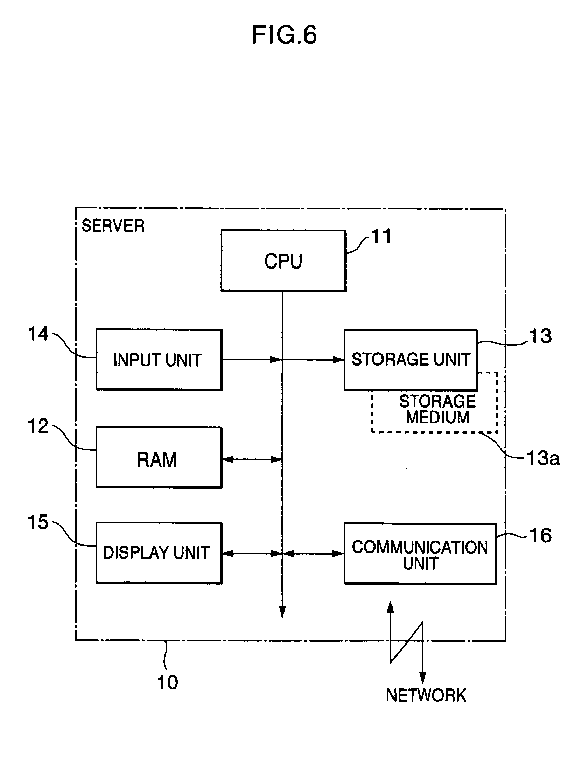

As shown in Fig. 6, the server 10 is configured by CPU 11, RAM 12, storage unit 13, input unit 14, display unit 15 and communication unit 16 and the like, and each part is connected via bus 17.

The CPU (Central Processing Unit) 11 stores in the RAM 12 various programs stored in the storage area of the storage unit 13, various instructions inputted from the input unit 14 or the communication unit 16, or various data and the like corresponding to those instructions. Then, the CPU executes various processes according to the various processing programs stored in the RAM 12 in response to those inputted instructions and the various data, temporarily stores processing results in the RAM 12, and outputs the results on the display unit 15 and the like.

This CPU 11 comprises a receiving means and a determining means in the server 10. When the CPU receives from the client 20, a function value HASHc of one-way function in which client ID is used as an argument (one-way function Fc), onetime ID (SIGNAL), and DH public value $g^x$ (one of the Diffie-Hellman public values), that is, when the CPU receives an access request from the client 20, onetime ID and HASHc are obtained by computation by use of the received data from the client 20 and stored data in the storage unit 13. By comparing the computation result, and the onetime ID and HASHc received from the client 20, a process for checking the validity of the client 20 is executed.

The CPU 11 further comprises a transmitting means in the server 10. When it is determined that the client 20 is valid, the CPU uses the above received data and the above stored data to obtain by computation HASHs being a function value of one-way function in which the server ID is used as an argument (one-way function Fs). Then, the CPU executes a process for transmitting thus obtained HASHs and the DH public value $g^y$ (the other of the Diffie-Hellman public values) to the client 20.

The onetime ID (SIGNAL) above is identification information usable just one time in the authentication between the server and the client. When this onetime ID is generated, an encryption key $K$ (a variable shared key) is read from the storage unit 13, obtains a function value of HASH value (one-way function) in which this encryption key $K$ is used as an argument, and generates the above onetime ID based on this function value.

RAM (Random Access Memory) 12 comprises a storage area for temporarily stores various data concerning authentication, such as data sent and received to/from the client 20 and the like, and a work area of the CPU 11.

The storage unit 13 includes a storage medium 13a in which programs, data and the like are stored, and the storage medium 13a comprises a magnetic storage medium, optical storage medium, or semiconductor memory. The storage medium 13a may be fixedly mounted on the storage unit 13, or attachably/detachably mounted, and comprises a storage area for storing various processing programs to be executed by the CPU 11 and control data and the like, and a storage area for storing various data concerning authentication, for example, data acquired from the client 20 or ID issuance management server 30 (explained below), and data generated in the course of the authentication process. It is also possible to have a configuration that a part of or all of the programs and data stored in the storage medium 13a may be received and stored from other server and the like, via the network 40. In the storage medium 13a, a server ID, DH public value $g^y$, random number $R$ shared with the client 20 are under a condition of previously stored, in a stage prior to staring the authentication process.

The input unit 14 comprises a keyboard, a pointing device and the like, and outputs an input instruction signal to the CPU 11.

The display unit 15 comprises CRT (Cathode Ray Tube), LCD (Liquid Crystal Display) and the like, and displays data to be displayed which is inputted from the CPU 11. The communications unit 16 comprises a modem, a router, a bridge and the like, and outputs to the CPU 11, data received from the client 20 and the like via the network 40, as well as outputting the data received from the CPU 11 to the client 20 and the like, via the network 40.

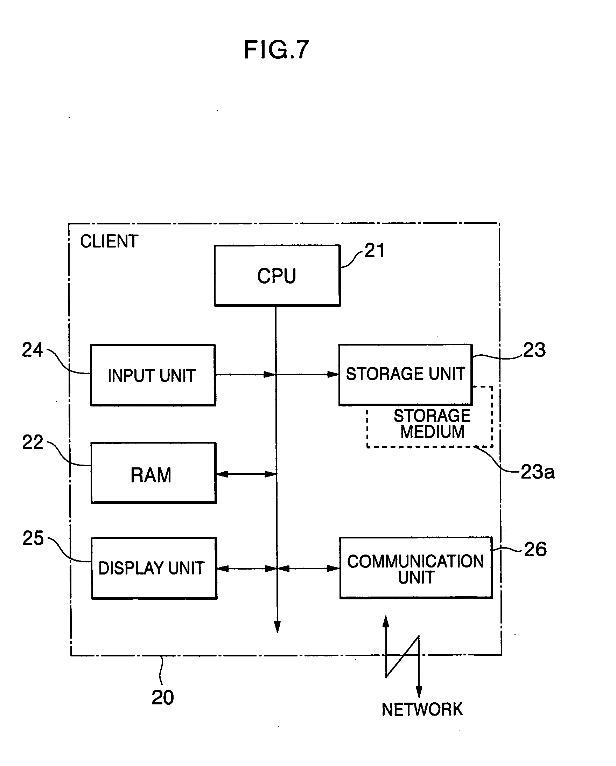

On the other hand, as shown in Fig. 7, the client 20 comprises CPU 21, RAM 22, storage unit 23, input unit 24, display unit 25, communications unit 26, and the like, and each unit is connected via bus 27. Specifically, the client 20 includes, for example, a portable information terminal such as a personal computer and a PDA (Personal Digital Assistance), and a mobile phone which is capable of using the Internet connection service. Since the elements constituting the client 20 are almost same as those of the aforementioned server 10, respectively, only different points will be explained below.

The CPU 21 of the client 20 comprises a transmitting means in the client 20. The CPU generates onetime ID (SIGNAL) based on the instruction input and the like from the input unit 24, obtains HASHc being a function value of one-way function in which the client ID is used as an argument (one-way function Fc). Then, the CPU executes a process for transmitting to the server 10, the onetime ID, HASHc, DH public value $g^x$ (the other value of the Diffie-Hellman public values) previously stored in the storage unit 23.

The CPU 21 further comprises a receiving means and a determining means in the client 20. When the CPU receives from the server 10, a function value HASHs of one-way function in which server ID is used as an argument (one-way function Fs) and DH public value $g^y$ (the other of the Diffie-Hellman public values), that is, when the server 10 determines that the client 20 is valid, HASHs is obtained by computation by use of the received data from the server 10 and stored data in the storage unit 23. By comparing the computation result, and the HASHs received from the server 10, a process for checking the validity of the server 10 is executed.

The storage unit 23 includes a storage medium 23a on which programs, data and the like are stored, and the storage medium 23a comprises a storage area for storing various processing programs to be executed by the CPU 21, control data and the like, and a storage area for storing various data concerning authentication, for example, data acquired from the server 10 or ID issuance management server 30 (explained below), and data generated in the course of the authentication process. In the storage medium 23a, a client ID, DH public value $g^x$, random number $R$ shared with the server 10 are under a condition of previously stored, in a stage prior to starting the authentication process.

The ID issuance management server 30 is a server for issuing and managing secret information (for example, random number R used for generating an initial value of onetime ID), which is shared between the client and the server, a client ID, a server ID and the like. The ID issuance management server 30 has a database for storing the above secret information, password and the like in such a manner as associated with a user ID (for example, credit number, nationwide resident-registry network ID, employee number, student number, and particular membership number, and so on). Further, the ID issuance management server 30 updates secret information within the database at a fixed period, and this updated secret information is distributed to both the client 20 and the server 10 on-line (for example, via E-mail) or off-line (for example, by mail). The above secret information may be issued based on an issuance request from the client 20 or the server 10.

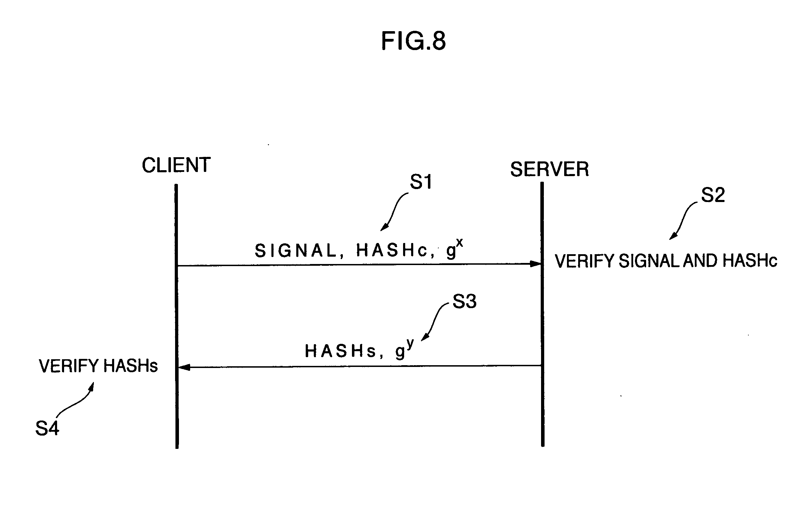

Next, a second embodiment of the authentication method carried out by the authentication system having a configuration above will be explained with reference to Fig. 8. This method is formed by applying the onetime ID (SIGNAL) concerning the present invention to IKE method which is defined in RFC 2409.

At first, in step S1, the client 20 which becomes an initiator in SA generation by IKE, executes a process to generate a onetime ID (SIGNAL) and simultaneously to obtain HASHc by computation. Then, the client 20 executes a process to transmit these onetime ID, HASHc, and DH public value $g^x$ stored in the storage unit 23, together with SA proposals, to the server 10 which becomes a responder.

Here, SIGNAL as onetime ID is generated, for example, by means of hash function as the following.

$$SIGNAL_1 = R$$

$$SIGNAL_2 = hash(K_1)$$

$$SIGNAL_3 = hash(K_2)$$

$$....$$

$$SIGNAL_n = hash(K_{n-1}) \hspace{3cm} \text{(Equation 2)}$$

In the above definitional equation, "hash" represents hash function, "$R$" represents a random number issued from the ID issuance management server 30 to both the server 10 and the client 20, and shared therebetween, "$K_i$" represents an encryption key (variable shared key) generated on the i-th session and shared by the server and the client. The session above indicates a communication unit from the time when SA is established to the time when the SA becomes invalid.

In other words, according to the above definitional equation of SIGNAL, a function value of the hash function is obtained in which the encryption key $K$ generated in the previous session is used as an argument, and this function value is used as SIGNAL in the current session. In the first session, random number $R$ shared in advance between the server and the client is to be used as an initial value of SIGNAL. Further, the above encryption key $K_i$ can be obtained by the next equation (3).

$$K_i = prf(\text{shared key}, g^{xy}, SIGNAL_i) \hspace{3cm} \text{(Equation 3)}$$

In this equation (3), "$g^{xy}$" is a DH common key, and the "shared key" is an arbitrary shared key between the server and the client.

On the other hand, as indicated in the next equation (4), "HASHc" can be obtained as a function value of a pseudo-random number function (keyed hash function) in which a shared key, DH public value $g^x$, IDc (client ID) and SIGNAL are used as arguments.

$$HASHc = prf(\text{shared key}, g^x, IDc, SIGNAL) \hspace{3cm} \text{(Equation 4)}$$

Subsequently, in step S2, the server 10 executes a process to obtain SIGNAL and HASHc by computation, and by comparing those computation results, and SIGNAL and HASHc received from the client 20, the server 10 executes a process for determining the validity of the client 20.

As a result of the above determination, if the received data items match the computation results, and it is determined that the client 20 is valid, HASHs is obtained by computation. Then, the server 10 executes a process to transmit to the client 20 this HASHs and DH public value $g^y$ stored in the storage device 13, together with the approved SA (step S3). On the other hand, if the received data items do not match the computation results, and it is determined that the client 20 is not valid, the access from the client 20 is rejected, and the authentication process is completed.

Here, as indicated in the next equation (5), HASHs can be obtained as a function value of a pseudo-random number function (keyed hash function) in which a shared key, DH public value $g^x$, $g^y$, IDs (server ID) and SIGNAL are used as arguments.

$$\text{HASHs} = \text{prf (shared key, } g^x, g^y, \text{IDs, SIGNAL)} \qquad \text{(Equation 5)}$$

In step S3, there is a process to be carried out together with the above process that DH common key $g^{xy}$ is generated from DH public value $g^y$ stored in the storage unit 13 and DH public value $g^x$ received from the client 20, and then, the DH common key $g^{xy}$ is stored in the storage unit 13.

Subsequently, in step S4, the client 20 executes a process to obtain HASHs by computation, and by comparing the computation results and HASHs received from the server 10, the client 20 executes a process to determine the validity of the server 10.

As a result of the above determination, if the received data items match the computation results and it is determined that the server 10 is valid, DH common key $g^{xy}$ is generated from the DH public value $g^x$ stored in the storage unit 23 and DH public value $g^y$ received from the server 10, and the DH common key $g^{xy}$ is stored in the storage unit 23. Then, the authentication process is completed, and the process is shifted to the next data transmission process.

On the other hand, if the received data items do not match the computation results, and it is determined that the sever 10 is not valid, the access to the server 10 is stopped, and the authentication process is completed.

As described above, according to the second embodiment, as onetime ID (SIGNAL), a function value of the hash function is utilized, in which encryption key $K$ (variable shared key) changing per session is used as an argument. Therefore, even if the encryption key $K$ is leaked out to a third party, it is impossible for the third party to predict a onetime ID other than the onetime ID generated by use of the leaked encryption key $K$, since the encryption key $K$ changes per session. In other words, it is possible to generate a onetime ID hard to tap and superior in security, and to achieve a future security (PFS: perfect forward secrecy) of the onetime ID.

Further, the authentication between the client and the server is carried out by use of the onetime ID (SIGNAL); a third party cannot identify the sender and receiver, whereas as far as the sender and the receiver are valid ones, they can recognize the onetime ID as identification information. Therefore, it is possible to develop resistance to DoS attack, spoofing and the like, and even under an open network environment, ID information can be protected and security in communication can be enhanced. Further, remote accessing becomes available, and convenience can be improved.

In the second embodiment, as one-way function Fc for checking the validity of client 20, a pseudo-random number function is used, in which a shared key, DH public value $g^x$, IDc (client ID) and SIGNAL are used as arguments. Further, as one-way function Fs for checking the validity of server 10, a pseudo-random number function is used, in which a shared key, DH public value $g^x$, $g^y$, IDs (server ID) and SIGNAL are used as arguments. Therefore, it is possible to reduce number of communication times to twice, which has been required to be three times in a conventional key exchange and authentication method. Therefore, a rapid and safe authentication and key exchange can be achieved.

(Example 3)

In the second embodiment as described above, a function value of a hash function is obtained, in which the encryption key (variable shared key) generated in the previous session is used as an argument, and this function value is used as onetime ID (SIGNAL) of the current session. In the third embodiment, a function value of the hash function is obtained, in which the shared key generated in the previous session and a communication sequence in the current session are used as arguments, and this hash function value is used as a onetime ID in each communication timing of the current session. The third embodiment is similar to the second embodiment besides a part peculiar to the third embodiment. In the third embodiment, same reference numbers are given to the parts same as those of the second embodiment, and the descriptions thereof will be omitted.

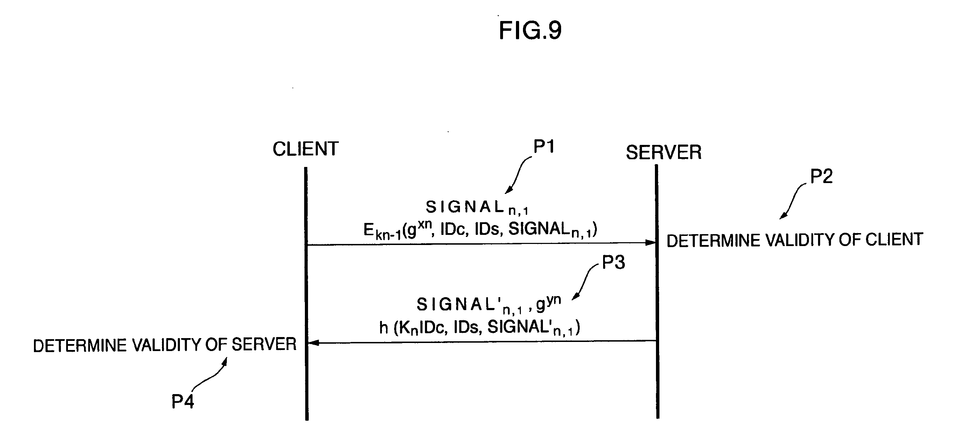

Fig. 9 is a diagram which explains the third embodiment of the authentication method concerning the present invention. In the third embodiment, firstly in step P1, the client 20 executes a process to generate $\text{SIGNAL}_{n,1}$ (the first onetime ID), then, IDc (client ID), IDs (server ID), DH public value $g^{xn}$ and $\text{SIGNAL}_{n,1}$ are encrypted with the shared key $K_{n-1}$ (the first variable shared key), and then the client 20 executes a process to transmit this encryption data and SIGNAL$_{n,1}$ to the server 10.

Here, assuming that the SIGNAL used in j-th communication of the client 20 in i-th session is SIGNAL$_{i,j}$, the SIGNAL used in j-th communication of the server 10 in i-th session is SIGNAL'$_{i,j}$, SIGNALs are generated as the following.

$$SIGNAL_{1,j} = hash(R, j) \qquad i = 1$$

$$SIGNAL_{i,j} = hash(K_{i-1}, j) \qquad i \geq 2$$

$$SIGNAL'_{1,j} = hash'(R, j) \qquad i = 1$$

$$SIGNAL'_{i,j} = hash'(K_{i-1}, j) \qquad i \geq 2 \qquad\qquad\qquad (Equation\ 6)$$

In the above definitional equation of SIGNAL (6), "hash" and "hash' " represent hash functions different from each other, "$R$" represents a random number issued from the ID issuance management server 30 to both the server 10 and the client 20 and shared therebetween, "$K_i$" is a DH common key $g^{xiyi}$ (shared key) which is shared in the i-th session.

In other words, according to the definitional equation of SIGNAL (6), a function value of the hash function is obtained, in which the shared key $K_{i-1}$ generated in the previous session and a communication sequence $j$ in the current session are used as arguments. Thus obtained function value is set as SIGNAL to be used in the j-th communication in the current session. In the first session (i = 1), a function value of the hash function is obtained, in which the random number $R$ previously shared between the server and the client and the communication sequence $j$ in the first session are used as arguments, and this obtained function value is set as SIGNAL used in the j-th communication in the first session.

Next in step P2, the server 10 executes a process to obtain SIGNAL$_{n,1}$ by computation, and then the computation result and SIGNAL$_{n,1}$ received from the client 20 are collated for identifying the client 20. If it cannot be identified, the communication is rejected. If the client 20 can be identified, the server executes a process to decode the encryption data by use of the shared key $K_{i-1}$, and a process to determine the validity of the client 20 based on IDc, IDs and SIGNAL$_{n,1}$ included in the decoded data.

As a result of the above determination, when the received data matches the stored data previously stored in the server 10, and it is determined that the client 20 is valid, SIGNAL'$_{n,1}$ (the second onetime ID) is generated, according to the above definitional equation of SIGNAL. At the same time, DH common key $g^{xnyn}$ is generated as a shared key $K_n$ (the second variable shared key) from the DH public value $g^{xn}$ received from the client 20 and the DH public value $g^{yn}$ previously stored in the server 10. Then, the server 10 executes a process to transmit a function value of the hash function $h$ to the client 20, in which the shared key $K_n$, IDc, IDs and SIGNAL'$_{n,1}$ are used as arguments, together with the DH public value $g^{yn}$, and SIGNAL'$_{n,1}$ (step P3). On the other hand, if the received data items do not match the stored data items, and it is determined that the client 20 is not valid, accessing from the client 20 is rejected and the authentication process is completed.

Next in step P4, the client 20 executes a process to obtain SIGNAL'$_{n,1}$ by computation, and then the computation result and SIGNAL'$_{n,1}$ received from the server 10 are collated for identifying the server 10. If it cannot be identified, the communication is rejected. If the server 10 can be identified, DH common key $g^{xnyn}$ is generated as a shared key $K_n$ from the DH public value $g^{yn}$ received from the server 10 and the DH public value $g^{xn}$ previously stored in the client 20, as well as obtaining by computation a function value of the hash function $h$ by use of the shared key $K_n$. Then, the client 20 executes a process to determine the validity of the server 10 by collating the computation result and the function value of the hash function $h$, received from the server 10.

As a result of the above determination, when the received data items match the computation result and it is determined that the server 10 is valid, the authentication process is completed, and the process is shifted to the next data transmission process. On the other hand, when the received data items do not match the computation result, and it is determined that the server 10 is not valid, accessing to the server 10 is stopped and the authentication process is completed.

If it is necessary to confirm on the server 10 side that the client 20 has shared the shared key $K_i$, after the client 20 determines that the server 10 is valid in the step P4, it is sufficient for the client 20 to transmit to the server 10 a function value of the hash function $h$ in which the shared key $K_n$, IDc, and IDs are used as arguments.

As described above, according to the third embodiment of the present invention, a function value of the hash function is obtained, in which the shared key $K_{i-1}$ (variable shared key) generated in the previously session and the communication sequence $j$ in the current session are used as arguments, and the function value is used as onetime ID (SIGNAL) only effective in the j-th communication in the current session. Therefore, even when the shared key $K_n$ generated in the $n^{th}$ session is leaked out to a third party, for example, the shared key $K_n$ changes per session, onetime IDs other than the onetime IDs (i.e., $SIGNAL_{n+1,j}$ $SIGNAL'_{n+1,j}$) generated by the leaked shared key $K_n$ cannot be predicted. In other words, it becomes possible to generate a onetime ID hard to tap and superior in security, and to achieve a future security (PFS: perfect forward secrecy) of the onetime ID.

Further, the authentication between the client and the server is carried out by use of the above onetime ID (SIGNAL), similar to the second embodiment, it is possible to prevent a DoS attack against high volume calculation and memory due to a large amount of calculation requests and response requests. Then, even under an open network environment, it is possible to protect ID information and to enhance a security in communication.

It is to be noted that as one of techniques to prevent DoS attack, a technique using a cookie (a random number) is generally known. According to this technique, by combining the IP address and a secret which only the cookie generator knows, it is possible to prevent the DOS attack from an identical IP address. On the other hand, in the case of SIGNAL of the present embodiment, as far as the DH common key is unknown, it is impossible to predict a SIGNAL which will be effective next. Therefore, by use of SIGNAL for every communication, it is possible to obtain a same effect as that of cookie.

Further, in the case of cookie, change of IP address during a session is not allowed, but as for SIGNAL, it can be changed. If the cookie is used, it is impossible to prevent a DoS attack with a forged IP address, whereas the onetime ID can prevent such attack since the onetime ID has no relation with the IP address.

Further in the present embodiment, it will be considered a case where the client 20 transmits a first message of protocol (step P1), the server 10 calculates a DH key exchange in response to the message thus transmitted (step P2), and then transmits a second message (step P3). If the message from the server 10 disappears on the way or it is taken over by an attacker, and the client 20 cannot receive the message, it is necessary for the client 20 to transmit the first message once again. In this case, it is not possible for the server 10 to determine whether the client 20 resends a communication or the attacker carries out a replay attack by reading the first message. Therefore, if the client 20 resends the first message once again, a message having contents identical to the message of the first challenge. The server 10 also sends the message previously returned as it is. Accordingly, it is possible to avoid a needless computation of DH key exchange, and to prevent a DOS attack by a replay attack.

In the present embodiment, a function value of the hash function is obtained in which a shared key (DH common key) $K_{i-1}$ generated in the previous session and a communication sequence $j$ in the current session are used as arguments, and this function value is generated as a onetime ID (SIGNAL) which is effective only for the $j$-th communication in the current session. For example, the SIGNAL can also be generated as the following.

$$SS_j = h1(K_{i-1})$$

$$SIGNAL_{i,j} = hash(SS_i, j)$$

$$SIGNAL'_{i,j} = hash'(SS_i, j) \qquad \text{(Equation 7)}$$

In the above definitional equation of SIGNAL (7), "$SS_i$" represents a function value of the hash function in which DH common key $K_{i-1}$ shared in the (i-1)th session is used as an argument.

In this case, the key for authentication used in the i-th session is represented by $AK_i$, and an encryption key is represented by $Sk_i$, and these keys may be obtained by the following equations, for example:

$$Ak_i = h2(K_{i-1})$$

$$Sk_i = h3(K_{i-1}).$$

Here, h1, h2, h3 are one-way hash functions without a collision.

In the case where the key for authentication and the encryption key are generated based on $SS_i$ as described above, the key for authentication $Ak_n$ is used, when the client 20 encrypts IDc, IDs, DH public value $g^{xn}$ and $SIGNAL_{n,1}$ and transmits the encryption data to the server 10 in the step P1 as described above. In step P3, as a hash function $h$ which is transmitted from the server 10 to the client 20, a hash function is utilized in which an encryption key $SK_n$, IDc, IDs and $SIGNAL'_{n,1}$ are used as arguments.

With the configuration above, even if an attacker knows any one of values $SS_i$, $AK_i$, and $SK_i$, the other values

cannot be calculated. Accordingly, if an attacker spoofs as a regular user in the i-th session and carries out a key exchange, $AK_i$, SIGNAL, ID information (IDS, IDs) of the regular user are necessary. Therefore, in order to execute encrypt communication, $SK_i$, SIGNAL, ID information of the regular user, and information as to communication number of times are required.

Further, the DH public value $g^{xn}$ of the client 20 in the n-th session is encrypted by use of authentication key $AK_i(h2(K_{i-1}))$. Therefore, the attacker who does not know $AK_i$ cannot get aware of $g^{xn}$. Therefore, Diffie-Hellman common key generated and shared in the present method is secured, from the viewpoint of both computational complexity and information theory.

(Example 4)

In the second and the third embodiments as described above, a Diffie-Hellman key exchange is carried out simultaneously with authentication. In the fourth embodiment, this Diffie-Hellman key exchange is omitted. The fourth embodiment is similar to the second embodiment besides a part peculiar to the fourth embodiment. In the fourth embodiment, same reference numbers are given to the parts same as those of the second embodiment, and the descriptions thereof will be omitted.

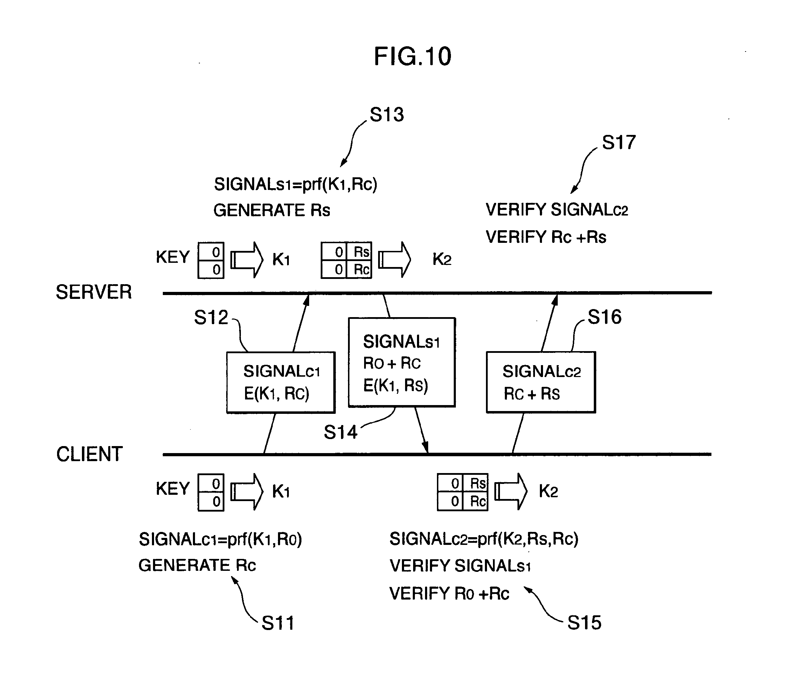

Fig. 10 is a diagram which explains the fourth embodiment of the authentication method concerning the present invention. In the fourth embodiment, the client 20 executes a process to generate a random number $Rc$ (the first random number), and to obtain as $SIGNAL_{c1}$ (the first onetime ID), a function value of the pseudo-random number function $prf(K_1, R_0)$ in which a shared key $K_1$ (the first shared key) previously shared with the server 10 and random number $R_0$ (initial random number) are used as arguments (step S11), and a process for transmitting this $SIGNAL_{c1}$ and the random number $Rc$ encrypted by the shared key $K_1$ to the server 10 (step S12).

Subsequently, the server 10 executes a process to generate a random number $Rs$ (the second random number), and to obtain as $SIGNAL_{s1}$ (the second onetime ID), a function value of the pseudo-random number function $prf(K_1, Rc)$ in which a random number $Rc$ decoded by the shared key $K_1$ and the shared key $K_1$ are used as arguments (step S13), and a process for transmitting this $SIGNAL_{s1}$, the random number $Rs$ encrypted by the shared key $K_1$, and random number $R_0 + Rc$ (a predefined computation result using the random numbers $R_0$ and $Rc$ as arguments; for example, exclusive logical OR thereof) to the client 20 (step S14).

Subsequently, the client 20 executes a process to obtain the $SIGNAL_{s1}$ by computation based on the random number $Rc$ and the shared key $K_1$, and to identify the server 10 by comparing the computation result and the $SIGNAL_{s1}$ received from the server 10. Simultaneously, by comparing the received data of the random number $R_0 + Rc$ and the computation result, the client 20 executes a process to determine the validity of the server 10 (step S15).

As a result of the determination, if the received data items respectively match the computation results and it is determined that the server 10 is valid, the client 20 executes a process to generate a shared key $K_2$ (the second shared key) based on the random number $Rc$ and the random number $Rs$, and to obtain as $SIGNAL_{c2}$ (the third onetime ID), a function value of pseudo-random number function $prf(K_2, Rs, Rc)$ in which the shared key $K_2$, the random number $Rs$ and the random number $Rc$ are used as arguments. Then, the client 20 executes a process to transmit to the server 10 the $SIGNAL_{c2}$, the random number $Rc + Rs$ (a predefined computation result using the random numbers $Rc$, $Rs$ as arguments) (step S16). On the other hand, if received data items do not match the computation results respectively and it is determined that the server 10 is not valid, accessing to the server 10 is stopped and the authentication process is completed.

When the server 10 receives $SIGNAL_{c2}$ from the client 20, the server 10 executes a process to generate a shared key $K_2$ based on the random number $Rc$ and the random number $Rs$, and to obtain $SIGNAL_{c2}$ by computation based on the shared key $K_2$, the random number $Rs$ and the random number $Rc$. Then, by comparing the computation result with the $SIGNAL_{c2}$ received from the client 20, the server 10 executes a process to identify the client 20, and simultaneously by comparing the received data of the random number $Rc + Rs$ with the computation result, the server 10 executes a process to determine the validity of the client 20 (step S17).

As a result of the above determination, if the received data items respectively match the computation results and it is determined that the client 20 is valid, the authentication process is completed, and the process shifts to the next data transmission process. On the other hand, if received data items do not match the computation results respectively and it is determined that the client 20 is not valid, accessing from the client 20 is rejected and the authentication process is completed.

As described above, according to this the fourth embodiment, a function value of pseudo-random number function $prf$ is utilized as onetime ID, in which the random number generated in the course of mutual authentication and the shared key $K$ which changes in the course of mutual authentication are used as arguments, it is possible to enhance the security of the onetime ID, and to achieve a rapid and safe mutual authentication, similar to the second embodiment.

(Example 5)

In the fourth embodiment as described above, the shared key used for generating the onetime ID (SIGNAL) is changed in the course of mutual authentication, whereas in the fifth embodiment, the above shared key is fixed.

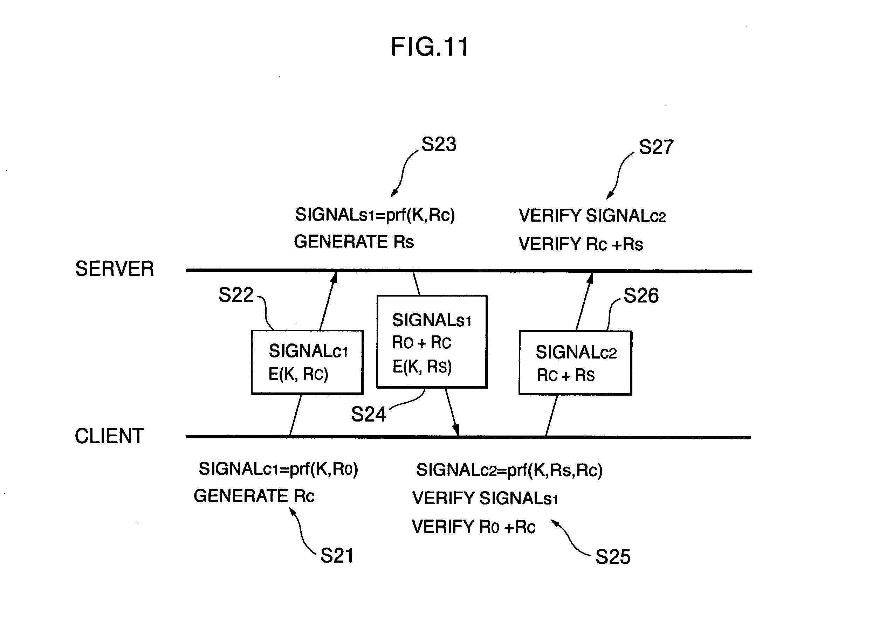

In other words, in the fifth embodiment, as shown in Fig. 11, the client 20 firstly executes a process to generate a random number $Rc$ (the first random number), and to obtain as $SIGNAL_{c1}$ (the first onetime ID) a function value of pseudo-random number function prf (K, R0) in which the shared key K previously shared with the server 10 and the random number R0 (initial random number) are used as arguments (step S21), and also executes a process for transmitting to the server 10 the $SIGNAL_{c1}$ and the random number $Rc$ encrypted with the shared key $K$ (step S22).

Subsequently, the server 10 executes a process to generate random number $Rs$ (the second random number), and to obtain as $SIGNAL_{s1}$ (the second onetime ID) a function value of pseudo-random number function prf(K, Rc) in which the random number $Rc$ decoded with the shared key $K$ and the shared key $K$ are used as arguments (step S23), and then executes a process for transmitting to the client 20, the $SIGNAL_{s1}$, the random number $Rs$ encrypted with the shared key $K$, and the random number R0 + Rc (a predefined computation result using the random numbers R0, Rc as arguments) (step S24).

Subsequently, the client 20 executes a process to obtain $SIGNAL_{s1}$ by computation based on the random number $Rc$ and the shared key $K$, and to identify the server 10 by comparing the computation result with the $SIGNAL_{s1}$ received from the server 10. Simultaneously, by comparing received data of the random number R0 + R1 with the computation result, the client executes a process for determining validity of the server 10 (step S25).

As a result of the determination, if the received data items respectively match the computation results and it is determined that the server 10 is valid, the client 20 executes a process to obtain as $SIGNAL_{c2}$ (the third onetime ID), a function value of pseudo-random number function prf (K2, Rs, Rc) in which the random number $Rc$, the random number $Rs$, and the shared key $K$ are used as arguments. Then, the client executes a process for transmitting to the server 10 the $SIGNAL_{c2}$, the random number $Rc + Rs$ (a predefined computation result using the random numbers Rc, Rs as arguments) (step S26). On the other hand, if the received data items do not match the computation results respectively and it is determined that the server 10 is not valid, accessing to the server 10 is stopped and the authentication process is completed.

When the server 10 receives $SIGNAL_{c2}$ from the client 20, the server 10 executes a process to obtain $SIGNAL_{c2}$ by computation based on the random number $Rc$, the random number $Rs$, and the shared key $K$. Then, by comparing the computation result with the $SIGNAL_{c2}$ received from the client 20, the server 10 executes a process to identify the client 20, and by comparing the received data of the random number $Rc + Rs$ with the computation result, the server 10 also executes a process to determine the validity of the client 20(step S27).

As a result of the above determination, if the received data items match the computation results respectively and it is determined that the client 20 is valid, the authentication process is completed, and the process is shifted to the next data transmission process. On the other hand, if the received data items do not match the computation results respectively and it is determined that the client 20 is not valid, accessing from the client 20 is rejected and the authentication process is completed.

As described above, according to the fifth embodiment, a function value of pseudo-random number function *prf* is utilized as onetime ID in which the random number generated in the course of mutual authentication and the shared key $K$ are used as arguments. Therefore, for example, even when the shared $K$ is leaked out to a third party, it is impossible to predict onetime ID as far as the random number generated in the course of mutual authentication is unknown, since the function value of the pseudo-random number function *prf* sequentially changes in the course of mutual authentication. Therefore, it is possible to enhance the security of the onetime ID and to achieve a rapid and safe mutual authentication, similar to the second to fourth embodiments as described above.

(Example 6)

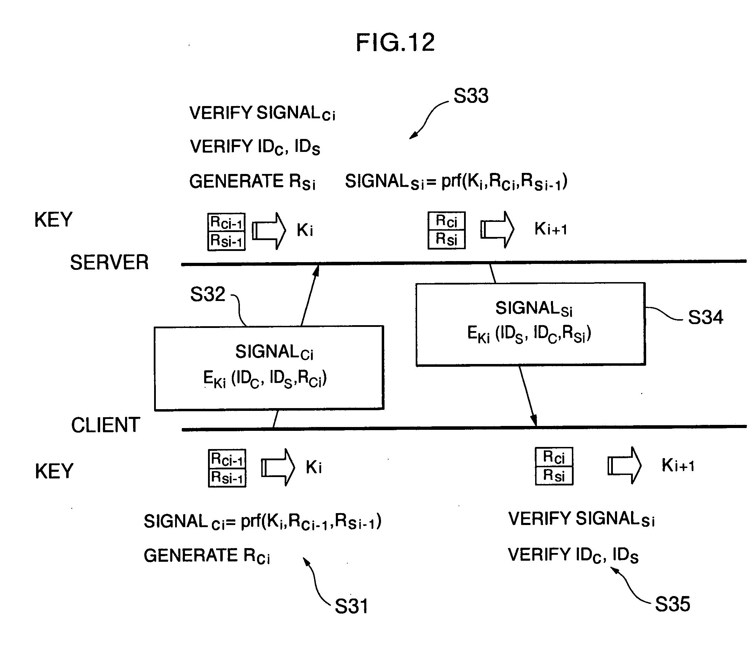

Fig. 12 is a diagram which explains the sixth embodiment of an authentication method concerning the present invention. In the sixth embodiment, at first, the client 20 executes a process to generate a random number $R_{ci}$ (the first random number), and to obtain as $SIGNAL_{ci}$ (the first onetime ID), a function value of pseudo-random number function *prf* $(K_i, R_{ci-1}, R_{si-1})$ in which a shared key $K_i$ previously shared with the server 10, a random number $R_{ci-1}$ (the first stored random number) and a random number $R_{si-1}$ (the second stored random number) are used as arguments (step S31).

Here, $R_{ci}$ represents a random number generated by the client 20 in the i-th session, $R_{si}$ represents a random number generated by the server 10 in the i-th session, and $K_i$ represents a variable shared key used in the i-th session. Further, the random numbers $R_{ci-1}$ and $R_{si-1}$ generated in the previous ((i-1) -th) session are respectively stored in the storage areas of the storage devices 13, 23 of the server 10 and the client 20, and the shared key $K_i$ is generated based on these random numbers $R_{ci-1}$ and $R_{si-1}$.

After the client 20 generates $SIGNAL_{c1}$, it executes a process to transmit to the server 10, encryption data $E_{Ki}(IDc, IDs, R_{ci})$ that is obtained by encrypting the IDc (client ID), IDs (server ID) and the random number $R_{ci}$ by the shared key $K_i$, together with the $SIGNAL_{c1}$ (step S32).

When the server 10 receives the $SIGNAL_{c1}$ from the client 20, it executes a process to obtain by computation $SIGNAL_{c1}$ based on the shared key $K_i$, the random number $R_{ci-1}$ and the random number $R_{si-1}$, and by comparing the computation result and the $SIGNAL_{c1}$ received from the client 20, the server 10 executes a process to identify the client 20. If it cannot be identified, the communication is rejected. When it can be identified, the server 10 executes a process to decode the encryption data $E_{Ki}(IDc, IDs, R_{ci})$ by use of the shared key $K_i$, and a process to determine the validity of the client 20 based on the IDc and IDs included in thus decoded data.

As a result of the above determination, when the received data items match the stored data items previously stored in the server 10, and it is determined that the client 20 is valid, the server 10 generates a random number $R_{si}$ (the second random number). At the same time, it also executes a process to obtain a function value of pseudo-random function $prf(K_i, R_{ci}, R_{si-1})$ as $SIGNAL_{s1}$ (the second onetime ID), in which the random number $R_{ci}$, the random number $R_{si-1}$, and the shared key $K_i$ are used as arguments. Then, the server 10 executes a process to store the random numbers $R_{ci}, R_{si}$ respectively in the storage areas where the random numbers $R_{ci-1}$ and $R_{si-1}$ are stored, and to generate and store the shared key $K_{i+1}$ based on these random numbers $R_{ci}, R_{si}$ (step S33).

Subsequently, the server 10 executes a process to transmit to the client 20, encryption data $E_{Ki}(IDs, IDc, R_{si})$, which is obtained by encrypting the IDc, IDs and the random number $R_{si}$ by the shared key $K_1$, together with the $SIGNAL_{s1}$ (step S34).

On the other hand, when the received data and the stored data do not match, and it is determined that the client 20 is not valid, accessing from the client 20 is rejected and the authentication process is completed.

When the client 20 receives $SIGNAL_{s1}$ from the server 10, it executes a process to obtain by computation $SIGNAL_{s1}$ based on the shared key $K_1$, the random number $R_{ci}$ and the random number $R_{si-1}$, and by comparing the computation result and the $SIGNAL_{s1}$ received from the server 10, executes a process to identify the server 10, and when it cannot be identified, the communication is rejected. On the other hand, when it can be identified, the client 20 executes a process to decode the encryption data $E_{Ki}(IDs, IDc, R_{si})$ by use of the shared key $K_i$, and to determine the validity of server 10 based on the IDc and IDs included in thus decoded data. If the server 10 can be identified, not only a communication partner can be specified, but also it is possible to confirm that the server 10 has received the random number $R_{ci}$.

As a result of the above determination, if the received data items match the data items previously stored in the client 20 and it is determined that the server 10 is valid, the random numbers $R_{ci}, R_{si}$ are respectively stored in the storage areas where the random numbers $R_{ci-1}$ and $R_{si-1}$ are stored, and a shared key $K_{i+1}$ is generated and stored based on these random number $R_{ci}$ and $R_{si}$ (step S35). Then, the authentication process is completed, and the process is shifted to the next data transmission process. On the other hand, when the received data and the stored data do not match, and it is determined that the server 10 is not valid, accessing from the server 10 is rejected and the authentication process is completed.

As described above, according to the sixth embodiment, in addition to obtaining operations and effects similar to the aforementioned fourth embodiment, ID information (IDs, IDc) included in the encryption data cannot be decoded correctly, even when an attacker rewrites the encryption data. It is because the encryption data $E_{Ki}(IDs, IDc, R_{si})$, which is obtained by encrypting the IDc, IDs, and the random number $R_{si}$ with the shared key $K_i$, is transmitted to a communication partner. Therefore, the server 10 or the client 20 which has received the data is capable of detecting easily that the transmitted encryption data is incorrect, and discarding the data without receiving the random number. Furthermore, when a value of $SIGNAL_{c1}$ is duplicated with the values of other plural clients, it is easy to specify a communication partner by referring to the ID information (IDs, IDc) included in the encryption data.

In addition, according to this the sixth embodiment, the validity of the communication partner is determined by confirming whether or not the communication partner is successful in correctly encrypting the ID information (IDs, IDc) of the server and the client. Therefore, it is possible to reduce the communication number of times to twice, which is required to be three times in the aforementioned fourth embodiment. Then, more efficient authentication can be achieved.

(Example 7)

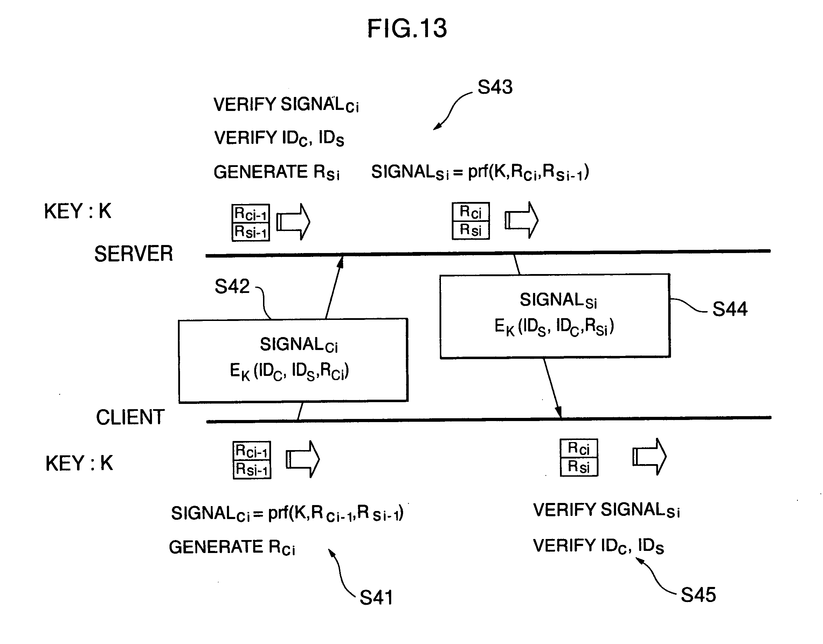

Fig. 13 is a diagram which explains the seventh embodiment of an authentication method concerning the present invention. In the seventh embodiment, firstly, the client 20 executes processes to generate a random number $R_{ci}$ (the first random number, and to obtain as $SIGNAL_{c1}$ (the first onetime ID), a function value of pseudo-random number function $prf(K, R_{ci-1}, R_{si-1})$, in which a fixed shared key $K$ previously shared with the server 10, the random number $R_{ci-1}$ (the first stored random number) and the random number $R_{si-1}$ (the second stored random number) are used as arguments (step S41).

$R_{ci}$ represents a random number generated by the client 20 in the i-th session, and $R_{si}$ represents a random number generated by the server 10 in the i-th session. The random numbers $R_{ci-1}$ and $R_{si-1}$ generated in the previous (i - 1)th session, are respectively stored in the storage areas 13, 23 in the server 10 and the client 20.

After the client 20 generates $SIGNAL_{c1}$, it executes a process to transmit to the server 10, the encryption data $E_K(IDc, IDs, R_{ci})$, which is obtained by encrypting with the shared key $K$, the IDc (client ID), IDs (server ID) and the random number $R_{ci}$, together with the $SIGNAL_{c1}$ (step S42).

When the server 10 receives the $SIGNAL_{c1}$ from the client 20, it executes a process to obtain by computation $SIGNAL_{c1}$ based on the shared key $K$, the random number $R_{ci-1}$ and the random number $R_{si-1}$, and by comparing the computation result and the $SIGNAL_{c1}$ received from the client 20, the server 10 executes a process to identify the client 20. If it cannot be identified, the communication is rejected. When it can be identified, encryption data $E_{Ki}(IDc, IDs, R_{ci})$ is decoded by use of the shared key $K$, and based on the IDc and IDs included in thus decoded data, the server 10 executes a process to determine the validity of the client 20.

As a result of the above determination, when the received data items match the stored data items previously stored in the server 10, and it is determined that the client 20 is valid, the server 10 executes a process to generate a random number $R_{si}$ (the second random number), and simultaneously to obtain a function value of pseudo-random function prf(K, Rci, $R_{si-1}$) as $SIGNAL_{s1}$ (the second onetime ID), in which the random number $R_{ci}$, the random number $R_{si-1}$, and the shared key $K$ are used as arguments. Then, the server 10 executes a process to store the random numbers $R_{ci}$, $R_{si}$, respectively, in the storage areas where the random numbers $R_{ci-1}$ and $R_{si-1}$ have been stored (step S43).

Subsequently, the server 10 executes a process to transmit to the client 20, encryption data $E_K(IDs, IDc, R_{si})$, which is obtained by encrypting the IDc, IDs and the random number $R_{si}$, together with the $SIGNAL_{si}$ (step S44).

On the other hand, when the received data and the stored data do not match, and it is determined that the client 20 is not valid, accessing from the client 20 is rejected and the authentication process is completed.

When the client 20 receives the $SIGNAL_{s1}$ from the server 10, it executes a process to obtain by computation $SIGNAL_{s1}$ based on the shared key $K$, the random number $R_{ci}$ and the random number $R_{si-1}$, and by comparing the computation result and the $SIGNAL_{s1}$ received from the server 10, and executes a process to identify the server 10. If it cannot be identified, the communication is rejected. When it can be identified, it executes a process to decode the encryption data $E_K(IDs, IDc, R_{si})$ by use of the shared key $K$, and based on the IDc and IDs included in thus decoded data, the client 20 executes a process to determine the validity of the server 10. If the server 10 can be identified, not only a communication partner can be specified, but also it is possible to confirm that the server 10 has received the random number $R_{ci}$.

As a result of the above determination, if the received data items match the data items previously stored in the client 20 and it is determined that the server 10 is valid, the random numbers $R_{ci}$, $R_{si}$ are respectively stored in the storage areas where the random numbers $R_{ci-1}$ and $R_{si-1}$ have been stored, and a shared key $K$ is generated and stored based on these random numbers $R_{ci}$ and $R_{si}$ (step S45). Then, the authentication process is completed, and the process is shifted to the next data transmission process. On the other hand, when the received data and the stored data do not match, and it is determined that the server 10 is not valid, accessing from the server 10 is rejected and the authentication process is completed.

As described above, according to the seventh embodiment, in addition to obtaining operations and effects similar to the aforementioned fifth embodiment, for example, even when an attacker rewrites the encryption data, the server 10 or the client 20 which has received the data can easily detect that the transmitted encryption data is incorrect, and discard the data without receiving the random number. When a value of $SIGNAL_{c1}$ is duplicated with the values of other plural clients, it is easy to specify a communication partner by referring to the ID information (IDs, IDc) included in the encryption data. According to this the seventh embodiment, it is possible to reduce the communication number of times to twice, which is required to be three times in the aforementioned fourth embodiment. Then, more efficient authentication can be achieved.


(Example 8)


In the eighth embodiment, a replay attack prevention method by use of onetime ID will be explained. The "replay attack" means an attack that communication information, which was effective in the past when a valid communicator carried out transmission, is tapped by an attacker (a third party) for reuse.

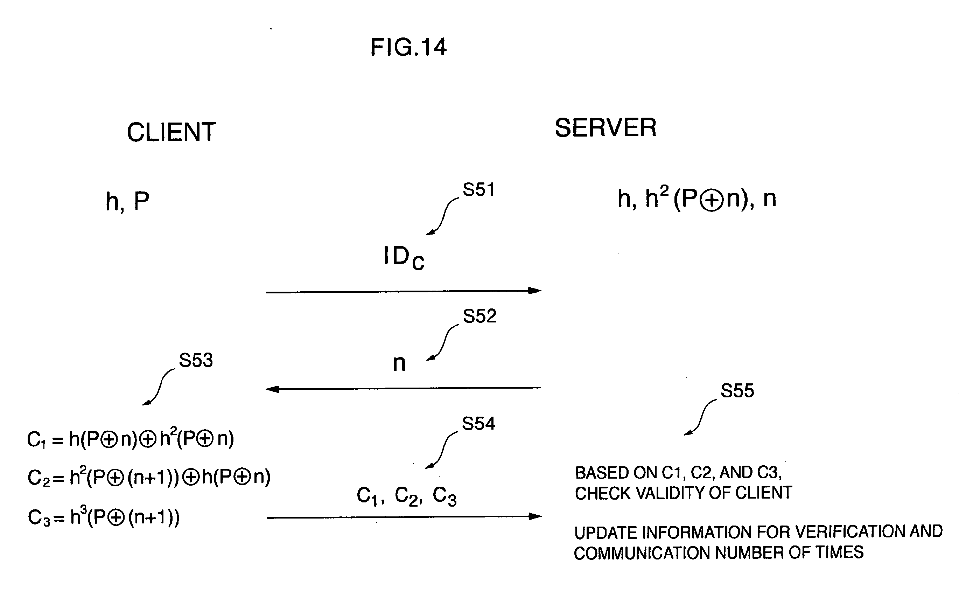

At first, an authentication method will be explained based on Fig. 14, the method using a password, and being referred to as OSPA (Optimal Strong Password Authentication) (Chun-Li LIN, Hung-Min SUN, Tzonelih HWANG, Attacks and Solutions on Strong- Password Authentication, IEICE TRANS. COMMUN., VOL. E84-B, NO. 9, September 2001).

Before the authentication, hash function $h$ and password $P$ are previously stored and held in the client 20, and the hash function $h$, session number of times $n$, IDc (client ID) and information for verification $h^2(P @ n)$ are

previously stored and held in the server 10. The information for verifications $h^2(P@n)$ is information to check the validity of the client 20, and it is generated by hash function $h$ by use of the exclusive OR between the password $P$ and the communication number of times $n$. Here, "$h^2(P@n)$" indicates that a calculation of the hash function $h$ is carried out two times, that is, indicates "$h(h(P@n))$", and "@" in the mathematical expression indicates exclusive OR.

In this authentication method, firstly, the client 20 transmits IDc to the server 10 (step S51).

When the server 10 receives IDc from the client 20, by comparing thus received IDc and previously stored IDc, to identify the client 20. If it cannot be identified, the communication is rejected. When it can be identified, the server 10 transmits the session number of times $n$ to the client 20 (step S52).

When the client 20 receives the session number of times $n$ from the server 10, the client 20 generates the first to the third information items for authentication C1, C2, and C3 by use of thus received session number of times $n$, the hash function $h$ and the password $P$ previously stored (steps S53), and transmits the C1, C2 and C3 to the server 10 (step S54). Here, $C1 = h(P@n)@h^2(P@n)$, $C2 = h^2(P@(n+1))@h(P@n)$, $C3 = h^3(P@(n+1))$.

When the server 10 receives C1, C2, and C3 from the client 20, at first, it confirms that the received C1 is not equal to C2. The above confirmation is made to prevent a problem such that even when the calculations $C1 = h(P@n)@h^2(P@n)$, $C2 = h(P@n)@h^2(P@n)$, $C3 = h^3(P@n)$ are carried out and transmitted, there is a possibility that the server 10 authenticates the client 20 and stores $h^2(P@n)$ as a next information for validation, instead of $h^2(P@(n+1))$.

Subsequently, the server 10 obtains by computation, $h(P@n)$ and $h^2(P@(n+1))$ based on C1, C2. In other words, by obtaining exclusive OR between the received C1 and information for verifications $h^2(P@n)$ previously stored, $h(P@n)$ is derived, and by obtaining then exclusive OR between this $h(P@n)$ and the received C2, $h^2(P@(n+1))$ is derived.

Subsequently, by use of the hash function $h$ previously stored, $h(h(P@n))$ is calculated based on the obtained $h(P@n)$, and it is verified whether or not this $h(h(P@n))$ matches the information for verification $h^2(P@n)$ previously stored. Simultaneously, $h(h^2(P@(n+1)))$ is calculated from the obtained $h^2(P@(n+1))$ by use of the above hash function $h$, and it is verified whether or not this $h(h^2(P@(n+1)))$ matches the received C3 (step S55).

As a result of the above authentication, if it is found each of the above matches and it is determined that the client 20 is valid, the information for verification is updated from $h^2(P@n)$ to $h^2(P@(n+1))$, and the session number of times is updated from $n$ to $n+1$. Subsequently, accessing from the client 20 is approved and the authentication process is completed. On the other hand, as a result of the above authentication, if at least any one of the above does not match and it is determined that the client 20 is not valid, accessing from the client 20 is rejected and the authentication process is completed.

According to the above authentication method, there are advantages that a safe authentication against a listener-in is possible, and that updating the information for verification from $h^2(P@n)$ to $h^2(P@(n+1))$ is possible by session.

However, in the above authentication method, there has been a problem that it is not possible to prevent a replay attack by utilizing the once used authentication information C1, C2 and C3.

Therefore, the inventors of the present invention have developed the following authentication method so as to solve such problem.

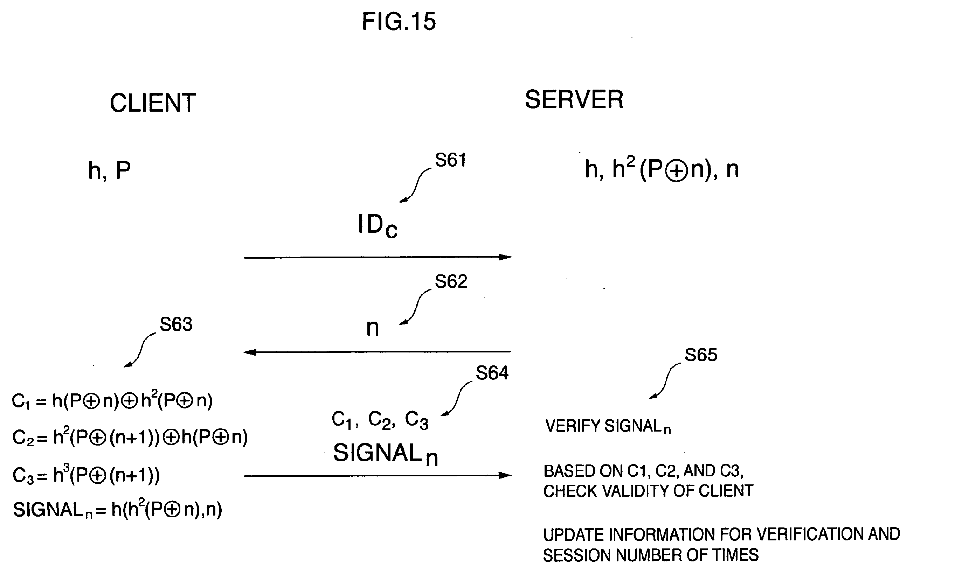

Fig. 15 is a diagram which explains the eighth embodiment of the authentication method concerning the present invention. As shown in Fig. 15, when hash function $h$ and password $P$ are previously stored and held in the client 20, and the hash function $h$, session number of times $n$, IDc (client ID) and information for verification $h^2(P@n)$ are previously stored and held in the server 10, the client 20 firstly transmits IDc to the server 10 (step S61).

When the server 10 receives IDc from the client 20, by comparing thus received IDc and IDc previously stored, identifies the client 20, and if it cannot be identified, the communication is rejected. If it can be identified, the session number of times $n$ is transmitted to the client 20 (step S62).

When the client 20 receives the session number of times n from the server 10, the client 20 generates the first to the third information items for authentication C1, C2, C3 and $SIGNAL_n$ by use of thus received session number of times $n$, the hash function $h$ and the password $P$ previously stored (steps S63), and transmits the C1, C2, C3 and $SIGNAL_n$ to the server 10 (step S64). Here, $C1 = h(P@n)@h^2(P@n)$, $C2 = h^2(P@(n+1))@h(P@n)$, $C3 = h^3(P@(n+1))$, $SIGNAL_n = h(h^2(P@n),n)$. That is, $SIGNAL_n$ which is the onetime ID used in the n-th session is a function value of the hash function $h$ in which information for verification $h^2(P@n)$ and the session number of times $n$ are used as arguments.

When the server 10 receives C1, C2, and C3 $SIGNAL_n$ from the client 20, it obtains by computation $SIGNAL_n$ based on the information for verification $h^2(P@n)$ and the session number of times $n$ previously stored, and by comparing the computation result and the $SIGNAL_n$ received from the client 20, the server 10 identifies the client 20. If it cannot be identified, the communication is rejected, whereas if the client 20 can be identified, after it is confirmed that the received C1 is not equal to C2, the server 10 obtains $h(P@n)$ and $h^2(P@(n+1))$ based on C1 and C2 by computation.

Subsequently, the server 10 uses the hash function $h$ previously stored, and $h(h(P@n))$ is calculated based on the obtained $h(P@n)$, and it is verified whether or not this $h(h(P@n))$ matches the information for verification $h^2(P@n)$ previously stored. Simultaneously, based on the obtained $h^2(P@(n+1))$, $h(h^2(P@(n+1)))$ is calculated, and it is verified whether or not this $h(h^2(P@(n+1)))$ matches the received C3 (step S65).

As a result of the above authentication, if it is found each of the above matches and it is determined that the client 20 is valid, the information for verification is updated from $h^2(P@n)$ to $h^2(P@(n+1))$, and the session number of times is updated from $n$ to $n + 1$. Subsequently, accessing from the client 20 is approved and the authentication process is completed. On the other hand, as a result of the above authentication, if at least any one of the above does not match and it is determined that the client 20 is not valid, accessing from the client 20 is rejected and the authentication process is completed.

According to the above authentication method, since there is no danger that $h^2(P@n)$, being information for verification, is known to an attacker, it is impossible for the attacker to predict the SIGNAL of the next session. Further, since the SIGNAL cannot be used in other session, it is possible to effectively prevent a replay attack by an attacker.

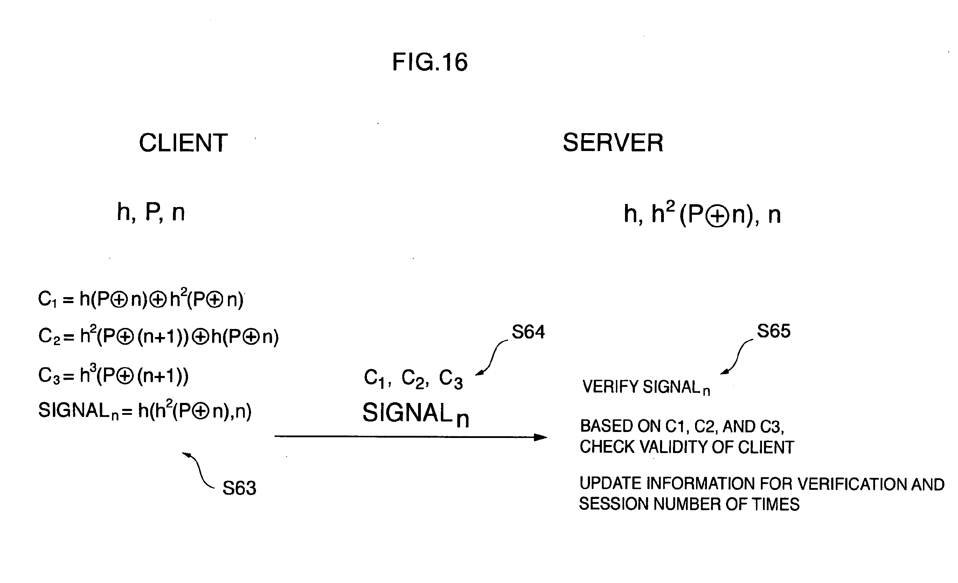

As shown in Fig. 16, in addition to the hash function $h$ and password $P$, if the session number of times $n$ is stored and held in the client 20, processes in the aforementioned steps S61, S62 can be omitted. Therefore, in this case, while ID information (IDc) is protected against tapping, it is also possible to effectively prevent a replay attack by an attacker.

In each of the preferred embodiments as described above, onetime ID is used in the authentication among plural devices. However, it is also possible to use the onetime ID among plural applications within one device. In each of the preferred embodiments as described above, a case where the authentication method concerning the present invention is applied to a client server system has been explained as examples. However, the present invention is not limited to the above examples, and it can also be applied to P2P (Peer to Peer) system, for instance.

It is further possible to use the authentication method concerning the present invention, per accessing from a user. In that case, inputting of a password by a user is advised and it is possible to use as data for authentication, together with the onetime ID, the password or a value generated from the password (including a onetime password).

As described above, according to the present invention, it is possible to generate a onetime ID hard to tap and superior in security, and it is further possible to achieve a future security (PFS) of the onetime ID.

In addition, the authentication is carried out between devices (between the client and server) by use of the onetime ID generated by the onetime ID generating method of the present invention. Therefore, it becomes impossible for a third party to specify a transmitter and a receiver, whereas it is possible to recognize the onetime ID as identification information as far as the transmitter and the receiver are valid.

Therefore, it is possible to develop resistance to DoS attack, spoofing and the like, and even under an open network environment, ID information can be protected and security in communication can be enhanced. Further, remote accessing becomes available, and convenience can be improved.

In addition, according to the present invention, it is possible to reduce the communication number of times to twice, which is required to be three times in the conventional key exchange and authentication method. Then, more rapid and efficient authentication and key exchange can be achieved.

Although the present invention has been fully described by way of preferred embodiments with reference to the accompanying drawings, it is to be understood that a person skilled in the art may easily make various changes and modifications on the present invention, without departing from the scope thereof. The present invention includes such modified examples.

**Claims**

**1.** A mutual authentication method which authenticates a mutual relationship between a first authentication device and a second authentication device being connected via a communication line, comprising,

a step for storing as history data commonly in each of said first authentication device and said second authentication device, an update result obtained by updating stored data for specifying said first authentication device and stored data for specifying said second authentication device, by use of the stored data obtained from previous authentication per authentication carried out mutually in advance between said first authentication device and said second authentication device, wherein,
said first authentication device includes,
a first transmitting step which newly generates stored data by use of the history data being stored, encrypts the thus generated new stored data by use of said history data, and transmits the encryption data to the second authentication device, and
a first updating step which updates said history data with the stored data from said second authentication device and the new stored data thus transmitted, and
the second authentication device includes,
a second transmitting step which newly generates stored data by use of the stored data from said first authentication device and the history data being stored, encrypts the thus generated new stored data by use of said history data, and transmits the encryption data to the first authentication device, and

a second updating step which updates said history data by the stored data from said first authentication device and said new stored data thus transmitted, and

in at least one of said first authentication device and said second authentication device, when validity of the stored data is established based on the history data, it is verified that the mutual relationship between the first authentication device and the second authentication device is valid.

**2.** The mutual authentication method according to claim 1, wherein,

the stored data for specifying said first authentication device, which stores said history data as history data $K$, corresponds to secret data $C$ and authentication data $R$, and the stored data for specifying said second authentication device, which stores said history data as history data $K$, corresponds to secret data $S$ and authentication data $Q$.

**3.** The mutual authentication according to claim 2, wherein,

said first transmitting step newly generates the secret data $C$ by use of the secret data $S$ and the authentication data $R$ of the history data $K$ being stored, and newly generates the authentication data $R$ of the history data $K$ being stored, encrypts the generated new authentication data $R$ by use of the history data $K$ to obtain authentication $A$, and transmits said authentication data $A$ and the new secret data $C$ to the second authentication device;

said first updating step receives data from said second authentication device, and updates the history data $K$ by the new secret data $C$ thus transmitted, the secret data $S$ newly generated thus received, the authentication data $Q$ newly generated thus received and said new authentication data $R$ thus transmitted;

said second transmitting step receives data from said first authentication device, newly generates secret data $S$ by use of the new secret data $C$ thus received and the authentication data $Q$ of the history data $K$ being stored, and newly generates the authentication data $Q$ of the history data $K$ being stored, encrypts the generated new authentication data $Q$ by use of the history data $K$ being stored to obtain the authentication data B, transmits to the first authentication device said authentication data B and new secret data $S$; and

said second updating step updates said history data $K$, by the new secret data $C$ thus received, the newly generated secret data $S$, the newly generated authentication data $Q$, and the new authentication data $R$ thus received, wherein,

in at least one of said first authentication device and said second authentication device, when validity of the stored data is established based on the history data $K$, it is verified that the mutual relationship between the first authentication device and the second authentication device is valid.

**4.** The mutual authentication method according to claim 1, wherein,

said storing step stores as the history data, update results obtained by authentication in said first transmitting step, the first updating step, the second transmitting step and the second updating step.

**5.** The mutual authentication method according to claim 2, wherein,

at least one of the authentication data $R$ and the authentication data $Q$ is at least one of the followings: a random number generated by random number generating means, data volume, and time-related data.

**6.** The mutual authentication method according to claim 2, wherein,

in the first transmitting step of said first authentication device, a value of a computation result from a function predefined by said secret data $S$ and said authentication data $R$ is generated as the secret data $C$, and in the second transmitting step of said second authentication device, a value of a computation result from a function predefined by said secret data $C$ and said authentication data $Q$ is generated as the secret data $S$.

**7.** The mutual authentication method according to claim 2, wherein,

in the first transmitting step of said first authentication device, a value of a computation result from a function predefined by said new authentication data $R$ thus generated and said history data $K$ is obtained as the authentication data *A*, and in the second transmitting step of said second authentication device, a value of a computation result from a function predefined by said new authentication data *Q* thus generated and said history data *K* is obtained as the authentication data B.

8. The mutual authentication method according to claim 2, wherein,

a verifying step of said first authentication device verifies that said mutual relationship is valid when a computation result of a predefined function by the stored authentication data *Q* out of said history data *K*, and the secret data *C* generated before previous transmission matches the secret data *S* thus received.

9. The mutual authentication method according to claim 2, wherein,

a verifying step of said second authentication device verifies that said mutual relationship is valid when a computation result of a predefined function by the stored secret data *S* and the authentication data *R* out of said history data *K* matches the secret data *C* thus received.

10. The mutual authentication method according to claim 2, wherein,

said storing step stores as the history data *K*, data obtained as a result of plural executions of said first transmitting step, the second transmitting step, the first updating step and the second updating step.

11. A mutual authentication device comprising a first authentication device and a second authentication device being connected via a communication line, which authenticates a mutual relationship between said first authentication device and said second authentication device, including,

a first memory which is provided in said first authentication device and stores stored data for specifying the first authentication device,
a second memory which is provided in said second authentication device and stores stored data for specifying the second authentication device,
authentication data storing means which store the stored data by previous authentication per authentication carried out mutually in advance between said first authentication device and said second authentication device,
history data storing means which store as history data, an update result updated by use of said authentication data, commonly in each of said first authentication device and said second authentication device,
stored data generating means which are provided in an authentication device on a data-for-authentication transmitting side out of said first authentication device and said second authentication device, and generate new stored data by use of said history data,
first transmitting means which encrypt the thus generated new stored data by use of said history data and transmit the encryption data to the authentication device on a data-for-authentication receiving side,
stored data generating means which are provided in the authentication device on the data-for-authentication receiving side, and generate new stored data by use of the stored data from the authentication device on said data-for-authentication transmitting side and the history data being stored,
second transmitting means which encrypt the new stored data thus generated by use of said history data, and return the encryption data to the authentication device on said data-for-authentication transmitting side,
first updating means which are provided in the authentication device on the data-for-authentication transmitting side and update said history data by the stored data returned from the authentication device on said data-for-authentication receiving side and the new stored data thus transmitted, and
second updating means which are provided in the authentication device on the data-for-authentication receiving side and update said history data by the stored data from the authentication device on said data-for-authentication transmitting side and said new stored data thus returned, and further comprising,
verifying means which verify that a mutual relationship between the first authentication device and the second authentication device is valid when validity of the stored data is established based on said history data in at least one of said first authentication device and said second authentication device.

12. The mutual authentication device according to claim 11, further comprising,

computing means which compute data for authentication for encrypting the new stored data thus generated, by use of said history data.

**13.** The mutual authentication device according to claim 12, comprising,

random number generating means which generate data for encryption when the data for authentication is generated by said computing means.

**14.** A onetime ID generating method which generates identification information usable for just one time as onetime ID in authentication between a plurality of devices or applications, wherein,

in each of the devices or the applications which carry out said authentication, a variable shared key is generated which changes per predefined communication unit requiring said authentication, and a function value of one-way function is obtained, in which the variable shared key is used as an argument, and said onetime ID is generated based on the function value.

**15.** A onetime ID generating method which generates a onetime ID assuming, as the onetime ID, the identification information usable just one time in authentication between a plurality of devices or applications, wherein,

in each of the devices or the applications which carry out said authentication, a variable shared key is generated which changes per predefined communication unit requiring said authentication, and simultaneously a function value of one-way function is obtained in which the variable shared key and information regarding a communication sequence or communication number of times are used as arguments, and said onetime ID is generated based on the function value.

**16.** A onetime ID generating method which generates a onetime ID assuming, as the onetime ID, identification information usable just one time in authentication between a plurality of devices or applications, wherein,

in each of the devices or the applications which carry out said authentication, a random number is generated within a predefined communication unit requiring said authentication, and simultaneously a function value of one-way function is obtained in which the random number and a predefined shared key are used as arguments, and said onetime ID is generated based on the function value.

**17.** A onetime ID generating method in which a onetime ID is generated in both one device and another device, assuming, as the onetime ID, identification information usable just one time in authentication between one device and the other device, and simultaneously the one device transmits the onetime ID to the other device for the other device to compare and collate the onetime ID which the other device received from the one device with the onetime ID generated by the other device, so that the one device identifies or authenticates the other device, wherein,

the one device and the other device generate a variable shared key which changes per predefined communication unit requiring said authentication, and simultaneously, a function value of one-way function is obtained in which the variable shared key is used as an argument and the onetime ID is generated based on the function value.

**18.** A onetime ID generating method in which a onetime ID is generated in both one device and another device, assuming, as the onetime ID, identification information usable just one time in authentication between one device and the other device, and simultaneously the one device transmits the onetime ID to the other device for the other device to compare and collate the onetime ID which the other device received from the one device with the onetime ID generated by the other device, so that the one device identifies or authenticates the other device, wherein,

the one device and the other device generate a variable shared key which changes per predefined communication unit requiring said authentication, and simultaneously, a function value of one-way function is obtained in which the variable shared key and a communication sequence or a communication number of times are used as arguments, and said onetime ID is generated based on the function value.

**19.** A onetime ID generating method in which a onetime ID is generated in both one device and another device, assuming, as the onetime ID, identification information usable just one time in authentication between one device and the other device, and simultaneously the one device transmits the onetime ID to the other device for the other device to compare and collate the onetime ID which the other device received from the one device with the onetime ID generated by the other device, so that the one device identifies or authenticates the other device, wherein,

the one device and the other device generate a random number within a predefined communication unit requiring said authentication, and simultaneously, a function value of one-way function is obtained in which the random number and a predefined shared key are used as arguments, and the onetime ID is generated based on the function value.

20. An authentication method which carries out authentication between devices and applications, assuming as onetime ID, identification information usable just one time, generates a variable shared key which changes per predefined communication unit requiring said authentication in each of the devices and applications carrying out said authentication, obtains a function value of a one-way function in which the variable shared key is used as an argument, generates said onetime ID from the function value, and carries out the authentication between a first device and a second device by use of the onetime ID thus generated, comprising:

a step in which said first device generates said onetime ID by use of the variable shared key, which is previously shared between said first and said second devices, and transmits to the second device the onetime ID thus generated, a function value of the one-way function Fc in which at least the ID predefined in the first device is used as an argument, and one of Diffie-Hellman public values previously stored in the first device;
a step in which said second device obtains by computation said onetime ID and a function value of said one-way function Fc, and determines validity of said first device by collating a computation result with the onetime ID received from said first device and the function value of the one-way function Fc;
a step in which said second device transmits to said first device, when said second device determines that said first device is valid, a function value of the one-way function Fs in which at least the ID predefined in the second device is used as an argument, and another of the Diffie-Hellman public values previously stored in the second device; and
a step in which said first device obtains by computation a function value of said one-way function Fs, and determines the validity of said second device by collating a result of the computation and the function value of the one-way function Fs received from said second device.

21. The authentication method according to claim 20, wherein,

as said one-way function Fc, a pseudo-random number function is used in which a predefined shared key, one of said above Diffie-Hellman public values, the ID predefined in said first device, and said above onetime ID are used as arguments, and simultaneously, as said one-way function Fs, a pseudo-random number function is used in which said predefined shared key, one of said Diffie-Hellman public values, the other of said Diffie-Hellman public values, the ID predefined in said second device, and said onetime ID are used as arguments.

22. An authentication method which carries out authentication between plural devices or applications, assuming, as onetime ID, identification information usable just one time, generates a variable shared key which changes per predefined communication unit requiring said authentication in each of the devices and applications carrying out said authentication, obtains a function value of a one-way function in which the variable shared key and information regarding a communication sequence or communication number of times are used as arguments, generates said onetime ID from the function value, and carries out the authentication between a first device and a second device by use of the onetime ID thus generated, comprising:

a step in which said first device generates, as a first onetime ID, a function value of one-way function in which a first variable shared key previously shared between said first device and said second device, and information regarding the communication sequence of the first device are used as arguments, and simultaneously encrypts, by use of said first variable shared key, ID predefined in the first device, ID predefined in said second device, one of Diffie-Hellman public values previously stored in the first device and said first onetime ID, and transmits the thus encrypted data and said first onetime ID to said second device;
a step in which said second device obtains by computation said first onetime ID and identifies said first device by collating a result of the computation and said first onetime ID received from said first device;
a step in which said second device decodes said encryption data by use of said first variable shared key when said first device is identified, and determines validity of said first device based on the ID predefined in said first device, the ID predefined in said second device, and said first onetime ID, which are included in thus decoded data;
a step in which said second device generates, as a second onetime ID, a function value of one-way function in which said first variable shared key and information regarding a communication sequence of said second device are used as arguments when it is determined that said first device is valid, and simultaneously, generates as a second variable shared key, a Diffie-Hellman common key from one of the Diffie-Hellman public values received from said first device and the other of the Diffie-Hellman public values previously stored in the second device, and transmits to said first device, a function value of one-way function *h* in which the second variable shared key, the ID predefined in said first device, the ID predefined in the second device and said second onetime ID are used as arguments, the other of Diffie-Hellman public values, and said second onetime ID;

a step in which the first device obtains by computation said second onetime ID, and the first device identifies said second device by collating a result of the computation and said second onetime ID received from said second device; and

a step in which said first device generates as said second variable shared key when the first device has identified said second device, a Diffie-Hellman common key from the other of said Diffie-Hellman public values received from said second device and the one of said Diffie-Hellman public values previously stored in the first device and simultaneously, obtains by computation a function value of said one-way function *h* by use of the second variable shared key, and determines validity of said second device by collating a result of the computation and the function value of the one-way function *h* received from said second device.

23. The authentication method according to claim 22, wherein,

as one-way function for generating said second onetime ID, a one-way function being different from the one-way function for generating said first onetime ID is used.

24. An authentication method which carries out authentication between plural devices or applications, assuming, as onetime ID, identification information usable just one time, generates a random number within a predefined communication unit requiring said authentication in each of the devices and applications carrying out said authentication, obtains a function value of a one-way function in which the random number and a predefined variable shared key are used as arguments, generates a onetime ID from the function value, and carries out the authentication between a first device and a second device by use of the onetime ID thus generated, comprising:

a step in which said first device generates a first random number and simultaneously obtains as a first onetime ID, a function value of one-way function in which said first shared key previously shared between the first device and said second device is used as an argument, and transmits the first onetime ID and said first random number to said second device;

a step in which said second device generates a second random number and simultaneously obtains as a second onetime ID, a function value of one-way function in which said first random number and the first shared key are used as arguments, and transmits to said first device the second onetime ID and said second random number;

a step in which said first device obtains by computation said second onetime ID based on said first random number and said first shared key, and determines validity of said second device by comparing a result of the computation with said second onetime ID received from said second device;

a step in which said first device generates a second shared key based on said first random number and said second random number, and simultaneously obtains as a third onetime ID, a function value of one-way function in which the second shared key, said first random number and said second random number are used as arguments, and transmits the third onetime ID to said second device; and

a step in which said second device generates said second shared key based on said first random number and said second random number, and simultaneously, obtains by computation said third onetime ID based on the second shared key, said first random number and said second random number, and determines validity of said first device by comparing a result of the computation with said third onetime ID received from said first device.

25. An authentication method which carries out authentication between plural devices or applications, assuming, as onetime ID, identification information usable just one time, generates a random number within a predefined communication unit requiring said authentication in each of the devices and applications carrying out said authentication, obtains a function value of a one-way function in which the random number and a predefined variable shared key are used as arguments, generates a onetime ID from the function value, and carries out the authentication between a first device and a second device by use of the onetime ID thus generated, comprising:

a step in which said first device generates a first random number and simultaneously obtains as a first onetime ID, a function value of one-way function in which a shared key previously shared between the first device and said second device is used as an argument, and transmits to said second device the first onetime ID and said first random number;

a step in which said second device generates a second random number and simultaneously obtains as a second onetime ID, a function value of one-way function in which a first random number and said shared key are used as arguments, and transmits to said first device the second onetime ID and said second random number;

a step in which said first device obtains by computation said second onetime ID based on said first random number and said shared key, and determines validity of said second device by comparing a result of the computation and said second onetime ID received from said second device;

a step in which said first device generates, as the third onetime ID, a function value of one-way function in which said first random number, said second random number, and said shared key are used as arguments, and transmits the third onetime ID to said second device; and

a step in which said second device generates by computation said third onetime ID based on said first random number, said second random number and said shared key, and determines validity of said first device by comparing a result of the computation and said third onetime ID received from said first device.

**26.** The authentication method according to claim 24, wherein,

said first random number and said second random number are transmitted in a state as being encrypted by a shared key previously shared between said first device and said second device.

**27.** The authentication method according to claim 25, wherein,

said first random number and said second random number are transmitted in a state as being encrypted by a shared key previously shared between said first device and said second device.

**28.** The authentication method according to any one of claims 24 to 26, wherein,

in the step where said second device transmits to said first device said second onetime ID and said second random number, said second device has, as an initial random number, a random number shared between the second device and said first device, and carries out a predefined computation in which the initial random number and said first random number are used as arguments, and transmits a result of the computation to said first device, and said first device uses said result of the computation received from said second device as a material for determining validity of said second device, together with said second onetime ID.

**29.** The authentication method according to claim 24, wherein,

in the step where said first device transmits said third onetime ID to said second device, said first device carries out a predefined computation in which said first random number and said second random number are used as arguments, and transmits a result of the computation to said second device, and said second device uses said result of the computation received from said first device as a material for determining validity of said first device, together with said third onetime ID.

**30.** The authentication method according to claim 25, wherein,

in the step where said first device transmits said third onetime ID to said second device, said first device carries out a predefined computation in which said first random number and said second random number are used as arguments, and transmits a result of the computation to said second device, and said second device uses said result of the computation received from said first device as a material for determining validity of said first device, together with said third onetime ID.

**31.** An authentication method which carries out authentication between plural devices or applications, assuming, as onetime ID, identification information usable just one time, generates a random number within a predefined communication unit requiring authentication in each of the devices and applications carrying out said authentication, obtains a function value of a one-way function in which the random number and a predefined variable shared key are used as arguments, generates a onetime ID from the function value, and carries out the authentication between a first device and a second device by use of the onetime ID thus generated, comprising:

a step in which said first device generates a first random number, simultaneously obtains as a first onetime ID, a function value of one-way function in which a shared key previously shared between the first device and said second device, the first stored random number and the second stored random number are used as arguments, and transmits to said second device, first encryption data which is obtained by encrypting with said shared key, the ID predefined in the first device, the ID predefined in said second device, and the first random number, together with said first onetime ID;

a step in which said second device obtains by computation said first onetime ID, and said first device is identified by collating a result of the computation and said first onetime ID received from said first device;

a step in which said second device decodes said first encryption data by use of said shared key when said second device has identified said first device, and validity of said first device is determined, based on the ID predefined in said first device and the ID predefined in the second device, which are included in the thus decoded data;

a step in which said second device generates a second random number when said first device is determined to be valid, and simultaneously obtains as a second onetime ID, a function value of one-way function in which said first random number, said second stored random number and said shared key are used as arguments, and transmits to said first device the second encryption data, which is obtained by encrypting with said shared key, the ID predefined in said first device, the ID predefined in said second device, and said second random number, together with said second onetime ID;

a step in which said second device replaces said first stored random number and said second stored random number, respectively, with said first random number and said second random number;

a step in which said first device obtains by computation said second onetime ID, and said second device is identified by collating a result of the computation and said second onetime ID received from said second device;

a step in which said first device decodes said second encryption data by use of said shared key when said first device has identified said second device, validity of said second device is determined based on the ID predefined in said second device and the ID predefined in said first device, which are included in the thus decoded data; and

a step in which said first device replaces said first stored random number and said second stored random number, respectively, with said first random number and said second random number.

**32.** The authentication method according to claim 31, wherein,

after said first stored random number and said second stored random number are respectively replaced with said first random number and said second random number, the shared key is varied by generating said shared key based on the first random number and the second random number.

**33.** A server which carries out authentication between devices or applications, assuming, as onetime ID, identification information usable just one time, generates a variable shared key changing per a predefined communication unit requiring said authentication in each of the devices and applications carrying out said authentication, obtains a function value of a one-way function in which the variable shared key is used as an argument, generates said onetime ID from the function value, and carries out the authentication between the server and a client, by use of the onetime ID thus generated, comprising:

receiving means which receive from said client, a function value of the one-way function Fc in which at least a client ID predefined in said client is used as an argument, one of Diffie-Hellman public values previously stored in said client, and said onetime ID;

determining means which obtain by computation a function value Fc of said one-way function and said onetime ID, and determine validity of said client by comparing a result of the computation with said onetime ID received from said client and the function value of said one-way function Fc; and

transmitting means which transmit to said client, when said determining means determine that said client is valid, a function value of one-way function Fs in which the server ID predefined in the server is used as an argument, and another of the Diffie-Hellman public values predefined in the server.

**34.** A client which carries out authentication between devices or applications, assuming, as onetime ID, identification information usable just one time, generates a variable shared key changing per a predefined communication unit requiring said authentication in each of the devices and applications carrying out said authentication, obtains a function value of a one-way function in which the variable shared key is used as an argument, generates a onetime ID from the function value, and carries out the authentication between the server and the client, by use of the onetime ID thus generated, comprising:

transmitting means which generate said onetime ID by use of the variable shared key previously shared between the client and said server, and simultaneously obtain a function value of one-way function Fc in which at least a client ID predefined in the client is used as an argument, and transmit to said server the onetime ID, the function value of the one-way function Fc, and one of Diffie-Hellman public values previously stored in the client;

receiving means which receive from said server a function value of one-way function Fs in which at least the server ID predefined in said server is used as an argument and another of Diffie-Hellman public values previously stored in said server; and

determining means which obtain by computation a function value of said one-way function Fs, and determine validity of said server by comparing a result of the computation with the function value of said one-way function Fs received from said server.

35. An authentication system comprising a server and a client, in which said server and said client carry out authentication between devices or applications, assuming, as onetime ID identification information usable just one time, generate a variable shared key changing per a predefined communication unit requiring said authentication in each of the devices and applications carrying out said authentication, obtain a function value of a one-way function in which the variable shared key is used as an argument, generates said onetime ID from the function value, and carries out the authentication between the server and a client, by use of the onetime ID thus generated,

said server comprising:

receiving means which receive from said client, a function value of the one-way function Fc in which at least a client ID predefined in said client is used as an argument, one of Diffie-Hellman public values previously stored in said client, and said onetime ID;

determining means which obtain by computation a function value Fc of said one-way function and said onetime ID, and determine validity of said client by comparing a result of the computation with said onetime ID received from said client and the function value of said one-way function Fc; and

transmitting means which transmits to said client, when said determining means determine that said client is valid, a function value of one-way function Fs in which the server ID predefined in the server is used as an argument, and another of the Diffie-Hellman public values predefined in the server, and

said client comprising:

transmitting means which generate said onetime ID by use of the variable shared key previously shared between said client and said server, and simultaneously obtain a function value of one-way function Fc in which at least the client ID predefined in the client is used as an argument, and transmit to said server the onetime ID, the function value of the one-way function Fc, and the one of Diffie-Hellman public values previously stored in the client;

receiving means which receive from said server a function value of the one-way function Fs in which at least the server ID predefined in the server is used as an argument and the other of Diffie-Hellman public values previously stored in said server; and

determining means which obtain by computation, a function value of said one-way function Fs, and determine validity of said server by comparing a result of the computation with the function value of said one-way function Fs received from said server.

36. A program to be executed by a server which carries out authentication between devices or applications, assuming as onetime ID, identification information usable just one time, generates a variable shared key changing per a predefined communication unit requiring said authentication in each of the devices and applications carrying out said authentication, obtains a function value of a one-way function in which the variable shared key is used as an argument, generates a onetime ID from the function value, and carries out the authentication with a client by use of the onetime ID thus generated, comprising:

a process which receives from a client a function value of one-way function Fc in which at least a client ID predefined in said client is used as an argument, one of Diffie-Hellman public values previously stored in said client, and said onetime ID;

a process which obtains by computation a function value of said one-way function Fc and said onetime ID, and determines validity of said client by comparing a result of the computation with said onetime ID received from said client and the function value of said one-way function Fc; and

a process which transmits to said client, when said client is determined to be valid, a function value of the onetime function Fs in which at least the server ID predefined in said server is used as an argument and another of the Diffie-Hellman public values previously stored in said server.

**37.** A program to be executed by a client which carries out authentication between devices or applications, assuming, as onetime ID, identification information usable just one time, generates a variable shared key changing per a predefined communication unit requiring said authentication in each of the devices and applications carrying out said authentication, obtains a function value of a one-way function in which the variable shared key is used as an argument, generates a onetime ID from the function value, and carries out the authentication with a server by use of the onetime ID thus generated, comprising:

a process which generates said onetime ID by use of the variable shared key previously shared between the client and said server, obtains by computation a function value of one-way function Fc in which at least a client ID predefined in said client is used as an argument, and transmits to said server the onetime ID, the function value of the one-way function Fc, and one of Diffie-Hellman public values previously stored in said client;
a process which receives a function value of one-way function Fs in which at least the server ID predefined in said server is used as an argument and the other of the Diffie-Hellman public values previously stored in said server; and
a process which obtains by computation a function value of said one-way function Fs, and determines validity of said server, by comparing a result of the computation with the function value of said one-way function Fs received from said server.

**38.** A server which carries out authentication between plural devices or applications, assuming, as onetime ID, identification information usable just one time, generates a variable shared key changing per a predefined communication unit requiring said authentication in each of the devices and applications carrying out said authentication, obtains a function value of a one-way function in which the variable shared key and information regarding communication sequence or communication number of times are used as arguments, generates said onetime ID from the function value, and carries out the authentication with a client, by use of the onetime ID thus generated, comprising:

receiving means which assume, as a first onetime ID, a function value of one-way function in which the first variable shared key previously shared between the client and said server and the information regarding the communication sequence of said client are used as arguments, and receive from said client encryption data which is obtained by encrypting with said first variable shared key, the first onetime ID, the client ID predefined in said client, the server ID predefined in the server, and one of Diffie-Hellman public values previously stored in said client, together with said first onetime ID;
determining means which obtain by computation said first onetime ID, identifies said client by collating a result of the computation with said onetime ID received from said client, decodes said encryption data by use of said first variable shared key when said client has been identified, and determine validity of said client based on said client ID, said server ID and said first onetime ID, which are included in the thus decoded data; and
transmitting means which generate as a second onetime ID, a function value of one-way function in which said first variable shared key and information regarding a communication sequence of the server are used as arguments, and simultaneously, generate as a second variable shared key, a Diffie-Hellman common key from the one of the Diffie-Hellman public values received from said client and another of the Diffie-Hellman public values previously stored in the server, and transmit to said client a function value of one-way function *h* in which the second variable shared key, said client ID, said server ID and said second onetime ID are used as arguments, said other of Diffie-Hellman public values, and said second onetime ID.

**39.** A client which carries out authentication between plural devices or applications, assuming, as onetime ID, identification information usable just one time, generates a variable shared key changing per a predefined communication unit requiring said authentication in each of the devices and applications carrying out said authentication, obtains a function value of a one-way function in which the variable shared key and information regarding a communication sequence or communication number of times are used as arguments, generates said onetime ID from the function value, and carries out the authentication with a client, by use of the onetime ID thus generated, comprising:

transmitting means which generate as a first onetime ID, a function value of one-way function in which the first variable shared key previously shared between the client and said server and information regarding a communication sequence of the client are used as arguments, and simultaneously by use of said first variable shared key, encrypt the client ID predefined in the client, the server ID predefined in said server, and one of Diffie-Hellman public values previously stored in the client, and said first onetime ID, and transmit to said server thus encrypted data and said first onetime ID;

receiving means which assume, as the second onetime ID, a function value of the one-way function in which said first variable shared key and the information regarding the communication sequence of said server are used as arguments, assume a Diffie-Hellman common key as the second variable shared key, and receive a function value of the one-way function $h$ in which said second onetime ID, said second variable shared key, said client ID and said server ID are used as arguments, the other of the Diffie-Hellman public values previously stored in said server, and said second onetime ID; and

determining means which obtain by computation said second onetime ID, identifies said server by collating a result of the computation with said second onetime ID received from said server, when said server has been identified, generate a Diffie-Hellman common key, as said second variable shared key, from the other of said Diffie-Hellman public values received from said server and the one of said Diffie-Hellman public values previously stored in the client, and simultaneously, obtain by computation a function value of the one-way function $h$ by use of the second variable shared key, and determine validity of said server by collating a result of the computation and a function value of the one-way function $h$ received from said server.

**40.** An authentication system comprising a server and a client, in which said server and said client carry out authentication between plural devices or applications, assuming, as onetime ID, identification information usable just one time, generate a variable shared key changing per a predefined communication unit requiring said authentication in each of the devices and applications carrying out said authentication, obtain a function value of a one-way function in which the variable shared key and information regarding a communication sequence or communication number of times are used as arguments, generates a onetime ID from the function value, and carries out the authentication between the server and a client, by use of the onetime ID thus generated,

said server comprising:
receiving means which assume, as a first onetime ID, a function value of one-way function in which the first variable shared key previously shared between said client and said server and the information regarding the communication sequence of the client are used as arguments, and receive from said client encryption data which is obtained by encrypting with said first variable shared key, the first onetime ID, the client ID predefined in said client, the server ID predefined in the server, and one of Diffie-Hellman public values previously stored in said client, together with said first onetime ID;

determining means which obtain by computation said first onetime ID, identifies said client by collating a result of the computation with said onetime ID received from said client, decode said encryption data by use of said first variable shared key when said client has been identified, and determine validity of said client based on said client ID, said server ID and said first onetime ID, which are included in the thus decoded data; and

transmitting means which generate as a second onetime ID, a function value of one-way function in which said first variable shared key and information regarding the communication sequence of the server are used as arguments, and simultaneously, generate as a second variable shared key, a Diffie-Hellman common key from the one of the Diffie-Hellman public values received from said client and another of the Diffie-Hellman public values previously stored in the server, and transmit to said client a function value of one-way function $h$ in which the second variable shared key, said client ID, said server ID and said second onetime ID are used as arguments, the other of said Diffie-Hellman public values, and said second onetime ID, and

said client comprising:
transmitting means which generate as a first onetime ID, a function value of one-way function in which the first variable shared key previously shared between said client and said server and information regarding the communication sequence of the client are used as arguments, and simultaneously by use of said first variable shared key, encrypt the client ID predefined in the client, the server ID predefined in said server, and the one of the Diffie-Hellman public values previously stored in the client, and said first onetime ID, and transmit to said server thus encrypted data and said first onetime ID;

receiving means which assumes, as the second onetime ID, a function value of the one-way function in which said first variable shared key and the information regarding the communication sequence of said server are used as arguments, assume the Diffie-Hellman common key as the second variable shared key, and receive a function value of the one-way function $h$ in which said second onetime ID, said second variable shared key, said client ID and said server ID are used as arguments, the other of the Diffie-Hellman public values previously stored in said server, and said second onetime ID; and

determining means which obtain by computation said second onetime ID, identifies said server by collating a result of the computation with said second onetime ID received from said server, when said server has been identified, generate the Diffie-Hellman common key, as said second variable shared key, from the other of said Diffie-Hellman public values received from said server and the one of said Diffie-Hellman public values previously stored in the client, and simultaneously, obtain by computation a function value of said one-way function *h* by use of the second variable shared key, and determine validity of said server by collating a result of the computation and a function value of the one-way function *h* received from said server.

41. A server which carries out authentication between plural devices or applications, assuming, as onetime ID, identification information usable just one time, generates a random number within a predefined communication unit requiring said authentication in each of the devices and applications carrying out said authentication, obtains a function value of a one-way function in which the random number and a predefined shared key are used as arguments, generates said onetime ID from the function value, and carries out the authentication with a client, by use of the onetime ID thus generated, comprising:

first receiving means which assume, as a first onetime ID, a function value of the one-way function in which the first shared key previously shared between the server and said client is used as an argument, and receive from said client the first onetime ID and the first random number generated in said client;
transmitting means which generate a second random number and simultaneously obtain as a second onetime ID, a function value of one-way function in which said first random number and said first shared key are used as arguments, and transmit to said client said second onetime ID and said second random number;
second receiving means which assume, as a third onetime ID, a function value of one-way function in which said first random number, said second random number and the second shared key are used as arguments, and receive the third onetime ID from said client; and
determining means which generate said second shared key based on said first random number and said second random number, and simultaneously, obtain by computation said third onetime ID based on said second shared key, said first random number and said second random number, and determine validity of said client by comparing a result of the computation with said third onetime ID received from said client.

42. A client which carries out authentication between plural devices or applications, assuming, as onetime ID, identification information usable just one time, generates a random number within a predefined communication unit requiring said authentication in each of the devices and applications carrying out said authentication, obtains a function value of a one-way function in which the random number and a predefined shared key are used as arguments, generates said onetime ID from the function value, and carries out the authentication with a server, by use of the onetime ID thus generated, comprising:

first transmitting means which generate a first random number, and simultaneously obtain as a first onetime ID a function value of one-function in which a first shared key previously shared between the client and said server is used as an argument, transmit to said server the first onetime ID and said first random number;
receiving means which assume, as the second onetime ID, a function value of one-way function in which said first random number and said first shared key are used as augments, and receive from said server the second onetime ID and the second random number generated in said server;
determining means which obtain by computation said second onetime ID based on said first random number and said first shared key, and determine validity of said server by comparing a result of the computation with said second onetime ID received from said server; and
second transmitting means which generate a second shared key based on said first random number and said second random number when it is determined that said server is valid by said determining means, and simultaneously obtain as a third onetime ID, a function value of one-way function in which the second shared key, said first random number and said second random number are used as arguments, and transmit to said server the third onetime ID.

43. An authentication system comprising a server and a client, in which said server and said client carry out authentication between plural devices or applications, assuming, as onetime ID, identification information usable just one time, generate a random number within a predefined communication unit requiring said authentication in each of the devices and applications carrying out said authentication, obtain a function value of a one-way function in which the random number and the predefined shared key are used as arguments, generates said onetime ID from the function value, and carries out the authentication mutually between the server and a client, by use of the onetime ID thus generated,

said server comprising:
first receiving means which assume, as a first onetime ID, a function value of the one-way function in which the first shared key previously shared between said server and said client is used as an argument, and receive from said client the first onetime ID and a first random number generated in said client;

transmitting means which generate a second random number and simultaneously obtain as a second onetime ID, a function value of one-way function in which said first random number and said first shared key are used as arguments, and transmit to said client the second onetime ID and said second random number;

second receiving means which assume, as a third onetime ID, a function value of one-way function in which said first random number, said second random number and the second shared key are used as arguments, and receive the third onetime ID from said client; and

determining means which generate said second shared key based on said first random number and said second random number, and simultaneously, obtain by computation said third onetime ID based on said second shared key, said first random number and said second random number, and determine validity of said client by comparing a result of the computation with said third onetime ID received from said client, and

said client comprising:

first transmitting means which generate the first random number, and simultaneously obtain as the first onetime ID a function value of one-function in which the first shared key previously shared between the client and said server is used as an argument, transmit to said server the first onetime ID and said first random number;

receiving means which assume, as the second onetime ID, a function value of one-way function in which said first random number and said first shared key are used as augments, and receive from said server the second onetime ID and the second random number generated in said server;

determining means which obtain by computation said second onetime ID based on said first random number and said first shared key, and determine validity of said server by comparing a result of the computation and said second onetime ID received from said server; and

second transmitting means which generate the second shared key based on said first random number and said second random number when it is determined that said server is valid by said determining means, and simultaneously obtain as a third onetime ID, a function value of one-way function in which the second shared key, said first random number and said second random number are used as arguments, and transmit to said server the third onetime ID.

**44.** A server which carries out authentication between plural devices or applications, assuming, as onetime ID, identification information usable just one time, generates a random number within a predefined communication unit requiring said authentication in each of the devices and applications carrying out said authentication, obtains a function value of a one-way function in which the random number and a predefined shared key are used as arguments, generates said onetime ID from the function value, and carries out the authentication with a client, by use of the onetime ID thus generated, comprising:

first receiving means which assume, as the first onetime ID, a function value of one-way function in which a shared key previously shared between the server and said client is used as an argument, and receive from said client the first onetime ID and the first random number generated in said client;

transmitting means which generate a second random number, and simultaneously obtain as a second onetime ID, a function value of one-way function in which said first random number and said shared key are used as arguments, and transmit to said client the second onetime ID and said second random number;

second receiving means which assume, as a third onetime ID, a function value of one-way function in which said shared key, said first random number and said second random number are used as arguments, and receive from said client the third onetime ID; and

determining means which obtain by computation said third onetime ID based on said first random number, said second random number and said shared key, and determine validity of said client by comparing a result of the computation and said third onetime ID received from said client.

**45.** A client which carries out authentication between plural devices or applications, assuming, as onetime ID identification information usable just one time, generates a random number within a predefined communication unit requiring said authentication in each of the devices and applications carrying out said authentication, obtains a function value of a one-way function in which the random number and a predefined shared key are used as arguments, generates said onetime ID from the function value, and carries out the authentication with a server, by use of the onetime ID thus generated, comprising:

first transmitting means which generate a first random number, obtain as a first onetime ID, a function value of one-way function in which a shared key previously shared between the client and said server is used as an argument, and transmit to said server the first onetime ID and said first random number;

receiving means which assume, as a second onetime ID, a function value of one-way function in which said first random number and said shared key are used as arguments, and receive from said server the second onetime ID and the second random number generated in said server;

determining means which obtain by computation said second onetime ID based on said first random number and said shared key, and determine validity of said server by comparing a result of the computation with said second onetime ID received from said server; and

second transmitting means which obtain as a third onetime ID, a function value of the one-way function in which said first random number, said second random number and said shared key are used as arguments when said server is determined to be valid by said determination means, and transmit to said server the third onetime ID.

46. An authentication system comprising a server and a client, in which the server and the client carry out authentication between plural devices or applications, assuming, as onetime ID, identification information usable just one time, generate a random number within a predefined communication unit requiring said authentication in each of the devices and applications carrying out said authentication, obtain a function value of a one-way function in which the random number and a predefined shared key are used as arguments, generates said onetime ID from the function value, and carries out the authentication mutually between the server and a client, by use of the onetime ID thus generated,

said server comprising:

first receiving means which assume, as a first onetime ID, a function value of one-way function in which a shared key previously shared between said server and said client is used as an argument, and receive from said client the first onetime ID and a first random number generated in said client;

transmitting means which generate a second random number, and simultaneously obtain as a second onetime ID, a function value of one-way function in which said first random number and said shared key are used as arguments, and transmit to said client the second onetime ID and said second random number;

second receiving means which assume as a third onetime ID, a function value of one-way function in which said shared key, said first random number and said second random number are used as arguments, and receive from said client the third onetime ID; and

determining means which obtain by computation said third onetime ID based on said first random number, said second random number and said shared key, and determine validity of said client by comparing a result of the computation and said third onetime ID received from said client, and

said client comprising:

first transmitting means which generate the first random number, obtain as the first onetime ID, a function value of one-way function in which a shared key previously shared between said client and said server is used as an argument, and transmit to said server the first onetime ID and said first random number;

receiving means which assumes, as a second onetime ID, a function value of one-way function in which said first random number and said shared key are used as arguments, and receive from said server the second onetime ID and the second random number generated in said server;

determining means which obtain by computation said second onetime ID based on said first random number and said shared key, and determine validity of said server by comparing a result of the computation with said second onetime ID received from said server; and

second transmitting means which obtain as the third onetime ID, a function value of the one-way function in which said first random number, said second random number and said shared key are used as arguments when said server is determined to be valid by said determination means, and transmit to said server the third onetime ID.

47. A server which carries out authentication between plural devices or applications, assuming, as onetime ID, identification information usable just one time, generates a random number within a predefined communication unit requiring said authentication in each of the devices and applications carrying out said authentication, obtains a function value of a one-way function in which the random number and a predefined shared key are used as arguments, generates said onetime ID from the function value, and carries out the authentication with a client, by use of the onetime ID thus generated, comprising:

receiving means which assume, as a first onetime ID, a function value of one-way function in which the shared key previously shared between the server and said client, the first stored random number and the second stored random number are used as arguments, receive the first onetime ID from said client and simultaneously receive from said client, first encryption data which is obtained by encrypting with said shared key, the first random number generated in said client, a client ID predefined in said client and a server ID predefined in the server;

determining means which obtain by computation said first onetime ID, identify said client by collating a result of the computation with said first onetime ID received from said client, decode the first encryption data by use of said shared key when said client has been identified, and determine validity of said client based on said client ID and said server ID included in thus decoded data;

transmitting means which generate a second random number when said determining means determine that said client is valid, and simultaneously obtain as a second onetime ID, a function value of one-way function in which said first random number, said second stored random number and said shared key are used as arguments, and transmit to said client second encryption data which is obtained by encrypting with said shared key said client ID, said server ID and said second random number, together with said second onetime ID; and

replacing means which replace said first stored random number and said second stored random number respectively with said first random number and said second random number.

48. A client which carries out authentication between plural devices or applications, assuming, as onetime ID, identification information usable just one time, generates a random number within a predefined communication unit requiring said authentication in each of the devices and applications carrying out said authentication, obtains a function value of a one-way function in which the random number and a predefined shared key are used as arguments, generates said onetime ID from the function value, and carries out the authentication with a server, by use of the onetime ID thus generated, comprising:

transmitting means which generate a first random number, obtain as a first onetime ID, a function value of one-way function in which a shared key previously shared between the client and said server, the first stored random number, and the second stored random number are used as arguments, and transmit to said server, first encryption data which is obtained by encrypting with said shared key, a client ID predefined in the client, a server ID predefined in said server and said first random number, together with said first onetime ID;

receiving means which assume, as a second onetime ID, a function value of one-way function in which said first random number, said second stored random number and said shared key are used as arguments, receive said second onetime ID from said server, and simultaneously receive from said server second encryption data which is obtained by encrypting with said shared key the second random number generated in said server, said client ID and said server ID;

determining means which obtain by computation said second onetime ID, identify said server by collocating a result of the computation with said second onetime ID received from said server, decode said second encryption data by use of said shared key when said server has been identified, and determine validity of said server based on said server ID and said client ID included in thus decoded data; and

replacing means which replace said first stored random number and said second stored random number respectively with said first random number and said second random number.

49. An authentication system comprising a server and a client, in which said server and said client carry out authentication between plural devices or applications, assuming, as onetime ID, identification information usable just one time, generate a random number within a predefined communication unit requiring said authentication in each of the devices and applications carrying out said authentication, obtain a function value of a one-way function in which the random number and a predefined shared key are used as arguments, generates said onetime ID from the function value, and carries out the authentication mutually between the server and a client, by use of the onetime ID thus generated,

said server comprising:

receiving means which assume, as a first onetime ID, a function value of one-way function in which the shared key previously shared between the server and client, a first stored random number and a second stored random number are used as arguments, receive the first onetime ID from said client and simultaneously receive from said client, first encryption data which is obtained by encrypting with said shared key, the first random number generated in said client, a client ID predefined in said client and a server ID predefined in the server;

determining means which obtain by computation said first onetime ID, identify said client by collating a result of the computation with said first onetime ID received from said client, decode said first encryption data by use of said shared key when said client has been identified, and determine validity of said client based on said client ID and said server ID included in thus decoded data;

transmitting means which generate a second random number when said determining means determine that said client is valid, and simultaneously obtain as a second onetime ID, a function value of one-way function in which said first random number, said second stored random number and said shared key are used as arguments, and transmit to said client second encryption data which is obtained by encrypting with said shared key said client ID, said server ID and said second random number, together with said second onetime ID; and replacing means which replace said first stored random number and said second stored random number respectively with said first random number and said second random number, and

said client comprising:

transmitting means which generate the first random number, obtain as the first onetime ID, a function value of one-way function in which a shared key previously shared between said client and said server, the first stored random number, and the second stored random number are used as arguments, and transmit to said server, first encryption data which is obtained by encrypting with said shared key, the client ID predefined in the client, the server ID predefined in said server and said first random number, together with said first onetime ID;

receiving means which assume, as the second onetime ID, a function value of one-way function in which said first random number, said second stored random number and said shared key are used as arguments, receive the second onetime ID from said server, and simultaneously receive from said server, second encryption data which is obtained by encrypting with said shared key the second random number generated in said server, said client ID and said server ID;

determining means which obtain by computation said second onetime ID, identify said server by collocating a result of the computation with said second onetime ID received from said server, decode said second encryption data by use of said shared key when said server has been identified, and determine validity of said server based on said server ID and said client ID included in thus decoded data; and

replacing means which replace said first stored random number and said second stored random number respectively with said first random number and said second random number.

**50.** The authentication system according to claim 49, wherein,

after said server and said client replace said first stored random number and said second stored random number respectively with said first random number and said second random number, variation of the shared key is made by generating said shared key based on the first stored random number and the second stored random number.

FIG.1
PRIOR ART

CLIENT

SERVER

$OID, Rc, g^x$

$HASHs, Rs, Ee(IDs), g^y$

$Ee(IDc), HASHc$

$e = prf (SHARED\ KEY, Rs, Rc, g^{xy})$

$HASHc = prf (SHARED\ KEY, Rs, Rc, g^x, g^y, IDc)$

$HASHs = prf (SHARED\ KEY, Rs, Rc, g^x, g^y, IDs)$

CLIENT 10

INPUT UNIT 12

RANDOM NUMBER R GENERATOR 14

DATA - FOR - AUTHENTICATION COMPUTING UNIT 18

MEMORY 16

VERIFICATION UNIT 20

OK 22   NG 24

COMMUNICATION I / F 30

NETWORK 32

COMMUNICATION I / F 60

SERVER 40

INPUT UNIT 42

RANDOM NUMBER Q GENERATOR 44

DATA - FOR - AUTHENTICATION COMPUTING UNIT 48

MEMORY 46

VERIFICATION UNIT 50

OK 52   NG 54

FIG.2

EP 1 526 677 A1

49

# FIG.3

```
        ┌─────────────┐
        │    START    │
        └──────┬──────┘
               │
    ┌──────────┴──────────┐
    │ STORE INITIAL VALUE │ ─── 100
    │  (HOLD PRIVATE KEY) │
    └──────────┬──────────┘
               │
    ┌──────────┴──────────┐
    │ CLIENT :            │ ─── 110
    │   SEND AUTHENTICATION DATA │
    └──────────┬──────────┘
               │
    ┌──────────┴──────────────────┐
    │ SERVER :                    │ ─── 120
    │  RECEIVE AUTHENTICATION DATA │
    │  SEND NEW AUTHENTICATION DATA │
    │  (UPDATE PRIVATE KEY)       │
    └──────────┬──────────────────┘
               │
    ┌──────────┴──────────────────┐
    │ CLIENT :                    │ ─── 130
    │  RECEIVE AUTHENTICATION DATA │
    │  SEND NEW AUTHENTICATION DATA │
    │  (UPDATE PRIVATE KEY)       │
    └──────────┬──────────────────┘
               │
          N ◁  EXECUTED         ─── 140
         PREDETERMINED NUMBER
              OF TIMES ?
               │ Y
    ┌──────────┴──────────┐
    │ SERVER & CLIENT :   │ ─── 150
    │  AUTHENTICATION PROCESS │
    └──────────┬──────────┘
               │
        ┌──────┴──────┐
        │     END     │
        └─────────────┘
```

# FIG.4

Pc0 — 10 — 40 — Ps0

**CLIENT**    **SERVER**

**PRIVATE KEY $K_0$**

AUTHENTICATION RESULT DATA
$\rightarrow C_0$
$\rightarrow S_0$
$\rightarrow Q_0$
$\rightarrow R_0$

Pc1
GENERATION OF RANDOM NUMBER $R_1$
$C_1 = S_0 + R_0$
$R_1 + K_0 \rightarrow A_1$

Dc1 — $A_1 , C_1$

Ps1
GENERATION OF RANDOM NUMBER $Q_1$
$S_1 = C_0 + Q_0$
$Q_1 + K_0 \rightarrow B_1$

**PRIVATE KEY $K_0$**

AUTHENTICATION RESULT DATA
$\rightarrow C_0$
$\rightarrow S_0$
$\rightarrow Q_0$
$\rightarrow R_0$

**PRIVATE KEY $K_1$**

AUTHENTICATION RESULT DATA
$\rightarrow C_1$
$\rightarrow S_1$
$\rightarrow Q_1$
$\rightarrow R_1$

Pc2
GENERATION OF RANDOM NUMBER $R_2$
$C_2 = S_1 + R_1$
$R_2 + K_1 \rightarrow A_2$

Ds1 — $B_1 , S_1$

Dc2 — $A_2 , C_2$

Psm
GENERATION OF RANDOM NUMBER $Q_m$
$S_m = C_m + Q_{m-1}$
$Q_m + K_{m-1} \rightarrow B_m$

**PRIVATE KEY $K_1$**

AUTHENTICATION RESULT DATA
$\rightarrow C_1$
$\rightarrow S_1$
$\rightarrow Q_1$
$\rightarrow R_1$

**PRIVATE KEY $K_m$**

AUTHENTICATION RESULT DATA
$\rightarrow C_m$
$\rightarrow S_m$
$\rightarrow Q_m$
$\rightarrow R_m$

Pcm
GENERATION OF RANDOM NUMBER $R_{m+1}$
$C_{m+1} = S_m + R_m$
$R_{m+1} + K_m \rightarrow A_{m+1}$

Dsm — $B_m , S_m$

Dcm+1 — $A_{m+1}, C_{m+1}$

Psm+1
AUTHENTICATION
$C_{m+1} = S_m + R_m$
GENERATION OF RANDOM NUMBER $R_{m+1}$
$S_{m+1} = C_{m+1} + Q_m$
$Q_{m+1} + K_m \rightarrow B_{m+1}$

**PRIVATE KEY $K_m$**

AUTHENTICATION RESULT DATA
$\rightarrow C_m$
$\rightarrow S_m$
$\rightarrow Q_m$
$\rightarrow R_m$

**PRIVATE KEY $K_{m+1}$**

AUTHENTICATION RESULT DATA
$\rightarrow C_{m+1}$
$\rightarrow S_{m+1}$
$\rightarrow Q_{m+1}$
$\rightarrow R_{m+1}$

Pcm+1
AUTHENTICATION
$S_{m+1} = C_{m+1} + Q_m$

Dsm+1 — $B_{m+1}, S_{m+1}$

**PRIVATE KEY $K_{m+1}$**

AUTHENTICATION RESULT DATA
$\rightarrow C_{m+1}$
$\rightarrow S_{m+1}$
$\rightarrow Q_{m+1}$
$\rightarrow R_{m+1}$

# FIG.5

EP 1 526 677 A1

# FIG.6

SERVER

CPU ~11

14 — INPUT UNIT

STORAGE UNIT ~13

STORAGE MEDIUM

~13a

12 — RAM

15 — DISPLAY UNIT

COMMUNICATION UNIT ~16

10

NETWORK

# FIG.7

CLIENT

CPU — 21

24 — INPUT UNIT

23 — STORAGE UNIT

STORAGE MEDIUM

23a

22 — RAM

25 — DISPLAY UNIT

26 — COMMUNICATION UNIT

20

NETWORK

# FIG.8

CLIENT            S1        SERVER

S2

$$\text{SIGNAL, HASHc, } g^x$$

VERIFY SIGNAL AND HASHc

S3

$$\text{HASHs, } g^y$$

VERIFY HASHs

S4

EP 1 526 677 A1

# FIG.9

CLIENT     P1     SERVER

$SIGNAL_{n,1}$

$E_{kn-1}(g^{xn}, IDc, IDs, SIGNAL_{n,1})$

P2

DETERMINE VALIDITY OF CLIENT

P3

$SIGNAL'_{n,1}, g^{yn}$

$h(K_n IDc, IDs, SIGNAL'_{n,1})$

DETERMINE VALIDITY OF SERVER

P4

EP 1 526 677 A1

# FIG.10

S13

S17

SIGNALs1=prf(K1,Rc)

GENERATE Rs

VERIFY SIGNALc2

VERIFY Rc +Rs

KEY $\begin{array}{|c|} \hline 0 \\ \hline 0 \\ \hline \end{array}$ ⇨ K1    $\begin{array}{|c|c|} \hline 0 & Rs \\ \hline 0 & Rc \\ \hline \end{array}$ ⇨ K2

**SERVER** ——————————————————————

S12

S16

SIGNALc1
E(K1, Rc)

SIGNALs1
R0 + Rc
E(K1, Rs)

SIGNALc2
Rc + Rs

S14

**CLIENT** ——————————————————————

KEY $\begin{array}{|c|} \hline 0 \\ \hline 0 \\ \hline \end{array}$ ⇨ K1    $\begin{array}{|c|c|} \hline 0 & Rs \\ \hline 0 & Rc \\ \hline \end{array}$ ⇨ K2

SIGNALc1=prf(K1,R0)

GENERATE Rc

SIGNALc2=prf(K2,Rs,Rc)

VERIFY SIGNALs1

VERIFY R0 +Rc

S11

S15

EP 1 526 677 A1

# FIG.11

SERVER

SIGNALs1=prf(K,Rc) — S23
GENERATE Rs

VERIFY SIGNALc2 — S27
VERIFY Rc +Rs

S22 — SIGNALc1
E(K, Rc)

S24 — SIGNALs1
R0 + Rc
E(K, Rs)

SIGNALc2 — S26
Rc + Rs

CLIENT

SIGNALc1=prf(K,R0)
GENERATE Rc — S21

SIGNALc2=prf(K,Rs,Rc)
VERIFY SIGNALs1
VERIFY R0 +Rc — S25

EP 1 526 677 A1

## FIG.12

VERIFY SIGNAL$_{ci}$

S33

VERIFY ID$_C$, ID$_S$

GENERATE R$_{si}$    SIGNAL$_{si}$ = prf(K$_i$,R$_{ci}$,R$_{si-1}$)

KEY    $\boxed{\begin{array}{c} R_{ci-1} \\ \hline R_{si-1} \end{array}}$ ⇒ K$_i$     $\boxed{\begin{array}{c} R_{ci} \\ \hline R_{si} \end{array}}$ ⇒ K$_{i+1}$

SERVER

S32

SIGNAL$_{ci}$

E$_{Ki}$ (ID$_C$, ID$_S$, R$_{ci}$)

SIGNAL$_{si}$

E$_{Ki}$ (ID$_S$, ID$_C$, R$_{si}$)    S34

CLIENT

KEY    $\boxed{\begin{array}{c} R_{ci-1} \\ \hline R_{si-1} \end{array}}$ ⇒ K$_i$     $\boxed{\begin{array}{c} R_{ci} \\ \hline R_{si} \end{array}}$ ⇒ K$_{i+1}$

SIGNAL$_{ci}$ = prf(K$_i$,R$_{ci-1}$,R$_{si-1}$)     VERIFY SIGNAL$_{si}$

GENERATE R$_{ci}$      VERIFY ID$_C$, ID$_S$

S31      S35

EP 1 526 677 A1

# FIG.13

VERIFY SIGNAL$_{Ci}$

VERIFY ID$_C$, ID$_S$

GENERATE R$_{Si}$  SIGNAL$_{Si}$ = prf(K,R$_{Ci}$,R$_{Si-1}$)

S43

KEY : K

SERVER

S42

SIGNAL$_{Ci}$
$E_K$ (ID$_C$, ID$_S$,R$_{Ci}$)

SIGNAL$_{Si}$
$E_K$ (ID$_S$, ID$_C$,R$_{Si}$)

S44

CLIENT

KEY : K

SIGNAL$_{Ci}$= prf(K,R$_{Ci-1}$,R$_{Si-1}$)

GENERATE R$_{Ci}$

S41

VERIFY SIGNAL$_{Si}$

VERIFY ID$_C$, ID$_S$

S45

EP 1 526 677 A1

# FIG.14

CLIENT                                          SERVER

$h, P$                                          $h, h^2(P \oplus n), n$

S51

$ID_C$

→

S52

$n$

S53

←

S55

S54

$C_1 = h(P \oplus n) \oplus h^2(P \oplus n)$

$C_2 = h^2(P \oplus (n+1)) \oplus h(P \oplus n)$

$C_1, C_2, C_3$

BASED ON C1, C2, AND C3,
CHECK VALIDITY OF CLIENT

$C_3 = h^3(P \oplus (n+1))$

→

UPDATE INFORMATION FOR VERIFICATION AND
COMMUNICATION NUMBER OF TIMES

EP 1 526 677 A1

# FIG.15

CLIENT                 SERVER

$h, P$           S61         $h, h^2(P \oplus n), n$

$ID_C$ →

S62

← $n$

S63

S64

$C_1 = h(P \oplus n) \oplus h^2(P \oplus n)$

$C_2 = h^2(P \oplus (n+1)) \oplus h(P \oplus n)$

$C_1, C_2, C_3$

$C_3 = h^3(P \oplus (n+1))$

$SIGNAL_n$ →

$SIGNAL_n = h(h^2(P \oplus n), n)$

S65

VERIFY $SIGNAL_n$

BASED ON C1, C2, AND C3,
CHECK VALIDITY OF CLIENT

UPDATE INFORMATION FOR VERIFICATION AND
SESSION NUMBER OF TIMES

## FIG.16

CLIENT

h, P, n

SERVER

$h, h^2(P \oplus n), n$

$C_1 = h(P \oplus n) \oplus h^2(P \oplus n)$

$C_2 = h^2(P \oplus (n+1)) \oplus h(P \oplus n)$

$C_3 = h^3(P \oplus (n+1))$

$SIGNAL_n = h(h^2(P \oplus n), n)$

S63

$C_1, C_2, C_3$ — S64

$SIGNAL_n$

S65

VERIFY $SIGNAL_n$

BASED ON C1, C2, AND C3, CHECK VALIDITY OF CLIENT

UPDATE INFORMATION FOR VERIFICATION AND SESSION NUMBER OF TIMES

EP 1 526 677 A1

## INTERNATIONAL SEARCH REPORT

| International application No. |
|---|
| PCT/JP03/07794 |

**A. CLASSIFICATION OF SUBJECT MATTER**
Int.Cl$^7$ H04L9/32

According to International Patent Classification (IPC) or to both national classification and IPC

**B. FIELDS SEARCHED**

Minimum documentation searched (classification system followed by classification symbols)
Int.Cl$^7$ H04L9/32

Documentation searched other than minimum documentation to the extent that such documents are included in the fields searched

| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
JICST FILE(JOIS), WPI, one-time, identity

**C. DOCUMENTS CONSIDERED TO BE RELEVANT**

| Category* | Citation of document, with indication, where appropriate, of the relevant passages | Relevant to claim No. |
|---|---|---|
| X | HANDBOOK of APPLIED CRYPTOGRAPHY, CRC Press, 1997, pages 400 to 403, especially (ii) Challenge-response based on(keyed) one-way functions | 16,19,25, 44-46 |
| A | Smafat, D. & Molva, R., A method providing identity privacy to mobile users during authentication, Proceedings of Workshop on Mobile Computing Systems and Applications, 1995, pages 196 to 199, especially 4,2 Alias Computation | 14-26,28-50 |

☐ Further documents are listed in the continuation of Box C.　　☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 November, 2003 (21.11.03) | 09 December, 2003 (09.12.03) |

| Name and mailing address of the ISA/ Japanese Patent Office | Authorized officer |
|---|---|
| Facsimile No. | Telephone No. |

Form PCT/ISA/210 (second sheet) (July 1998)

## INTERNATIONAL SEARCH REPORT

| International application No. |
| --- |
| PCT/JP03/07794 |

**Box I    Observations where certain claims were found unsearchable (Continuation of item 2 of first sheet)**

This international search report has not been established in respect of certain claims under Article 17(2)(a) for the following reasons:

1. ☐ Claims Nos.:

   because they relate to subject matter not required to be searched by this Authority, namely:

2. ☒ Claims Nos.: 1-13, 27

   because they relate to parts of the international application that do not comply with the prescribed requirements to such an extent that no meaningful international search can be carried out, specifically:
   See extra sheet for claims 1-13.
   As for claim 27 (authentication method), it is not described to which claim it refers.

3. ☐ Claims Nos.:

   because they are dependent claims and are not drafted in accordance with the second and third sentences of Rule 6.4(a).

**Box II    Observations where unity of invention is lacking (Continuation of item 3 of first sheet)**

This International Searching Authority found multiple inventions in this international application, as follows:

   The inventions of claims 1-13 relate to inter-authentication not related to the one time ID.  The inventions of claims 14-26, 28-50 relate to the one time ID.  It should be noted that since the inter-authentication is a known technique and cannot be a "special technical feature".

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐    The additional search fees were accompanied by the applicant's protest.

☐    No protest accompanied the payment of additional search fees.

Form PCT/ISA/210 (continuation of first sheet (1)) (July 1998)

**INTERNATIONAL SEARCH REPORT**

| International application No. |
|---|
| PCT/JP03/07794 |

Continuation of Box No.I-2 of continuation of first sheet(1)

In claim 1, it is unknown whether the "new storage data generated" in the description "the new storage data generated is encrypted by using the history data and transmitted to the second authentication device" is the same data as the "storage data" in the description "the first authentication device generates new storage data by using the history data stored". Similarly, it is unknown whether the "new storage data generated" in the description "the new storage data generated is encrypted by using the history data and transmitted to the first authentication device" is the same data as the "storage data" in the description "the second authentication device generates new storage data by using the history data stored". Moreover, if they are different data, it is unknown what kind of meaning is present in generating storage data by using the history data. Similarly, it is unknown whether the "storage data from the first authentication device" in the description "the second authentication device generates new storage data by using storage data from the first authentication device" is the same data as the "storage data" in the description "first transmission step for encrypting the new storage data generated and transmitting it to the second authentication device". If they are different data, it is unknown what kind of data is the "storage data from the first authentication device".

Furthermore, there are descriptions that "the first authentication device generates new storage data by using the history data stored" and "the second authentication device generates new storage data by using the history data stored". In each of these descriptions, it is unknown whether the data is the same data as the "history data" in the description "using as the history data the updated result which has been updated by using the storage data by the previous authentication." If they are different data, it is unknown what kind of data is "history data" in these descriptions and "said history data" in the subsequent description.

Moreover, it is unknown what kind of data is the "storage data by the previous authentication" in the description "using as the history data the updated result which has been updated by using the storage data by the previous authentication".

That is, it is unknown how the "inter-authentication method" is performed because the relationship between the plurality of "storage data" and "history data" is unclear. The same applies to claims 2-13 which refer to claim 1.

Form PCT/ISA/210 (extra sheet) (July 1998)